# EUROPÄISCHE PATENTSCHRIFT

(11) **EP 3 925 908 B1**
(45) Veröffentlichungstag und Bekanntmachung des Hinweises auf die Patenterteilung: **03.07.2024**
(21) Anmeldenummer: 21189146.0
(22) Anmeldetag: 05.10.2016
(51) Int. Cl.: B65G 1/04

(54) **AUTOMATISIERTES LAGERSYSTEM UND VERFAHREN ZUM LAGERN VON HÄNGEWAREN IN DIESEM LAGERSYSTEM**
AUTOMATED STORAGE SYSTEM AND METHOD FOR STORING SUSPENDED GOODS IN SAID STORAGE SYSTEM
SYSTÈME AUTOMATISÉ DE STOCKAGE ET PROCÉDÉ DE STOCKAGE DE MARCHANDISES SUSPENDUES DANS LEDIT SYSTÈME DE STOCKAGE

(30) Priorität: 06.10.2015 AT 508492015
(43) Veröffentlichungstag der Anmeldung: 22.12.2021
(62) Teilanmeldung aus: 16775749.1
(73) Patentinhaber: TGW Mechanics GmbH, 4600 Wels (AT)
(72) Erfinder: GROSSE, Eric, 63225 Langen (DE); RAUSCH, Martin, 4810 Gmunden (AT); SADLAUER, Alfred, 4060 Leonding (AT); SCHAUER, Johannes, 4076 St. Marienkirchen an der Polsenz (AT)
(74) Vertreter: Burger, Hannes

(56) Entgegenhaltungen:
- EP-A1- 2 436 617
- EP-A1- 2 692 667
- DE-A1-102012 215 364
- DE-C1- 3 735 607
- US-A- 1 830 740

## Beschreibung

Die Erfindung betrifft ein automatisiertes Lagersystem zum Lagern von Hängewaren mit einem ortsfesten Lagerregal mit in übereinander liegenden Lagerebenen angeordneten Lagerbereichen für die Hängewaren, und einer vor dem Lagerregal in einer ersten Richtung (x-Richtung) verfahrbaren Warentransportvorrichtung mit einem Grundrahmen, und zumindest einer Ein- und Auslagervorrichtung mit einem relativ zum Grundrahmen in einer zweiten Richtung (z-Richtung) senkrecht zur ersten Richtung (x-Richtung) bewegbaren Warenverlagerungsmittel. Die Hängeware wird mittels dem Warenverlagerungsmittel zwischen einem dem Lagerbereich zugeordneten Warenaufnahmeträger und einem der Warentransportvorrichtung zugeordneten Warenaufnahmeträger bewegt. Die Hängewaren auf den Warenaufnahmeträgern definieren jeweils eine Hängeebene, welche in einer senkrechten Richtung zu den Warenaufnahmeträgern verlaufen. Ferner betrifft die Erfindung ein Verfahren zum Lagern, Packen oder Kommissionieren von Hängewaren im automatisierten Lagersystem.

Die US 6,558,102 B2 offenbart ein automatisiertes Lagersystem für Hängeware, insbesondere Bekleidungsstücke, wie Mäntel, Sakkos, Anzüge, Kostüme usw., das einen Hängeförderer mit auf Schienen laufenden Laufwagen, Lagerregale mit in übereinander liegenden Lagerebenen angeordneten Lagerbereichen und zwischen den Lagerregalen in einer ersten Richtung (x-Richtung) verfahrbare Warentransportvorrichtungen (Regalbediengeräte) mit einem heb- und senkbaren Grundrahmen und je Warentransportvorrichtung eine relativ zum Grundrahmen in einer zweiten Richtung (z-Richtung) senkrecht zur ersten Richtung (x-Richtung) bewegbare Ein- und Auslagervorrichtung zum Be- und Entladen der Lagerregale aufweist. Die Hängeware ist mit Kleiderbügeln auf Lagerstangen aufgehängt und wird auch mit diesen in dem Lagersystem transportiert und gelagert. Dabei werden die Lagerstangen während dem Transport und der Lagerung formschlüssig fixiert.

Aus der DE 102 14 471 A1 ist ein automatisiertes Lagersystem für Hängeware bekannt, bei der Warenaufnahmeträger eingesetzt werden, welche mit Gleitelementen und Halterungen für die Hängeware versehen sind. Die Lagerbereiche und der heb- und senkbare Grundrahmen der Warentransportvorrichtung sind mit Tragschienen ausgestattet, entlang welcher die Warenaufnahmeträger laufen. Der Grundrahmen kann mit einer Ein- und Auslagervorrichtung ausgestattet sein, mittels welcher der Warenaufnahmeträger zwischen einem Lagerbereich und der Warentransportvorrichtung bewegt werden kann.

Gemäß der EP 1 972 577 B1 umfasst das automatisierte Lagersystem für Hängeware eine Fördertechnik, ein Regalbediengerät, Lagerregale und eine Übergabestation, wobei in der Übergabestation die Hängeware von der Fördertechnik auf Lagerstangen umgesetzt bzw. von den Lagerstangen abgegeben werden, wobei das Regalbediengerät ausgebildet ist, um leere oder volle Lagerstangen von der Übergabestation zu übernehmen oder an die Übergabestation abzugeben. Das Regalbediengerät weist auch Greifeinheiten auf, mittels welcher die Lagerstange auf dem Transport von der Übergabestation zum Lagerregal fixiert werden kann. Die EP 2 130 789 B1 sieht zusätzlich eine Zwischenaufnahme für eine leere Lagerstange unterhalb der Greifeinheiten und eine Ablageaufnahme für eine leere Lagerstange im Lagerregal vor.

In der DE 10 2008 035 651 A1 ist ein automatisiertes Lagersystem beschrieben, welche anstatt Lagerstangen Warenaufnahmeträger verwendet, die an einer Unterseite Hängeaufnahmen umfasst, an der die Hängeware einhängbar ist.

Aus der DE 10 2008 018 310 A1 ist ein Verfahren zum Betreiben eines Hochregallagers für Hängewaren bekannt, welches die Schritte umfasst:
- Aufhängen von Hängewaren auf eine lose Lagerstange in einem Wareneingang,
- Übergeben der behängten Lagerstange auf ein Regallagerbediengerät,
- Einlagern der behängten Lagerstange in einem freien Lagerbereich eines Lagerregales,
- Auslagern der behängten Lagerstange aus dem Lagerregal auf das Regalbediengerät,
- Übernehmen der behängten Lagerstange vom Regalbediengerät,
- und Abhängen der Hängeware von der Lagerstange,
- Transportieren der leeren Lagerstange in ein Pufferlager.

Die aus dem Stand der Technik bekannten Lagersysteme gestalten sich sehr aufwendig, da eine Vielzahl von Lagerstangen bzw. Warenaufnahmeträger eingesetzt werden, die gemeinsam mit der Hängeware manipuliert werden müssen. Die Regalbediengeräte und die Lagerbereiche sind mit entsprechenden Fixiermittel auszustatten, welche die Lagerstangen bzw. Warenaufnahmeträger nach jedem Wechsel neuerlich fixieren.

Aus der EP 2 923 970 A1 ist ein Regalbediengerät für ein Regallager mit in übereinander liegenden Lagerebenen angeordneten Lagerbereichen für Hängewaren bekannt. Das Regalbediengerät ist vor dem Lagerregal in einer ersten Richtung (x-Richtung) verfahrbar und ist mit einer Ein- und Auslagervorrichtung versehen. Die Ein- und Auslagervorrichtung umfasst eine in einer zweiten Richtung (z-Richtung) senkrecht zur ersten Richtung (x-Richtung) verfahrbare Übergabevorrichtung mit mehreren vertikal verfahrbaren Hebeeinrichtungen, mittels welcher jeweils eine Kleiderstange zwischen dem Regalbediengerät und dem Lagerbereich manipuliert werden kann.

Die DE 37 35 607 C1 und FR 2 723 689 A1 offenbaren ein Lagersystem für Hängewaren, umfassend ein vor einem Lagerregal in einer ersten Richtung (x-Richtung) verfahrbares Regalbediengerät, eine in einer zweiten Richtung (z-Richtung) senkrecht zur ersten Richtung (x-Richtung) bewegbare Ein- und Auslagervorrichtung mit einer Greifvorrichtung und Lagerregale mit Warenaufnahmeträgern. Die Warenaufnahmeträger verlaufen parallel zur ersten Richtung (x-Richtung) und werden die Hängewaren über die Greifvorrichtung zwischen dem Regalbediengerät und den Warenaufnahmeträgern manipuliert. DE 37 35 607 C1 offenbart den Oberbegriff des Anspruchs 1.

Aus der US 2003/0223850 A1 ist ein Lagersystem für Hängewaren bekannt, welches ein auf Schienen verfahrbares Bediengerät und zu beiden Seiten des Bediengerätes parallel verlaufende Warenaufnahmeträger umfasst. Das Bediengerät ist mit einer Hebevorrichtung ausgestattet, mittels welcher Hängeware zwischen dem Bediengerät und den Warenaufnahmeträgern manipuliert werden kann.

Aus der US 3,756,433 A ist ein Lagersystem für mobile Rollcontainer bekannt, welche mittels eines vor einem Lagerregal in einer ersten Richtung (x-Richtung) verfahrbaren Regalbediengerätes manipuliert werden. Im Lagerregal sind in einer zweiten Richtung (z-Richtung) senkrecht zur ersten Richtung (x-Richtung) verlaufende Laufschienen angeordnet. Ebenso ist auf dem Regalbediengerät eine heb/senkbare Laufschiene angeordnet. Die Rollcontainer sind jeweils über ein Gelenk mit einem Laufwagen verbunden und mittels dem Laufwagen an den Laufschienen verschiebbar gelagert.

Die WO 91/04931 A1 offenbart ein Lagersystem für Hängewaren umfassend ein vor einem Lagerregal in einer ersten Richtung (x-Richtung) verfahrbares Regalbediengerät, eine in einer zweiten Richtung (z-Richtung) senkrecht zur ersten Richtung (x-Richtung) bewegbare Ein- und Auslagervorrichtung mit einem ersten Ein- und Auslagerfahrzeug und einem zweiten Ein- und Auslagerfahrzeug und Lagerregale mit Warenaufnahmeträgern. Das erste / zweite Ein- und Auslagerfahrzeug ist mit einer Greifeinheit ausgestattet. Die Warenaufnahmeträger verlaufen parallel zur ersten Richtung (x-Richtung) und es werden die Hängewaren über das erste Ein- und Auslagerfahrzeug und zweite Ein- und Auslagerfahrzeug zwischen dem Regalbediengerät und den Warenaufnahmeträgern manipuliert.

Die DE 36 39 468 A1 offenbart ein Lagersystem für Reifen, welches ein Lagerregal mit in übereinander liegenden Lagerebenen und nebeneinander angeordneten Laufschienen, ein Beschickungsregalbediengerät auf einer Beschickungsseite des Lagerregals und ein Entnahmeregalbediengerät auf einer Entnahmeseite des Lagerregals umfasst. Die Reifen sind auf Laufwagen aufgehängt und können vom Beschickungsregalbediengerät auf die Laufschienen abgegeben werden. Danach können die Reifen von den Laufschienen auf das Entnahmeregalbediengerät übergeben werden.

Die DE 195 02 003 A1 offenbart ein Lagersystem für Hängewaren umfassend ein vor einem Lagerregal in einer ersten Richtung (x-Richtung) verfahrbares Regalbediengerät, eine in einer zweiten Richtung (z-Richtung) senkrecht zur ersten Richtung (x-Richtung) bewegbare Ein- und Auslagervorrichtung mit einem heb/senkbaren Warenaufnahmeträger und ein heb/senkbares Förderband. Die Lagerregale sind in übereinander liegenden Lagerebenen mit Warenaufnahmeträgern ausgestattet, auf denen die Hängewaren direkt aufgehängt sind. Der Warenaufnahmeträger der Ein- und Auslagervorrichtung bildet zugleich die Greifeinheit zum Einlagern der Hängeware in das Lagerregal und zum Auslagern der Hängeware aus dem Lagerregal.

Die WO 2010/118412 A1, DE 20 2004 002 337 U1 und WO 2015/027261 A1 offenbaren ein Lagersystem, bei dem in übereinander liegenden Fahrebenen vor Lagerregalen auf Führungsschienen in einer ersten Richtung (x-Richtung) verfahrbare Einebenenregalbediengeräte vorgesehen sind.

In der EP 2 436 617 A1 ist ein Lagersystem für Hängewaren beschrieben, welches eine vor dem Lagerregal in einer ersten Richtung (x-Richtung) verfahrbare Warentransportvorrichtung umfasst. Die Warentransportvorrichtung umfasst einen Vertikalmast und eine an diesem vertikal bewegbare Ein- und Auslagervorrichtung, welche ein relativ zum Vertikalmast in einer zweiten Richtung (z-Richtung) senkrecht zur ersten Richtung (x-Richtung) bewegbares Warenverlagerungsmittel umfasst. Das Lagerregal umfasst in übereinander liegenden Lagerebenen und jeweils in der ersten Richtung verlaufende Warenaufnahmeträger, auf welchen die Hängewaren aufgehängt werden können. Das Warenverlagerungsmittel kann Hängewaren auf die Warenaufnahmeträger übergeben und von den Warenaufnahmeträgern übernehmen.

Der vorliegenden Erfindung liegt die Aufgabe zugrunde, ein automatisiertes Lagersystem zum Lagern von Hängeware zu schaffen, mit welchem eine hohe Durchsatzleistung erreicht werden kann und sich gegenüber dem Stand der Technik einfacher betreiben lässt. Ferner ist es eine Aufgabe der Erfindung ein effizientes Verfahren zum Lagern, Packen oder Kommissionieren von Hängewaren im automatisierten Lagersystem bereitzustellen.

Die Aufgabe der Erfindung wird durch die Merkmale gemäß Anspruch 1 und Maßnahmen gemäß Anspruch 14 gelöst.

Dabei kann je Lagerebene zumindest ein Einebenenregalbediengerät oder nur in einigen der Lagerebenen jeweils zumindest ein Einebenenregalbediengerät vorgesehen werden. Durch Entkoppelung der Einlager- und Auslagervorgänge mehrerer Einebenenregalbediengeräte können höchste Einlager- und Auslagerleistungen erreicht werden.

Die Hängeware wird mittels dem Warenverlagerungsmittel zwischen einem dem Lagerbereich zugeordneten Warenaufnahmeträger und einem der Warentransportvorrichtung zugeordneten Warenaufnahmeträger bewegt, wobei die Warenaufnahmeträger in den Lagerbereichen im Lagerregal verbleiben. Gemäß der Erfindung wird die Hängeware zwischen den Warenaufnahmeträgern des Lagerbereiches und der Warentransportvorrichtung manipuliert. Dabei kann die Hängeware entweder relativ zu den Warenaufnahmeträgern verschoben oder relativ zu den Warenaufnahmeträgern angehoben / abgesenkt werden.

Es gestaltet sich der Manipulationsaufwand der Hängeware gegenüber den aus dem Stand der Technik bekannten Lagersystemen wesentlich einfacher. Zudem ist nunmehr auch ein Einzelzugriff auf die Hängeware möglich. Mit anderen Worten können Pack- oder Kommissionieraufträge sehr effizient abgearbeitet werden, da zu einem Pack- oder Kommissionierauftrag auch nur die Anzahl an Hängewaren ausgelagert werden können, in welcher sie benötigt werden. Nach dem Stand der Technik muss zu jedem Pack- oder Kommissionierauftrag eine Lagerstange mit einer Vielzahl von Hängewaren ausgelagert werden, selbst wenn nur ein Bruchteil davon benötigt wird. Somit kann insgesamt ein wesentlich leistungsfähigeres Lagersystem geschaffen werden. Außerdem sind zusätzliche Fixiermittel im Lagerbereich nicht erforderlich, womit sich auch eine kompakte und kostengünstige Bauweise der Lagerregale realisieren lässt.

Von Vorteil ist auch, wenn die Hängeware vor der Einlagerung in das Lagerregal an einer Übergabestation von einem Warenaufnahmeträger übernommen und nach der Auslagerung aus dem Lagerregal an einer Übernahmestation auf einen Warenaufnahmeträger abgegeben wird, und dass die Hängeware bei der Übernahme und/oder Übergabe mittels dem Warenverlagerungsmittel zwischen dem der Warentransportvorrichtung zugeordneten Warenaufnahmeträger und dem der Übergabe- und/oder Übernahmestation zugeordneten Warenaufnahmeträger bewegt wird, wobei der Warenaufnahmeträger an der Übergabe- und/oder Übernahmestation in der Übergabe- und/oder Übernahmestation verbleibt. Die Übergabestation und Übernahmestation können zu beiden Seiten der Warentransportvorrichtung angeordnet werden oder eine kombinierte Übergabe- und Übernahmestation bilden, die auf einer Seite der Warentransportvorrichtung angeordnet ist. Es wird die Hängeware zwischen den Warenaufnahmeträgern der Warentransportvorrichtung und der Übergabe- bzw. Übernahmestation manipuliert. Dabei kann die Hängeware entweder relativ zu den Warenaufnahmeträgern verschoben oder relativ zu den Warenaufnahmeträgern angehoben / abgesenkt werden. Es gestaltet sich der Manipulationsaufwand der Hängeware gegenüber den aus dem Stand der Technik bekannten Lagersystemen wesentlich einfacher.

Es erweist sich als besonders vorteilhaft, wenn eine Bewegungsrichtung für die Hängeware auf der Übernahme- und/oder Übergabebewegung zwischen den Warenaufnahmeträgern parallel zur zweiten Richtung (z-Richtung) verläuft. Die Hängeware verläuft sowohl auf der Übernahme- und/oder Übergabebewegung zwischen dem Warenaufnahmeträger der Warentransportvorrichtung und einem der Warenaufnahmeträger des Lagerregales als auch zwischen dem Warenaufnahmeträger der Warentransportvorrichtung und einem der Warenaufnahmeträger der Übergabe- bzw. Übernahmestation parallel zur zweiten Richtung (z-Richtung). Dies begünstigt einen einfachen Aufbau eines Warenverlagerungsmittels zur Manipulation der Hängeware.

Von Vorteil ist auch, wenn die Hängewaren auf den Warenaufnahmeträgern jeweils eine Hängeebene definieren, welche in einer senkrechten Richtung zu den Warenaufnahmeträgern verlaufen. Die Hängeware ist also in x-Richtung ausgerichtet. Damit kann der Fahrwiderstand reduziert werden, wenn die Hängeware mit der Warentransportvorrichtung in x-Richtung bewegt wird. Dies vor allem deswegen, weil zwischen den Hängewaren hindurch eine Luftströmung möglich ist. Die zumindest eine Warentransportvorrichtung kann somit noch dynamischer in x-Richtung betrieben und die Anlagenleistung gesteigert werden.

Nach einer Maßnahme der Erfindung ist es vorgesehen, dass die Hängewaren jeweils über einen Kleiderbügel auf den Warenaufnahmeträgern hängend gelagert und transportiert werden, wobei das Warenverlagerungsmittel mittels einer Greifeinheit, welche am Warenverlagerungsmittel gelagert ist, zumindest einen Kleiderbügel ergreift und die Hängeware zwischen den Warenaufnahmeträgern bewegen kann. Die Greifeinheit greift den Kleiderbügel, insbesondere einen Haken des Kleiderbügels, um Beschädigungen an der Hängeware zu vermeiden. Sind aus einer Hängewarengruppe nur einzelne Hängewaren zu entnehmen, so kann mit der Greifeinheit auf die jeweils vorderste Hängeware zugegriffen werden. Der Kleiderbügel dient mit seinem Haken nicht nur dem Aufhängen der Hängeware, sondern auch dem Transport.

Sind entsprechend hohe Leistungen erforderlich und umfasst ein Pack- bzw. Kommissionierauftrag eine hohe Anzahl an gleichartigen Hängewaren, kann das Warenverlagerungsmittel mittels der Greifeinheit eine Vielzahl an Kleiderbügeln ergreifen und die Hängewaren als Hängewarengruppe zwischen den Warenaufnahmeträgern bewegen.

Gemäß einer anderen Maßnahme der Erfindung ist es vorgesehen, dass die Hängewaren jeweils über einen Kleiderbügel auf den Warenaufnahmeträgern hängend gelagert und transportiert werden, wobei das Warenverlagerungsmittel mit jeweils einer Greifeinheit, wobei diese Greifeinheiten am Warenverlagerungsmittel gelagert sind, jeweils einen Kleiderbügel ergreift und die Hängewaren separiert zwischen den Warenaufnahmeträgern bewegen kann. Die Hängewaren werden zwar als Hängewarengruppe gehandhabt, jedoch werden die Hängewaren in einem definierten Abstand zueinander auf dem Warenaufnahmeträger transportiert, was wiederum die Luftzirkulation zwischen den Hängewaren begünstigt.

Werden die Hängewaren im jeweiligen Lagerbereich auf einem Warenaufnahmeträger als separierte Hängewarengruppen gelagert, kann in einem Lagerregal auf das vorhandene Lagervolumen eine hohe Anzahl an Hängewaren gelagert und die Warentransportvorrichtung besonders effizient eingesetzt werden.

Eine besonders hohe Einlagerleistung und/oder Auslagerleistung wird erreicht, wenn die Hängewaren zwischen dem Lagerbereich und der Warentransportvorrichtung oder zwischen der Übergabe- und/oder Übernahmestation und der Warentransportvorrichtung sowie auf der Warentransportvorrichtung als Hängewarengruppe transportiert werden.

Von Vorteil ist auch eine Ausgestaltung der Erfindung, bei der das Lagersystem an ein Warenverteilsystem anschließt, umfassend
- eine Übergabestation, an welcher einzulagernde Hängewaren von der Warentransportvorrichtung abgeholt werden, und
- eine Übernahmestation, an welcher auszulagernde Hängewaren abgegeben werden, aufweist,
- wobei die Übergabestation mit zumindest einem Warenaufnahmeträger und/oder die Übernahmestation mit zumindest einem Warenaufnahmeträger ausgestattet sind, und
- wobei die Hängeware bei der Übernahme und/oder Übergabe mittels der Ein- und Auslagervorrichtung zwischen dem der Warentransportvorrichtung zugeordneten Warenaufnahmeträger und dem zumindest einen der Übergabe- und/oder Übernahmestation zugeordneten Warenaufnahmeträger bewegt wird.

Gemäß einer Ausgestaltung der Erfindung ist es vorgesehen, dass auch der zumindest eine Warenaufnahmeträger der Übergabe- und/oder Übernahmestation parallel zur zweiten Richtung (z-Richtung) angeordnet ist, wobei die Hängeware auf dem zumindest einen Warenaufnahmeträger der Übergabe- und/oder Übernahmestation eine Hängeebene definiert, welche in einer senkrechten Richtung zu den Warenaufnahmeträgern verläuft.

Es ist auch von Vorteil, wenn der Warenaufnahmeträger für den Lagerbereich mit dem Lagerregal fest verbunden ist und der Warenaufnahmeträger für die Warentransportvorrichtung am Grundrahmen angeordnet ist, und dass das Warenverlagerungsmittel relativ zu den Warenaufnahmeträgern in der zweiten Richtung (z-Richtung) bewegbar und mit einer Greifeinheit versehen ist, die zumindest einen Kleiderbügel ergreift und die Hängeware zwischen dem Lagerbereich und der Warentransportvorrichtung bewegen kann. Nach dieser Ausführung kann das vorhandene Raumvolumen optimal genutzt werden und eine maximale Anzahl an Hängewaren gelagert werden, da der Platzaufwand für die Anordnung der Warenaufnahmeträger im Lagerregal gering ist.

Nach einer anderen Ausführung der Erfindung ist es auch möglich, dass das Warenverlagerungsmittel relativ zu dem zumindest einen Warenaufnahmeträger in der zweiten Richtung (z-Richtung) bewegbar und mit einer Greifeinheit versehen ist, die zumindest einen Kleiderbügel ergreift und die Hängeware zwischen der Übergabestation und der Warentransportvorrichtung und/oder zwischen der Übernahmestation und der Warentransportvorrichtung bewegen kann.

Besonders vorteilhaft ist es auch, wenn das Warenverlagerungsmittel zumindest eine am Grundrahmen angeordnete Teleskopiereinheit mit einem Tragrahmen und relativ gegenüber dem Tragrahmen verstellbare Schienen umfasst, wobei die Schiene mit dem größten Bewegungsbereich (in z-Richtung) an ihren einander gegenüberliegenden Endbereichen mit einer äußeren Greifeinheit versehen ist, wobei die Greifeinheiten (in x-Richtung) je zwischen einer Grundstellung, in welcher die Greifeinheit von einem Kleiderbügel zurückgezogen ist, und einer Betätigungsstellung, in welcher die Greifeinheit einen Kleiderbügel ergreifen kann, verstellbar sind. Die Kleiderbügel werden zwischen den Greifeinheiten aufgenommen und während einer Übernahme- und/oder Übergabebewegung formschlüssig hintergriffen. Damit wird eine sichere Mitnahme der Kleiderbügel erreicht, selbst wenn sich Kleiderbügel verhaken würden.

Um eine bessere Separierung (Auftrennung) zwischen den Kleiderbügeln zu erreichen, kann es vorgesehen werden, dass die Schiene mit dem größten Bewegungsbereich zusätzlich zwischen den äußeren Greifeinheiten mit inneren Greifeinheiten versehen ist, wobei die inneren Greifeinheiten (in x-Richtung) je zwischen einer Grundstellung, in welcher die Greifeinheit von einem Kleiderbügel zurückgezogen ist, und einer Betätigungsstellung, in welcher die Greifeinheit einen Kleiderbügel ergreifen kann, verstellbar sind.

Von Vorteil ist auch, wenn das Warenverlagerungsmittel zumindest eine am Grundrahmen montierte Teleskopiereinheit mit einem Tragrahmen und relativ gegenüber dem Tragrahmen verstellbare Schienen umfasst, wobei die Schiene mit dem größten Bewegungsbereich (in z-Richtung) mit einem Zugmittel ausgestattet ist, welcher mit einem Antrieb gekoppelt und an dem mit gegenseitigem Abstand angeordnete Greifeinheiten angeordnet sind, wobei die Greifeinheiten jeweils einen Kleiderbügel ergreifen können. Nach dieser Ausführung können die Einlager- und Auslagerzeiten optimiert werden.

Es erweist sich auch von Vorteil, wenn
- das ortsfeste Lagerregal in den übereinander liegenden Lagerebenen und innerhalb der Lagerbereiche parallel zur zweiten Richtung (z-Richtung) mit gegenseitigem Abstand verlaufende Führungsschienen umfasst, und
- die Warentransportvorrichtung am Grundrahmen befestigte und parallel zur zweiten Richtung (z-Richtung) mit gegenseitigem Abstand verlaufende Führungsschienen umfasst,
- wobei das Warenverlagerungsmittel als Ein- und Auslagerfahrzeug gestaltet ist, welches über ein Fahrwerk (beispielweise Laufrollen) zwischen der Warentransportvorrichtung und einem Lagerbereich im Lagerregal auf den Führungsschienen verfahrbar und welches mit einem Warenaufnahmeträger ausgestattet ist, wobei der Warenaufnahmeträger eine Greifeinheit ausbildet, die einen oder mehrere Kleiderbügel ergreift und die Hängeware zwischen dem Lagerbereich und der Warentransportvorrichtung bewegen kann.

Dabei wird das Warenverlagerungsmittel bei der Übergabe von Hängewaren auf den Warenaufnahmeträger des Lagerregales und Übernahme von Hängewaren auf den Warenaufnahmeträger der Warentransportvorrichtung in z-Richtung oberhalb des Warenaufnahmeträgers im Lagerregal positioniert. Die Übergabe- bzw. Übernahmebewegung ist eine Vertikalbewegung, sodass die Hängewaren relativ zum Warenaufnahmeträger des Lagerregales abgesenkt oder angehoben werden. Damit wird eine zuverlässige Übergabe- bzw. Übernahme der Hängewaren erreicht.

Es erweist sich auch von Vorteil, wenn das Lagersystem in übereinander liegenden, horizontal verlaufenden Fahrebenen und vor dem Lagerregal je Fahrebene eine erste Führungsschiene und eine zweite Führungsschienen umfasst, entlang welcher eine Warentransportvorrichtung in der ersten Richtung (x-Richtung) bewegbar ist. Die Warentransportvorrichtung umfasst den Grundrahmen mit einander gegenüberliegenden Längsseiten, wovon eine der Längsseiten eine erste Längsseite und eine der Längsseiten eine zweite Längsseite bildet, Laufräder, welche auf einer Führung an der ersten Führungsschiene und einer Führung an der zweiten Führungsschiene abrollbar aufliegen und am Grundrahmen an den einander gegenüberliegenden Längsseiten gelagert sind. Die erste Führungsschiene und/oder die zweite Führungsschiene weist je Fahrebene eine von der Führung räumlich getrennte Anschlagfläche auf. Die Warentransportvorrichtung ist mit einer ersten Anschlagvorrichtung am Grundrahmen ausgestattet, welche zumindest ein Anschlagelement ausbildet, welches zwischen der zweiten Führungsschiene und dem Grundrahmen angeordnet ist und mit einer Anschlagfläche an der zweiten Führungsschiene derart zusammenwirkt, dass eine Kippbewegung der Warentransportvorrichtung um die auf einer ersten Längsseite angeordneten Laufräder verhindert oder begrenzt wird, wenn das Warenverlagerungsmittel in der zweiten Richtung (z-Richtung) ausgefahren wird und an der ersten Längsseite vorragt.

Die erste Anschlagvorrichtung verhindert eine Kippbewegung der Warentransportvorrichtung auch wenn das Warenverlagerungsmittel der Ein- und Auslagerungsvorrichtung weit an der ersten Längsseite vorragt. Der Spurabstand zwischen der ersten Führungsschiene und zweiten Führungsschiene kann minimiert und die Anzahl der hintereinander liegenden Tiefenpositionen (Lagerplätze), an denen Stückgüter abgestellt werden können, maximiert werden. Konkret kann das Lagervolumen besser genutzt werden. Zudem kann die Warentransportvorrichtung mit geringem Eigengewicht hergestellt werden, was sich wiederum positiv auf die Dynamik und die Durchsatzleistung im Lagersystem auswirkt.

Sind Lagerregale zu beiden Seiten einer Regalgasse aufgestellt und kann das Warenverlagerungsmittel der Ein- und Auslagervorrichtung Stückgüter in die Lagerregale einlagern und aus den Lagerregalen auslagern, ist auch eine zweite Anschlagvorrichtung am Grundrahmen angeordnet, welche zumindest ein Anschlagelement ausbildet, welches mit einer Anschlagfläche an der ersten Führungsschiene derart zusammenwirkt, dass eine Kippbewegung der Warentransportvorrichtung um die auf einer zweiten Längsseite angeordneten Laufräder verhindert oder begrenzt wird, wenn das Warenverlagerungsmittel in der zweiten Richtung (z-Richtung) ausgefahren wird und an der zweiten Längsseite vorragt.

Es ist auch von Vorteil, wenn die erste Anschlagvorrichtung und/oder zweite Anschlagvorrichtung einen am Grundrahmen montierten Tragrahmen umfasst und das Anschlagelement als Anschlagrad gestaltet ist, welches am Tragrahmen gelagert ist und eine Drehachse ausbildet, die parallel zu einer jeweiligen Drehachse der Laufräder verläuft. Dadurch kann auch ein allenfalls vorhandener Stufensprung (Höhenunterschied) zwischen in Bewegungsrichtung aufeinander folgenden Führungsschienen von wenigen Millimetern ungehindert überfahren werden.

Es kann sich auch von Vorteil erweisen, wenn das Anschlagrad einen elastisch nachgiebigen Laufbelag, insbesondere aus Kunststoff, umfasst. Der Laufbelag ist aufgrund seiner elastischen Eigenschaft dazu geeignet einen Stufensprung zwischen in Bewegungsrichtung aufeinander folgenden Führungsschienen oder auch Unebenheiten an den Anschlagflächen der Führungsschienen zumindest in einem begrenzten Ausmaß auszugleichen.

Eine besonders einfache Ausgestaltung der Erfindung ist gegeben, wenn das Anschlagelement der ersten Anschlagvorrichtung und/oder zweiten Anschlagvorrichtung als Anschlagbügel gestaltet ist, welcher am Grundrahmen angeordnet ist.

Von Vorteil ist auch, wenn das Anschlagelement einem der Laufräder je Längsseite zugeordnet ist, wobei das Anschlagelement und dieses Laufrad mit gegenseitigem Abstand übereinander angeordnet sind.

Der Abstand kann dabei so gewählt werden, dass das Anschlagelement mit einer Eingriffsfläche gegen die Führungsschiene an der Anschlagfläche anliegt. Dadurch wird eine Kippbewegung der Warentransportvorrichtung verhindert, auch wenn das Warenverlagerungsmittel maximal ausfährt.

Der Abstand kann aber auch so gewählt werden, dass das Anschlagelement mit einer Eingriffsfläche in einem geringen Abstand zur Anschlagfläche angeordnet ist. Der Abstand zwischen der Eingriffsfläche und der Anschlagfläche beträgt nur wenige Millimeter, beispielweise maximal drei Millimeter. Damit wird einerseits ein verschleißarmer Betrieb der Warentransportvorrichtung ermöglicht und andererseits sichergestellt, dass eine Kippbewegung der Warentransportvorrichtung auf ein zulässiges Maß begrenzt wird, sofern bei auskragendem Warenverlagerungsmittel die Warentransportvorrichtung kippen sollte. Eine solche Ausführung hat auch den Vorteil, dass Führungsschienen mit größeren Fertigungstoleranzen verwendet werden können.

Zum besseren Verständnis der Erfindung wird diese anhand der nachfolgenden Figuren näher erläutert.

Es zeigen jeweils in stark vereinfachter, schematischer Darstellung:
- Fig. 1: eine erste Ausführung eines Lagersystemes zur Lagerung von Hängeware, in perspektivischer Ansicht;
- Fig. 2: eine Warentransportvorrichtung für das Lagersystem mit einem Warenaufnahmeträger in einer Grundstellung und einem Warenverlagerungsmittel in einer in z-Richtung eingefahrenen Ausgangsstellung, in perspektivischer Ansicht;
- Fig. 3: ein Warenaufnahmeträger eines Lagerregales geschnitten gemäß den Linien III - III in Fig. 2;
- Fig. 4: die Warentransportvorrichtung für das Lagersystem mit einem Warenaufnahmeträger in einer ersten Übergabestellung und einem Warenverlagerungsmittel in einer in z-Richtung ausgefahrenen Übergabestellung, in perspektivischer Ansicht;
- Fig. 5: eine Ausschnittsvergrößerung aus Fig. 4 mit dem Warenaufnahmeträger und dem Warenverlagerungsmittel;
- Fig. 6: die Warentransportvorrichtung mit einem Warenaufnahmeträger in einer Grundstellung und einem Warenverlagerungsmittel in einer in x-Richtung eingetragenen Grundstellung, in Ansicht gemäß den Linien VI - VI in Fig. 2;
- Fig. 7: die Warentransportvorrichtung mit einem Warenaufnahmeträger in einer Grundstellung und einem Warenverlagerungsmittel in einer in x-Richtung eingetragenen Grundstellung, in Ansicht gemäß den Linien VII - VII in Fig. 2;
- Fig. 8: die Warentransportvorrichtung mit einem Warenaufnahmeträger in einer ersten Übergabestellung und einem Warenverlagerungsmittel in einer in x-Richtung eingetragenen Grundstellung;
- Fig. 9: die Warentransportvorrichtung mit einem Warenaufnahmeträger in einer ersten Übergabestellung und einem Warenverlagerungsmittel in einer in x-Richtung eingetragenen Betätigungsstellung;
- Fig. 10: die Warentransportvorrichtung nach Fig. 6 mit einem Warenaufnahmeträger in einer Grundstellung und einem Warenverlagerungsmittel in einer in x-Richtung eingetragenen Grundstellung und in einer in z-Richtung eingetragenen Ausgangsstellung, in Seitenansicht;
- Fig. 11: eine Ausschnittsvergrößerung aus Fig. 10 mit dem Warenaufnahmeträger der Warentransportvorrichtung in einer Grundstellung und dem Warenaufnahmeträger des Lagerregales;
- Fig. 12: die Warentransportvorrichtung mit einem Warenaufnahmeträger in einer ersten Übergabestellung und einem Warenverlagerungsmittel in einer in x-Richtung eingetragenen Betätigungsstellung und in einer in z-Richtung eingetragenen Ausgangsstellung, in Seitenansicht;
- Fig. 13: eine Ausschnittsvergrößerung aus Fig. 12 mit dem Warenaufnahmeträger der Warentransportvorrichtung in einer ersten Übergabestellung und dem Warenaufnahmeträger des Lagerregales;
- Fig. 14: die Warentransportvorrichtung mit einem Warenaufnahmeträger in einer ersten Übergabestellung und einem Warenverlagerungsmittel in einer in x-Richtung eingetragenen Betätigungsstellung und in einer in z-Richtung eingetragenen Übergabestellung (Einlagerung), in Seitenansicht;
- Fig. 15: die Warentransportvorrichtung mit einem Warenaufnahmeträger in einer zweiten Übergabestellung und einem Warenverlagerungsmittel in einer in x-Richtung eingetragenen Betätigungsstellung und in einer in z-Richtung eingetragenen Übernahmestellung (Auslagerung), in Seitenansicht;
- Fig. 16: eine Ausschnittsvergrößerung aus Fig. 15 mit dem Warenaufnahmeträger der Warentransportvorrichtung in einer zweiten Übergabestellung und dem Warenaufnahmeträger des Lagerregales;
- Fig. 17: die Warentransportvorrichtung nach Fig. 1 mit einer Warentransportsicherung, in perspektivischer Ansicht;
- Fig. 18: eine Warentransportvorrichtung mit einem Warenverlagerungsmittel für eine zweite Ausführung eines Lagersystemes zur Lagerung von Hängeware nach den Fig. 19a, 19b in Stirnansicht;
- Fig. 19a, 19b: eine zweite Ausführung eines Lagersystemes zur Lagerung von Hängeware mit dem Warenverlagerungsmittel auf der Warentransportvorrichtung, in Draufsicht;
- Fig. 20: einen Ausschnitt aus dem Lagersystem mit der Warentransportvorrichtung und dem von dieser losgelösten Warenverlagerungsmittel, in Draufsicht;
- Fig. 21: einen Ausschnitt aus dem Lagersystem, in Ansicht gemäß den Linien XXI - XXI in Fig. 19a;
- Fig. 22: eine alternative Ausführung einer Warentransportvorrichtung und eines Warenverlagerungsmittels, in Draufsicht;
- Fig. 23: eine Ausschnittsvergrößerung aus Fig. 22 mit dem Warenverlagerungsmittel in Stirnansicht;
- Fig. 24: die Warentransportvorrichtung gemäß dem Ausführungsbeispiel nach Fig. 2 in einer modifizierten Ausführung mit einem Warenaufnahmeträger in einer ersten Übergabestellung und einem Warenverlagerungsmittel in einer in z-Richtung ausgefahrenen Übergabestellung, in perspektivischer Ansicht;
- Fig. 25: die Warentransportvorrichtung nach Fig. 24, in Ansicht gemäß der Linie XXV;
- Fig. 26: die Warentransportvorrichtung nach Fig. 24, in Ansicht gemäß der Linie XXVI;
- Fig. 27a, 27b: die Warentransportvorrichtung mit einer ersten Ausführung für eine Anschlagvorrichtung nach Fig. 24 und in entgegengesetzter Richtung ausgefahrenem Warentransportmittel, in Stirnansicht;
- Fig. 28: einen Ausschnitt der Warentransportvorrichtung nach Fig. 24 mit der Anschlagvorrichtung und eine Führungsschiene für die Warentransportvorrichtung, in Stirnansicht geschnitten gemäß den Linien XXVII - XXVII;
- Fig. 29: die Anschlagvorrichtung nach Fig. 28, in perspektivischer Ansicht von unten;
- Fig. 30a, 30b: die Warentransportvorrichtung mit einer zweiten Ausführung für eine Anschlagvorrichtung und in entgegengesetzter Richtung ausgefahrenem Warentransportmittel, in Stirnansicht;
- Fig. 31: einen Ausschnitt der Warentransportvorrichtung nach Fig. 30a, 30b mit der Anschlagvorrichtung und eine Führungsschiene für die Warentransportvorrichtung, in Stirnansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

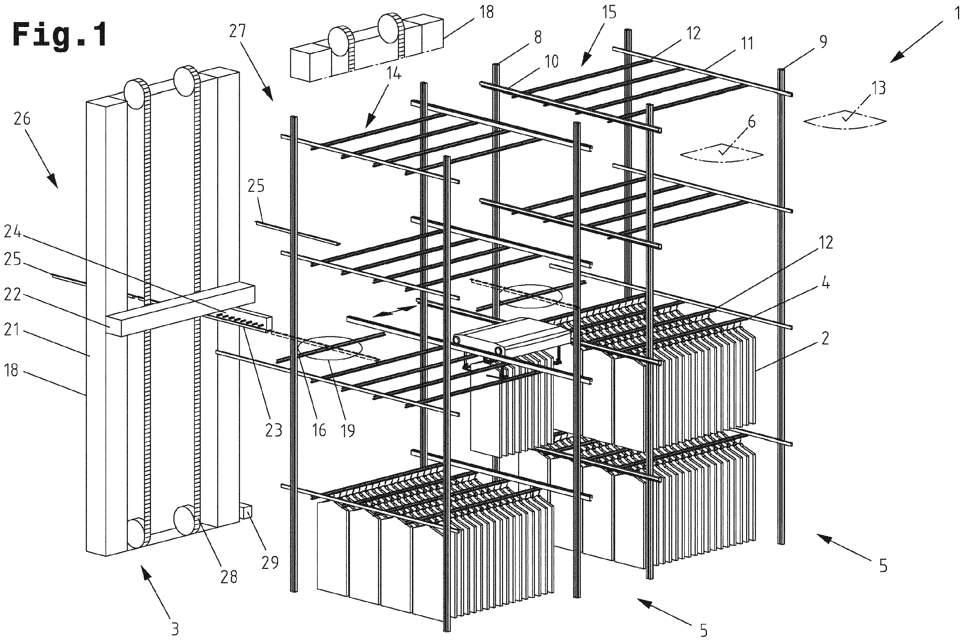

Fig. 1 zeigt eine erste Ausführung eines automatisierten Lagersystems 1 zur Lagerung hängender Waren 2 (im nachfolgenden Hängewäre genannt) und ein automatisiertes Warenverteilsystem 3 in perspektivischer Ansicht. Die Waren 2 sind beispielweise Kleidungsstücke, die auf Kleiderbügeln 4 hängen. Das Warenverteilsystem 3 umfasst die nachfolgend beschriebene Übergabe- und Übernahmestation 14, 15 und den/die Vertikalförderer 18. Es sei darauf hingewiesen, dass der Vertikalförderer 18 aus Gründen der besseren Übersicht nur teilweise dargestellt ist. Auch sind die Warenaufnahmeträger 16 der Übergabe- und Übernahmestation 14, 15 aus Gründen der besseren Übersicht nur in einer der Lagerebenen dargestellt.

Das Lagersystem 1 umfasst nach gezeigter Ausführung Lagerregale 5 und in übereinander liegenden Fahrebenen 6 vor den Lagerregalen 5 in einer ersten Richtung (x-Richtung) unabhängig voneinander verfahrbare Warentransportvorrichtungen 7. Die Warentransportvorrichtungen 7 dienen dem Einlagern der Waren 2 in das Lagerregal 5 bzw. Auslagern der Waren 2 aus dem Lagerregal 5. In Fig. 1 ist aus Gründen der besseren Übersicht nur eine einzige Warentransportvorrichtung 7 gezeigt. Üblicherweise ist ein solches Lagersystem 1 in jeder Fahrebene 6 mit einer Warentransportvorrichtung 7 versehen. Es können aber auch weniger Warentransportvorrichtungen 7 als Fahrebenen 6 vorhanden sein, wobei dann die Warentransportvorrichtungen 7 über eine nicht dargestellte Hebevorrichtung zwischen den Fahrebenen 6 umgesetzt werden kann.

Die Lagerregale 5 umfassen vertikale vordere Regalsteher 8, vertikale hintere Regalsteher 9, vordere Längstraversen 10, hintere Längstraversen 11 und Warenaufnahmeträger 12. Die vorderen Längstraversen 10 verlaufen horizontal in x-Richtung und sind an den vorderen Stehern 8 befestigt, wobei die paarweise einander gegenüberliegenden vorderen Längstraversen 10 jeweils eine Fahrebene 6 ausbilden, entlang welcher die Warentransportvorrichtung 7 bewegt wird. Die vorderen Längstraversen 10 bilden somit je Fahrebene 6 Führungsschienen für die Warentransportvorrichtung 7. Die hinteren Längstraversen 11 verlaufen horizontal in x-Richtung und sind an den hinteren Stehern 9 befestigt.

Die Warenaufnahmeträger 12 erstrecken sich jeweils in einer Lagerebene 13 horizontal in Tiefenrichtung des Lagerregales 5 (z-Richtung) zwischen den vorderen Längstraversen 10 und hinteren Längstraversen 11, wobei die Waren 2 über die Kleiderbügeln 4 an den Warenaufnahmeträgern 12 aufgehängt werden. Die Warenaufnahmeträger 12 sind ortsfest im Lagerregal 5 angeordnet, beispielsweise an den Längstraversen 10, 11 angeschraubt. Jeder Warenaufnahmeträger 12 bildet einen Lagerplatz, wobei an einem Lagerplatz eine Vielzahl von Waren 2 gelagert werden können. Somit bildet jedes Lagerregal 1 in den übereinander liegenden Lagerebenen 13 jeweils nebeneinander eine Vielzahl von Lagerplätzen bzw. Lagerbereichen aus.

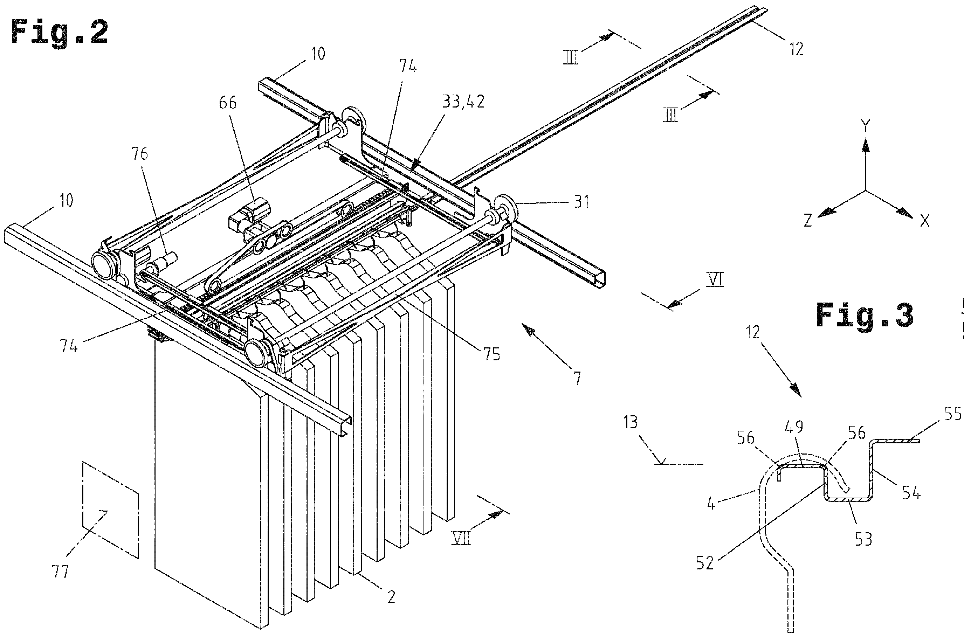

Der Warenaufnahmeträger 12, wie in Fig. 3 in Stirnansicht geschnitten dargestellt, weist einen Lagerflansch und einen Montageflansch auf. Der Lagerflansch ist durch einen horizontalen Auflageschenkel 49 und einen von diesem nach unten ragenden Profilschenkel 52 gebildet. Der Montageflansch ist durch einen horizontalen Profilschenkel 53, einen von diesem nach oben ragenden Profilschenkel 54 und einen Montageschenkel 55 gebildet. Der Profilschenkel 52 und der Profilschenkel 54 verlaufen mit gegenseitigem Abstand parallel zueinander, sodass ein nutartiger Aufnahmebereich ausgebildet ist, in welchen die Kleiderbügel 4, wie in strichlierten Linien eingetragen, vorragen können. Der Auflageschenkel 49 bildet an der Oberseite die Lagerebene 13 für die Kleiderbügel 4 (wie in strichlierten Linien eingetragen) aus. Der Montageschenkel 55 wird gegen die Längstraversen 10, 11 angelegt und mit diesen beispielweise verschraubt. Es kann sich auch als Vorteil erweisen, wenn der Warenaufnahmeträger 12 (optional) am Auflageschenkel 49 entlang der parallel verlaufenden Längsränder hintereinander und einander gegenüberliegende Einkerbungen 56 aufweist. Diese Einkerbungen 56 ermöglichen eine Zentrierung bzw. Positionierung der Kleiderbügel 4 relativ zum Warenaufnahmeträger 12.

Wie in Fig. 1 schematisch gezeigt, umfasst das Lagersystem 1 ferner eine Übergabestation 14, entlang welcher die vorderen Längstraversen 10 je Fahrebene 6 verlaufen und an welcher einzulagernde Hängewaren 2 von der Warentransportvorrichtung 7 abgeholt werden, und eine Übernahmestation 15, entlang welcher die vorderen Längstraversen 10 je Fahrebene 6 verlaufen und an welcher auszulagernde Hängewaren 2 von der Warentransportvorrichtung 7 abgegeben werden. Die Übergabe- und Übergabestation 14, 15 dienen als Puffer zwischen einem Vertikalförderer 18 und der Warentransportvorrichtung 7.

In diesem Ausführungsbeispiel weisen die Übergabestation 14 und Übernahmestation 15 je Lagerebene 13 zumindest einen Warenaufnahmeträger 16 auf. Es kann aber auch mehr als ein Warenaufnahmeträger 16 vorgesehen werden, beispielweise können die Übergabestation 14 und Übernahmestation 15 je Lagerebene 13 zwei Warenaufnahmeträger 16 aufweisen. Sind die Übergabestation 14 und Übernahmestation 15 zu beiden Seiten der Warentransportvorrichtung 7 angeordnet, ist je Lagerebene 13 ein Warenaufnahmeträger 16 in der Übergabestation 14 und je Lagerebene 13 ein Warenaufnahmeträger 16 in der Übernahmestation 15 angeordnet. Eine solche Ausführung ist insbesondere dann von Vorteil, wenn eine hohe Leistung gefordert ist.

Die Warenaufnahmeträger 16 der Übergabestation 14 sind jeweils über einen Stellantrieb zwischen einer Aufnahmestellung (wie in strichlierten Linien eingetragen) und einer Übergabestellung (wie in vollen Linien eingetragen) verstellbar, wobei in der Aufnahmestellung Ware 2 von einem noch näher zu beschreibenden Vertikalförderer 18 auf den Warenaufnahmeträger 16 übernommen und in der Übergabestellung Ware 2 vom Warenaufnahmeträger 16 an die Warentransportvorrichtung 7 übergeben werden kann.

Der Stellantrieb umfasst eine über einen Antriebsmotor (nicht dargestellt) um eine Vertikalachse drehbare Montageplatte 19, auf welcher der zumindest eine Warenaufnahmeträger 16 montiert ist. Der zumindest eine Warenaufnahmeträger 16 verläuft in der Aufnahmestellung parallel zu den Warenaufnahmeträgern 12 und in der Übergabestellung senkrecht zu den Warenaufnahmeträgern 12.

Die Warenaufnahmeträger 16 der Übernahmestation 15 sind jeweils über einen Stellantrieb zwischen einer Übernahmestellung (wie in vollen Linien eingetragen) und einer Abgabestellung (wie in strichlierten Linien eingetragen) verstellbar, wobei in der Übernahmestellung Ware 2 von der Warentransportvorrichtung 7 auf den Warenaufnahmeträger 16 übernommen und in der Abgabestellung Ware 2 von dem Warenaufnahmeträger 16 an einen noch näher zu beschreibenden Vertikalförderer 18 übergeben werden kann. Der Stellantrieb umfasst eine über einen Antriebsmotor (nicht dargestellt) um eine Vertikalachse drehbare Montageplatte 19, auf welcher der zumindest eine Warenaufnahmeträger 16 montiert ist. Der zumindest eine Warenaufnahmeträger 16 verläuft in der Übernahmestellung parallel zu den Warenaufnahmeträgern 12 und in der Abgabestellung senkrecht zu den Warenaufnahmeträgern 12.

Der Warenaufnahmeträger 16 der Übergabe- bzw. Übernahmestation 14, 15 ist nach gezeigter Ausführung wie der Warenaufnahmeträger 12 des Lagerregales 5 gestaltet.

Der Vertikalförderer 18 verbindet die Lagerebenen 13 mit zumindest einer Fördertechnikebene und ist in der Verlängerung der Lagerregale 5 angeordnet. Dabei kann der erste Vertikalförderer 18 stirnseitig vor der Übergabestation 14 und der zweite Vertikalförderer 18 stirnseitig vor der Übernahmestation 15 angeordnet werden. Andererseits kann der erste Vertikalförderer 18 auch in das erste Lagerregal 5 und der zweite Vertikalförderer 18 auch in das zweite Lagerregal 5 integriert angeordnet werden, sodass in x-Richtung vor und nach dem Vertikalförderer 18 Lagerplätze angeordnet sind, wie dies jedoch nicht dargestellt ist.

Die Vertikalförderer 18 umfassen jeweils einen Führungsrahmen 21, einen heb- und senkbaren Hubrahmen 22, zumindest einen Warenaufnahmeträger 23 und eine Warenübergabevorrichtung 24. Der zumindest eine Warenaufnahmeträger 23 ist am Hubrahmen 22 befestigt und verläuft parallel zur x-Richtung. Der Warenaufnahmeträger 23 des Vertikalförderers 18 ist nach gezeigter Ausführung wie der Warenaufnahmeträger 12 des Lagerregales 5 gestaltet.

Die Ware 2 kann mittels der Warenübergabevorrichtung 24 zwischen dem Warenaufnahmeträger 16 der Übergabe- bzw. Übernahmestation 14, 15 und dem Warenaufnahmeträger 23 am Vertikalförderer 18 gefördert werden. Auch kann es vorgesehen werden, dass die Ware 2 mittels der Warenübergabevorrichtung 24 zwischen dem Warenaufnahmeträger 23 am Vertikalförderer 18 und einem Warenaufnahmeträger 25 einer Fördertechnik 26, 27 gefördert werden.

Der Führungsrahmen 21 ist durch vertikale Rahmenteile, eine diese miteinander verbindende untere Traverse und eine diese miteinander verbindende obere Traverse gebildet. Die vertikalen Rahmenteile sind jeweils mit einer Führungsvorrichtung versehen, an welcher der Hubrahmen 22 über Führungsorgane gelagert ist. Bevorzugt sind die Führungsorgane durch Führungsräder gebildet, welche an Führungsbahnen der Führungsvorrichtung abrollbar aufliegen.

Der Hubrahmen 22 ist mit einer Verstellvorrichtung gekoppelt, welche nach gezeigtem Ausführungsbeispiel einen am Führungsrahmen 21 gelagerten Zugmitteltrieb 28 und zumindest einen Hubantrieb 29 umfasst. Der Zugmitteltrieb 28 umfasst synchron angetriebene, endlos umlaufende Zugmittel, welche jeweils um ein (oberes) Umlenkrad und ein mit dem Hubantrieb gekuppeltes (unteres) Antriebsrad geführt sind. Das Zugmittel ist beispielsweise durch einen Zahnriemen, eine Kette oder dgl. gebildet. Der Hubantrieb 29 ist bevorzugt durch einen Elektromotor, insbesondere einen Asynchronmotor, Synchronmotor und dgl., gebildet und am Führungsrahmen 21 gelagert. Durch Drehbewegung der Antriebsräder wird der Hubrahmen 22 mit dem Warenaufnahmeträger 23 relativ zu den Lagerebenen 13 in vertikaler Richtung (y-Richtung) bewegt.

Der erste Vertikalförderer 18 schließt an eine erste Fördertechnik zum Antransport von Waren 2 und der zweite Vertikalförderer 18 schließt an eine zweite Fördertechnik zum Abtransport von Waren 2 an. Die erste Fördertechnik 26 und zweite Fördertechnik 27 sind bevorzugt automatisiert betrieben.

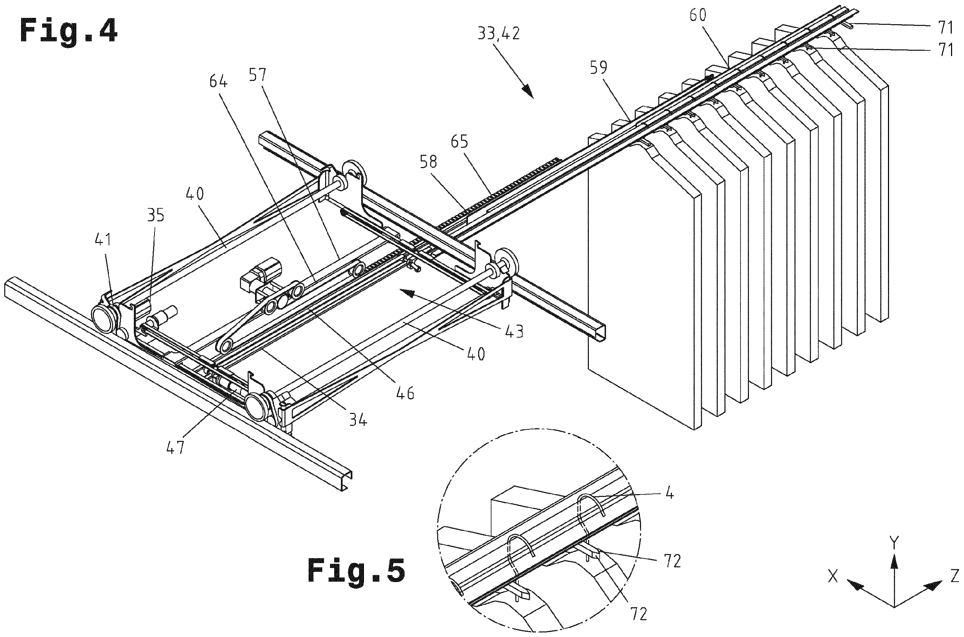

In den Fig. 2 und 4 sind die vorderen Längstraversen 10 einer der Fahrebenen 6, die Warentransportvorrichtung 7 und ein Lagerplatz mit einem Warenaufnahmeträger 12 in perspektivischer Ansicht gezeigt.

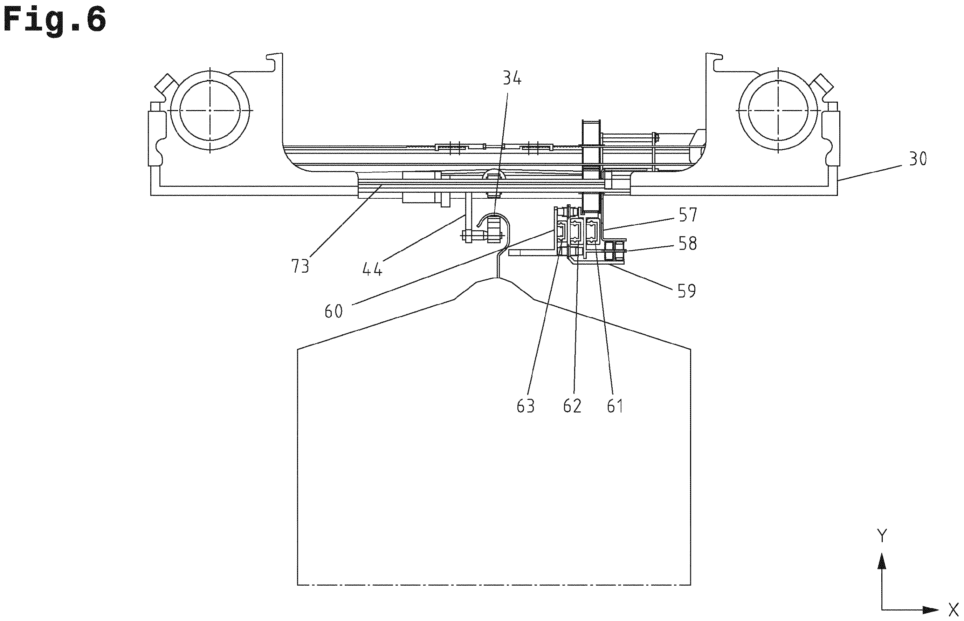

Die Warentransportvorrichtung 7 (siehe auch die Fig. 6 bis 16), ist nach dieser Ausführung durch ein Einebenenregalbediengerät gebildet und weist einen Grundrahmen 30, Laufräder 31, einen Fahrantrieb 32, eine Ein- und Auslagervorrichtung 33 und einen Warenaufnahmeträger 34 auf. Die Laufräder 31 sind an den beiden Längsseiten des Grundrahmens 30 angeordnet.

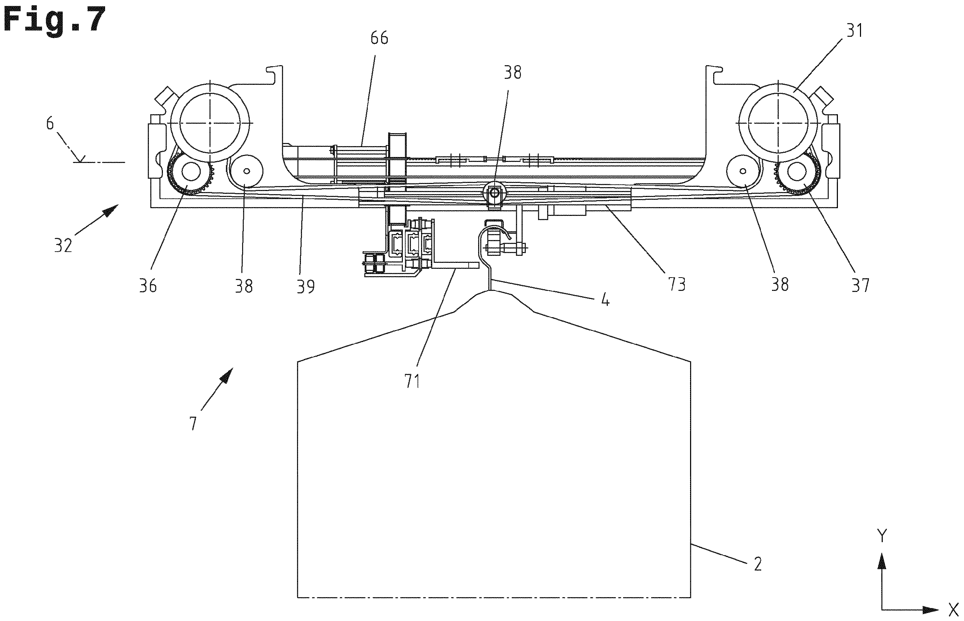

Der Fahrantrieb 32 (Fig. 4, 7) umfasst nach einer möglichen ersten Ausführung einen elektrischen Antriebsmotor 35, ein Antriebsrad 36, ein Umlenkrad 37, Führungsräder 38, ein endlos umlaufendes Zugmittel 39 sowie Antriebswellen 40. An den Antriebswellen 40 sind endseitig die Laufräder 31 befestigt. Das Zugmittel 39 wird um das Antriebsrad 36, Umlenkrad 37 und die Führungsräder 38 und um einen Antriebsabschnitt 41 an den Antriebswellen 40 geführt. Auf diese Weise werden die beiden Laufräder 31 auf der ersten Seite der Warentransportvorrichtung 7 angetrieben. Die Antriebswellen 40 übertragen das Antriebsmoment von der ersten Seite auf die zweite Seite der Warentransportvorrichtung 7, sodass auch die beiden Laufräder 31 auf der zweiten Seite angetrieben sind.

Sollen alle vier Laufräder angetrieben werden, kann nach einer zweiten Ausführung jedes Laufrad mit einem Antriebsmotor gekoppelt sein, wobei die Antriebsmotoren synchronisiert angesteuert werden.

Nach einer dritten Ausführung kann auch nur ein Laufradpaar angetrieben werden, beispielweise das in Fahrtrichtung der Warentransportvorrichtung 7 vordere Laufradpaar oder hintere Laufradpaar.

Die Ein- und Auslagervorrichtung 33 umfasst nach der gezeigten Ausführung ein relativ zum Warenaufnahmeträger 34 in der z-Richtung bewegbares Warenverlagerungsmittel 42.

Wie aus den Figuren ersichtlich, ist der Warenaufnahmeträger 34 als Hubleiste gestaltet, welche in z-Richtung verläuft und mittels einer Verstellvorrichtung 43 zwischen einer Grundstellung (Fig. 2, 6, 7, 10, 11) und einer ersten/zweiten Übergabestellung (Fig. 4, 8, 9, 12, 13, 15, 16) verstellbar ist. Die Verstellvorrichtung 43 umfasst eine Schwenkhebelanordnung und einen Zugmitteltrieb. Die Schwenkhebelanordnung weist einen ersten Schwenkhebel 44 und einen zweiten Schwenkhebel 44 auf, welche jeweils in einem (oberen) ersten Endbereich mit einer in x-Richtung verlaufenden Drehachse 45 verbunden sind. Die Drehachsen 45 sind schwenkbar an einem (nicht dargestellten) Rahmenprofil gelagert, welches am Grundrahmen 30 montiert ist. Der Zugmitteltrieb umfasst ein Zugmittel, insbesondere einen Zahnriemen 46, welches um einen Antriebsabschnitt auf den Drehachsen 45 geführt ist. Eine der Drehachsen 45 ist an einen Antriebsmotor 47 gekoppelt.

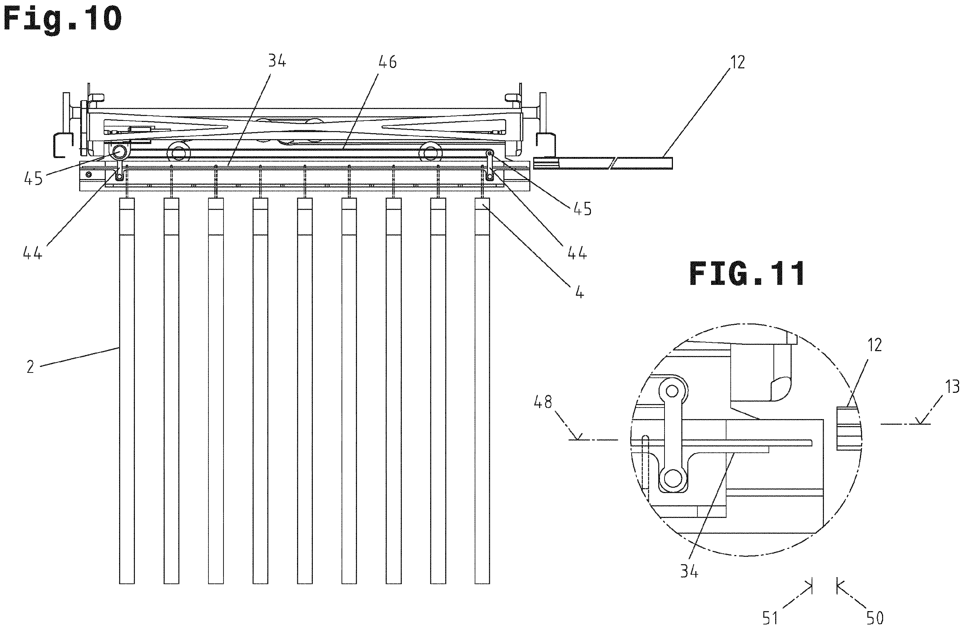

Die Hubleiste ist an ihrem vorderen Endbereich mit dem ersten Schwenkhebel 44 und an ihrem hinteren Endbereich mit dem zweiten Schwenkhebel 44 gelenkig verbunden, wie beispielweise in Fig. 10 ersichtlich.

In den Fig. 10, 11 befindet sich der Warenaufnahmeträger 34 bzw. die Hubleiste in der Grundstellung. Die Waren 2 sind über Kleiderbügel 4 auf der Hubleiste aufgehängt. In der Grundstellung verläuft eine horizontale Aufnahmeebene 48 auf dem Warenaufnahmeträger 34 unterhalb der Lagerebene 13 und eine Stirnkante 51 des Warenaufnahmeträgers 34 ist in z-Richtung gegenüber der Stirnkante 50 des Warenaufnahmeträgers 12 rückversetzt, wie in Fig. 11 im Detail dargestellt.

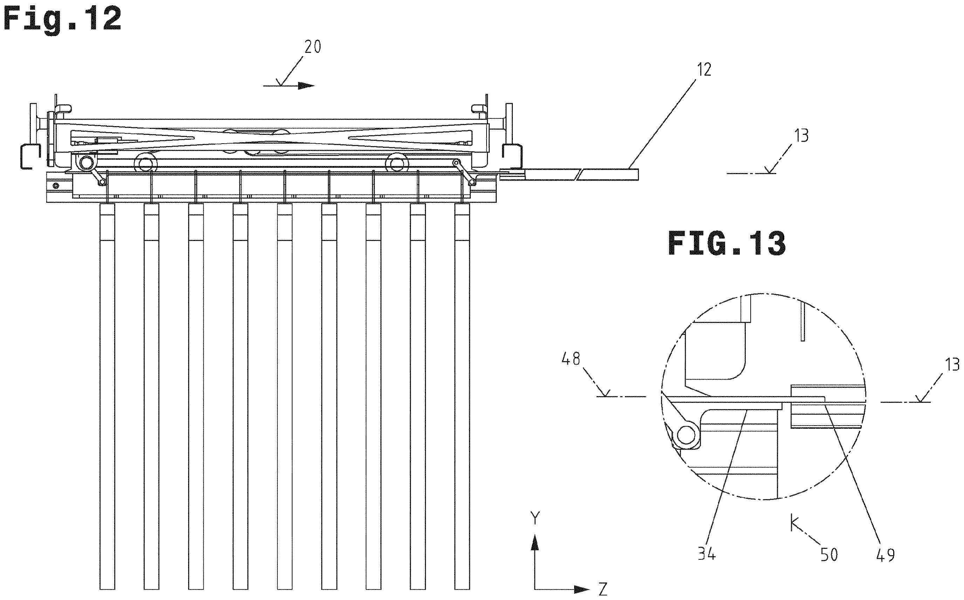

In den Fig. 12, 13 befindet sich der Warenaufnahmeträger 34 bzw. die Hubleiste in einer ersten Übergabestellung. In der ersten Übergabestellung wird der Spaltabstand zwischen der Stirnkante 50 des Warenaufnahmeträgers 12 und der Stirnkante 51 des Warenaufnahmeträgers 34 überbrückt. Dabei ist der Warenaufnahmeträger 34 bzw. die Hubleiste gegenüber der Höhenposition in der Grundstellung angehoben. Eine horizontale Aufnahmeebene 48 auf dem Warenaufnahmeträger 34 verläuft in der ersten Übergabestellung oberhalb der Lagerebene 13 und der Warenaufnahmeträger 34 überragt in z-Richtung die Stirnkante 50 des Warenaufnahmeträgers 12 und stützt sich der Warenaufnahmeträger 34 auf dem Warenaufnahmeträger 12 an einem Auflageschenkel 49 ab, wie in Fig. 13 im Detail dargestellt. Damit ist eine zuverlässige Verlagerung der Ware 2 auf der Einlagerbewegung möglich. Selbst schwere Ware 2, beispielsweise Mäntel etc., kann zwischen dem Warenaufnahmeträger 34 der Warentransportvorrichtung 7 und dem Warenaufnahmeträger 12 des Lagerregales 5 manipuliert werden. Bei der Einlagerbewegung (Pfeil 20) der Ware 2 gleiten die Kleiderbügel 4 auf dem Warenaufnahmeträger 34 der Warentransportvorrichtung 7 und dem Warenaufnahmeträger 12 des Lagerregales 5, wie im Nachfolgenden noch beschrieben wird.

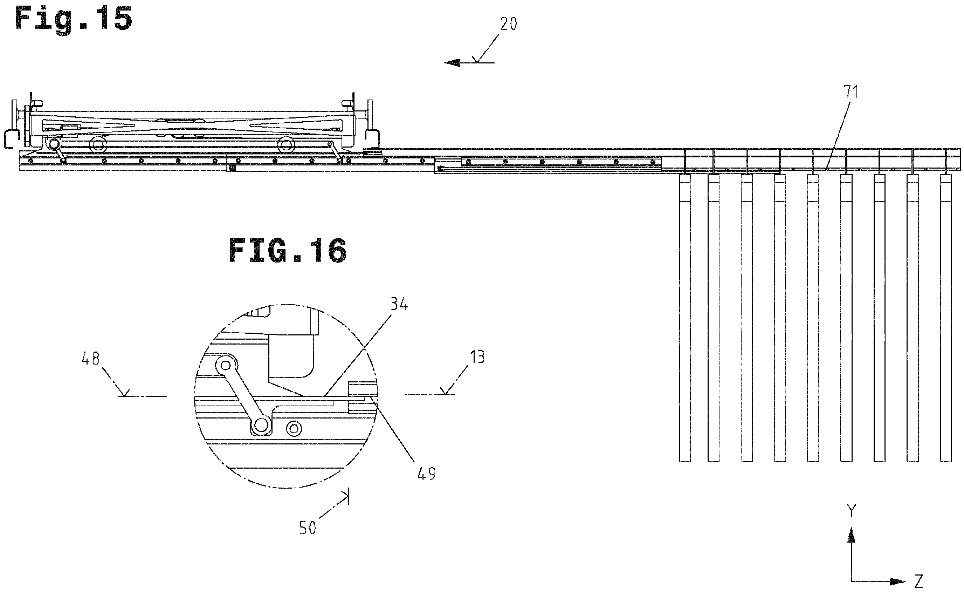

In den Fig. 15, 16 befindet sich der Warenaufnahmeträger 34 bzw. die Hubleiste in einer zweiten Übergabestellung. In der Übergabestellung wird der Spaltabstand zwischen der Stirnkante 50 des Warenaufnahmeträgers 12 und der Stirnkante 51 des Warenaufnahmeträgers 34 überbrückt. Dabei ist der Warenaufnahmeträger 34 bzw. die Hubleiste gegenüber der Höhenposition in der Grundstellung angehoben. Eine horizontale Aufnahmeebene 48 auf dem Warenaufnahmeträger 34 verläuft in der zweiten Übergabestellung unterhalb der Lagerebene 13 und der Warenaufnahmeträger 34 überragt in z-Richtung die Stirnkante 50 des Warenaufnahmeträgers 12 und stützt sich der Warenaufnahmeträger 34 auf dem Warenaufnahmeträger 12 an einem Auflageschenkel 49 ab, wie in Fig. 16 im Detail dargestellt. Damit ist eine zuverlässige Verlagerung der Ware 2 auf der Auslagerbewegung (Pfeil 20) möglich. Bei der Auslagerbewegung der Ware 2 gleiten die Kleiderbügel 4 auf dem Warenaufnahmeträger 12 des Lagerregales 5 und dem Warenaufnahmeträger 34 der Warentransportvorrichtung 7, wie im Nachfolgenden noch beschrieben wird.

Die Ein- und Auslagervorrichtung 33, wie aus den Fig. 4, 6 und 14 ersichtlich, ist nach diesem Ausführungsbeispiel durch eine auf dem Grundrahmen 30 angeordnete und aus einer Ausgangsstellung nach beiden z-Richtungen ausfahrbare Teleskopiereinheit gebildet, sodass in die zu beiden Seiten der Warentransportvorrichtung 7 angeordneten Lagerregale 5 Waren 2 eingelagert bzw. Waren 2 ausgelagert werden können.

Die Teleskopiereinheit weist einen Tragrahmen 57 und relativ gegenüber dem Tragrahmen 57 horizontal in z-Richtung ein- bzw. ausfahrbare Schienen 58, 59, 60 auf.

Die erste Schiene 58 ist über eine Führungsanordnung 61 am Tragrahmen 57 verschiebbar gelagert und die zweite Schiene 59 ist über eine Führungsanordnung 62 an der ersten Schiene 40 verschiebbar gelagert und die dritte Schiene 60 ist über eine Führungsanordnung 63 an der zweiten Schiene 59 verschiebbar gelagert. Die erste Schiene 58 kann mit einer am Tragrahmen 57 gelagerten Antriebsvorrichtung relativ gegenüber dem Tragrahmen 57 bewegt werden. Die Antriebsvorrichtung umfasst ein erstes Antriebsmittel 64, insbesondere einen Zugmitteltrieb und ein zweites Antriebsmittel 65, insbesondere eine Zahnleistenanordnung. Das erste Antriebsmittel 64 und zweite Antriebsmittel 65 stehen in Antriebsverbindung. Der Zugmitteltrieb umfasst zumindest ein angetriebenes, endlos umlaufendes Zugmittel, welches um Umlenkräder und ein mit einem Antriebsmotor 66 gekuppeltes Antriebsrad geführt sind. Das Zugmittel ist beispielsweise durch einen Zahnriemen, eine Kette oder dgl. gebildet. Der Antriebsmotor 66 ist bevorzugt durch einen Elektromotor gebildet. Durch Drehbewegung des Antriebsrades wird die erste Schiene 40 abhängig von der Drehrichtung entweder in Richtung einer ersten z-Richtung oder in Richtung einer zweiten z-Richtung ausgefahren.

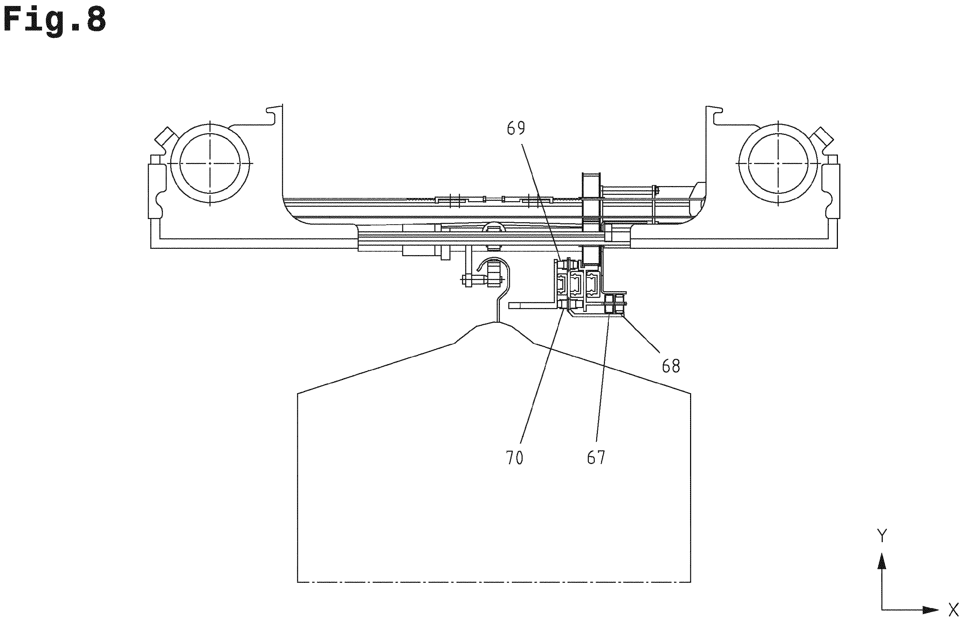

Wie beispielweise in Fig. 8 eingetragen, ist ein erster Riemen 67 um eine an der ersten Schiene 58 gelagerte (vordere) erste Rolle umgelenkt und mit seinem ersten Ende am Tragrahmen 57 und mit seinem zweiten Ende an der zweiten Schiene 59 befestigt. Ein zweiter Riemen 68 ist um eine an der ersten Schiene 58 gelagerte (hintere) zweite Rolle umgelenkt und mit seinem ersten Ende am Tragrahmen 57 und mit seinem zweiten Ende an der zweiten Schiene 59 befestigt. Wird die erste Schiene 58 durch die Antriebsvorrichtung bewegt, so wird auch die zweite Schiene 59 über die Riemen 67, 68 mitbewegt, also entweder ein- bzw. ausgefahren.

Ferner ist ein erster Riemen 69 um eine an der zweiten Schiene 58 gelagerte (vordere) erste Rolle umgelenkt und mit seinem ersten Ende an der ersten Schiene 58 und mit seinem zweiten Ende an der dritten Schiene 60 befestigt. Ein zweiter Riemen 70 ist um eine an der zweiten Schiene 58 gelagerte (hintere) zweite Rolle umgelenkt und mit seinem ersten Ende an der ersten Schiene 58 und mit seinem zweiten Ende an der dritten Schiene 60 befestigt. Somit kann mit der Bewegung der zweiten Schiene 59 auch die dritte Schiene 60 über die Riemen 69, 70 mitbewegt werden, also entweder ein- bzw. ausgefahren.

Die dritte Schiene 60 umfasst äußere / innere Mitnahmeorgane 71 zum Verschieben von Waren 2 zwischen den Warenaufnahmeträgern 12, 34 oder den Warenaufnahmeträgern 16, 34. Die äußeren Mitnahmeorgane 71 sind in den gegenüber liegenden Endbereichen der dritten Schiene 60 und die inneren Mitnahmeorgane 71 sind zwischen den äußeren Mitnahmeorgane 71 angeordnet, wobei jedes Mitnahmeorgan 71 mit der dritten Schiene 60 fest (unbeweglich) verbunden ist. Die inneren Mitnahmeorgane 71 können im Endbereich geneigt aufeinander zulaufende Eingriffsflächen 72 ausbilden, wie in Fig. 5 ersichtlich, die eine Separierung dicht aneinander liegender Kleiderbügel 4 ermöglichen. Die Teleskopiereinheit bildet das Warenverlagerungsmittel 42. Die äußeren / inneren Mitnahmeorgane 71 bilden Greifeinheiten.

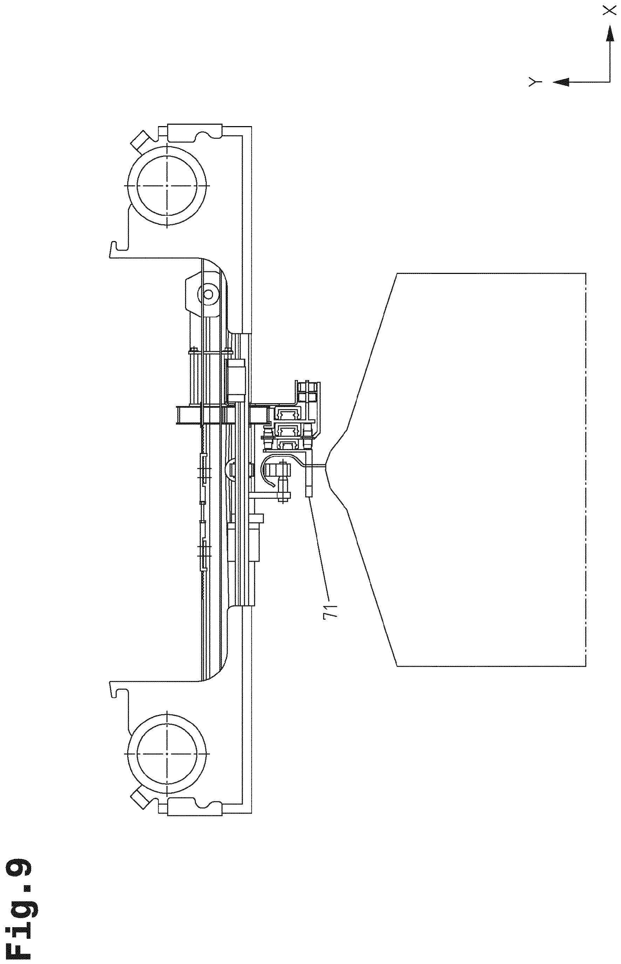

Die Ein- und Auslagervorrichtung 33 bzw. die Teleskopiereinheit ist mit einer Verstellvorrichtung gekoppelt, mittels welcher die Ein- und Auslagervorrichtung 33 bzw. die Teleskopiereinheit in x-Richtung zwischen einer Grundstellung (Fig. 6, 7, 8) und einer Betätigungsstellung (Fig. 9) verstellt werden kann. In der Grundstellung sind die äußeren / inneren Mitnahmeorgane 71 aus dem Bewegungsweg der Waren 2, insbesondere der Kleiderbügel 4 herausbewegt. In der Betätigungsstellung sind die äußeren / inneren Mitnahmeorgane 71 in den Bewegungsweg der Waren 2, insbesondere der Kleiderbügel 4 hineinbewegt, sodass die äußeren / inneren Mitnahmeorgane 71 die Kleiderbügel 4 der Ware 2 hintergreifen. Mit anderen Worten können die äußeren / inneren Mitnahmeorgane 71 bzw. die Greifeinheiten relativ gegenüber dem Warenaufnahmeträger 34 in x-Richtung verstellt werden.

Nach gezeigtem Ausführungsbeispiel umfasst die Verstellvorrichtung (Fig. 2, 6, 7) einen am Grundrahmen 30 gelagerten Zugmitteltrieb, welcher mit dem Tragrahmen 57 gekoppelt ist. Der Tragrahmen 57 ist mit seinen einander gegenüber liegenden Endbereichen an Führungen 73 gelagert. Die Führungen 73 verlaufen in x-Richtung und sind am Grundrahmen 30 befestigt. Der Zugmitteltrieb umfasst synchron angetriebene, endlos umlaufende Zugmittel 74, wobei ein erstes Zugmittel um ein am Grundrahmen 30 gelagertes Umlenkrad und ein am Grundrahmen 30 gelagertes Antriebsrad geführt ist und wobei ein zweites Zugmittel um am Grundrahmen 30 gelagerte Umlenkräder geführt ist. Das Umlenkrad für das erste Zugmittel 74 und eines der Umlenkräder für das zweite Zugmittel 74 sind über eine Antriebswelle 75 miteinander verbunden. Das Zugmittel ist beispielsweise durch einen Zahnriemen, eine Kette oder dgl. gebildet. Das Antriebsrad ist mit einem Antriebsmotor 76 verbunden.

Nach einer anderen nicht gezeigten Ausführung, können die an der dritten Schiene 60 gelagerten äußeren / inneren Mitnahmeorgane 71 jeweils mit einem elektrischen Antriebsmotor gekuppelt werden, über welche die äußeren / inneren Mitnahmeorgane 71 zwischen einer Ausgangsstellung und Betätigungsstellung schwenkbar sind. In diesem Fall kann die Verstellvorrichtung entfallen. In der Ausgangsstellung sind die äußeren / inneren Mitnahmeorgane 71 aus dem Bewegungsweg der Waren 2 herausbewegt. In der Betätigungsstellung sind die äußeren / inneren Mitnahmeorgane 71 in den Bewegungsweg der Waren 2 hineinbewegt, sodass die äußeren / inneren Mitnahmeorgane 71 die Kleiderbügel 4 der Ware 2 hintergreifen.

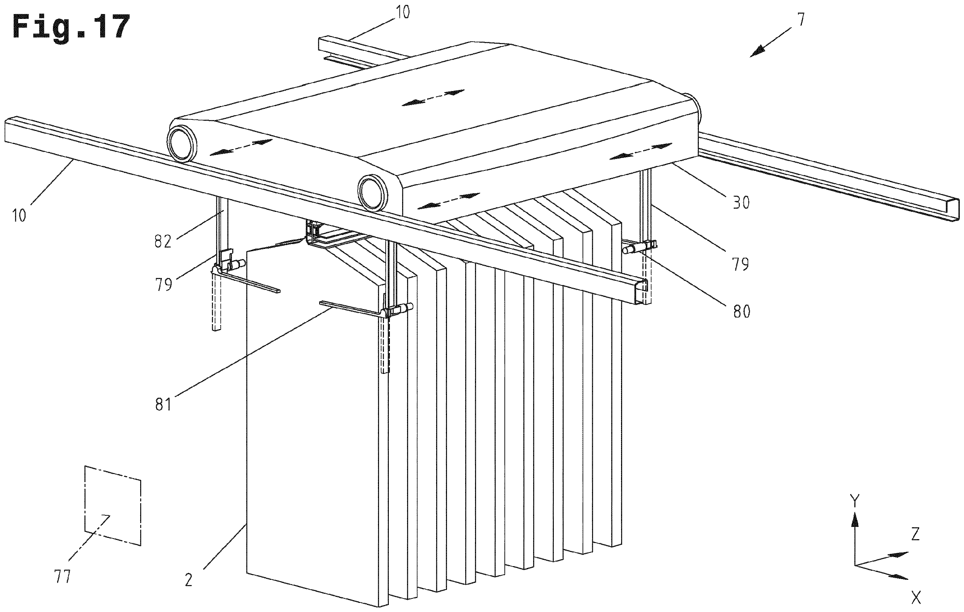

In der Fig. 17 ist die Warentransportvorrichtung 7 schematisch dargestellt. Wie zu erkennen, kann die Warentransportvorrichtung 7 zusätzlich mit einer Warentransportsicherung ausgestattet werden, welche die auf dem Warenaufnahmeträger 34 über Kleiderbügel 4 aufgehängte Ware 2 während der Bewegungsfahrt der Warentransportvorrichtung 7 im Wesentlichen parallel zur Hängeebene 77 positioniert zu halten. Damit kann während der Bewegungsfahrt der Warentransportvorrichtung 7 eine Verdrehung der Waren 2 gegenüber dem Warenaufnahmeträger 34 begrenzt bzw. vermieden werden.

Die Warentransportsicherung umfasst an den einander gegenüberliegenden Längsseiten der Warentransportvorrichtung 7 angeordnete und an dessen Grundrahmen 30 befestigte Warensicherungsmittel 79, welche jeweils einen über einen Stellantrieb 80 zwischen einer Grundstellung (wie in strichlierten Linien eingetragen) und einer Sicherungsstellung (wie in festen Linien eingetragen) verstellbaren Sicherungsfinger 81 aufweisen. Die Sicherungsfinger 81 sind hierzu beispielwiese um eine in z-Richtung verlaufende Drehachse schwenkbar an einem Haltearm 82 gelagert. Der Stellantrieb 80 umfasst einen Antriebsmotor, insbesondere einen Elektromotor, welcher ebenfalls am Haltearm 82 gelagert ist und mit dem Sicherungsfinger 81 gekuppelt ist. Eine Stellebene der Sicherungsfinger 81 verläuft parallel zur Hängeebene 77.

In der Grundstellung sind die Sicherungsfinger 81 aus dem in z-Richtung verlaufenden Bewegungsweg der Waren 2 herausbewegt. In der Sicherungsstellung sind die Sicherungsfinger 81 in den in z-Richtung verlaufenden Bewegungsweg der Waren 2 hineinbewegt, sodass die Sicherungsfinger 81 entweder die Kleiderbügel 4 oder die Waren 2 hintergreifen. Werden Waren 2 zwischen der Warentransportvorrichtung 7 und dem Lagerregal 5 oder der Warentransportvorrichtung 7 und der Übergabe- bzw. Übernahmestation 14, 15 gefördert, so werden zuvor die Sicherungsfinger 81 in die Grundstellung bewegt.

Wenngleich in der Fig. 17 die Warensicherungsmittel 79 am Grundrahmen 30 bewegungsfest angeordnet sind, ist es genauso gut möglich, dass die Warensicherungsmittel 79 in z-Richtung relativ zueinander verstellbar sind, wie in Fig. 17 in strichlierten Linien angedeutet. Dies ist vor allem dann von Vorteil, wenn auf dem Warenaufnahmeträger 34 weniger Waren 2 hängen als aufgenommen werden könnten und diese Waren 2 dennoch zuverlässig gegen Verdrehen während der Bewegungsfahrt gesichert werden müssen. Grundsätzlich ist es auch möglich, dass die Waren 2, welche über die Kleiderbügel 4 auf dem Warenaufnahmeträger 34 aufgehängt sind, zwischen den Sicherungsfinger 81 (geringfügig) zusammengedrückt werden. Auch können die Waren 2 beispielweise vor einer Einlagerung auf die Längsseite der Warentransportvorrichtung 7 vorpositioniert werden, welche dem Lagerplatz benachbart ist, in den die Waren 2 eingelagert werden sollen.

Im Nachfolgenden wird ein Einlagervorgang und Auslagervorgang beschrieben.

### Einlagervorgang (siehe Fig. 2, 4, 8, 9, 10, 11, 12,13, 14, 16)

Die einzulagernde Ware 2 wird am Warenaufnahmeträger 25 der ersten Fördertechnik 26 zum Vertikalförderer 18 angefördert. Dort wird die Ware 2 vom Warenaufnahmeträger 25 der ersten Fördertechnik 26 auf den Warenaufnahmeträger 23 am Vertikalförderer 18 gefördert. Die Förderbewegung der Ware 2 zwischen den Warenaufnahmeträgern 23, 25 kann über die Warenübergabevorrichtung 24 erfolgen. Danach wird der Hubrahmen 22 mit dem Warenaufnahmeträger 23 vertikal auf Höhe einer der Lagerebenen 13 verstellt und die Waren 2 vom Warenaufnahmeträger 23 des Vertikalförderers 18 auf den Warenaufnahmeträger 16 der Übergabestation 14 (Puffer) gefördert. Die Förderbewegung der Ware 2 zwischen den Warenaufnahmeträgern 16, 23 kann über die Warenübergabevorrichtung 24 erfolgen. Danach wird der Warenaufnahmeträger 16 der Übergabestation 14 aus einer Aufnahmestellung in eine Übergabestellung verstellt. In der Übergabestellung kann nun jene Warentransportvorrichtung 7, welche der Lagerebene 13 zugeordnet ist, in welcher die Waren 2 an einem Lagerplatz eingelagert werden sollen, die Waren 2 von der Übergabestation 14 abholen.

Die Warentransportvorrichtung 7 wird hierzu in x-Richtung vor dem Warenaufnahmeträger 16 positioniert und der Warenaufnahmeträger 34 (Hubleiste) der Warentransportvorrichtung 7 aus einer Grundstellung (Fig. 11) in die zweite Übergabestellung (Fig. 16) verstellt. Die horizontale Aufnahmeebene 48 auf dem Warenaufnahmeträger 34 verläuft in der zweiten Übergabestellung unterhalb einer Übergabeebene (welche der Lagerebene 13 entspricht) und der Warenaufnahmeträger 34 überragt in z-Richtung die Stirnkante 50 des Warenaufnahmeträgers 16 und stützt sich auf dem Warenaufnahmeträger 16, insbesondere dem Auflageschenkel 49 ab (wie sinngemäß an dem Warenaufnahmeträger 12 im Lagerregal 5 in Fig. 16 dargestellt).

Wurde der Warenaufnahmeträger 34 (Hubleiste) der Warentransportvorrichtung 7 in die zweite Übergabestellung (Fig. 16) verstellt, wird das Warenverlagerungsmittel 42 aus einer Ausgangsstellung seitlich neben dem Warenaufnahmeträger 34 in z-Richtung ausgefahren. Danach wird das Warenverlagerungsmittel 42 in x-Richtung relativ zum Warenaufnahmeträger 16 aus der Grundstellung in die Betätigungsstellung verstellt, in welcher die Mitnahmeorgane 71 die Kleiderbügel 4 hintergreifen. Dabei kann zwischen aufeinander folgenden Mitnahmeorganen 71 nur ein einziger Kleiderbügel 4 (beispielsweise bei Wintermäntel) oder mehrere Kleiderbügel 4 (beispielsweise bei Sommerkleidern) aufgenommen werden.

Wird nun das Warenverlagerungsmittel 42 in z-Richtung in die Ausgangsstellung eingefahren, werden die Waren 2 mittels der Mitnahmeorgane 71 vom Warenaufnahmeträger 16 auf den Warenaufnahmeträger 34 gefördert. Dabei gleiten die Kleiderbügel 4 mit deren Haken entlang dem Warenaufnahmeträger 16 und dem Warenaufnahmeträger 34. Danach wird der Warenaufnahmeträger 34 (Hubleiste) der Warentransportvorrichtung 7 wieder in die Grundstellung verstellt.

Wurden die Waren 2 auf der Warentransportvorrichtung 7 übernommen, kann diese in x-Richtung bis zu einem definierten Lagerplatz verfahren und vor einem Warenaufnahmeträger 12 positioniert werden.

Danach wird der Warenaufnahmeträger 34 (Hubleiste) der Warentransportvorrichtung 7 aus einer Grundstellung (Fig. 11) in die erste Übergabestellung (Fig. 13) verstellt. In der ersten Übergabestellung verläuft eine horizontale Aufnahmeebene 48 auf dem Warenaufnahmeträger 34 oberhalb der Lagerebene 13 und der Warenaufnahmeträger 34 überragt in z-Richtung die Stirnkante 50 des Warenaufnahmeträgers 12 und stützt sich auf dem Warenaufnahmeträger 12, insbesondere dem Auflageschenkel 49 ab.

Anschließend wird die Ein- und Auslagervorrichtung 33 bzw. das Verlagerungsmittel 42 in x-Richtung aus einer Grundstellung (Fig. 6, 7, 8) in eine Betätigungsstellung verstellt. In der Betätigungsstellung sind die äußeren / inneren Mitnahmeorgane 71 in den Bewegungsweg der Waren 2 hineinbewegt, sodass die äußeren / inneren Mitnahmeorgane 71 die Kleiderbügel 4 bzw. die Haken hintergreifen.

Wird nun das Warenverlagerungsmittel 42 aus einer Ausgangsstellung seitlich neben dem Warenaufnahmeträger 34 in z-Richtung ausgefahren, werden die Waren 4 mittels der Mitnahmeorgane 71 vom Warenaufnahmeträger 34 auf den Warenaufnahmeträger 12 gefördert. Dabei gleiten die Kleiderbügel 4 mit deren Haken entlang dem Warenaufnahmeträger 34 und dem Warenaufnahmeträger 12.

Befinden sich die Waren 2 im Lagerregal 5, wird die Ein- und Auslagervorrichtung 33 bzw. das Verlagerungsmittel 42 in x-Richtung aus einer Betätigungsstellung in eine Grundstellung (Fig. 6, 7, 8) verstellt. Danach kann die Ein- und Auslagervorrichtung 33 bzw. das Verlagerungsmittel 42 in z-Richtung in die Ausgangsstellung eingefahren und der Warenaufnahmeträger 34 (Hubleiste) in die Grundstellung verstellt werden.

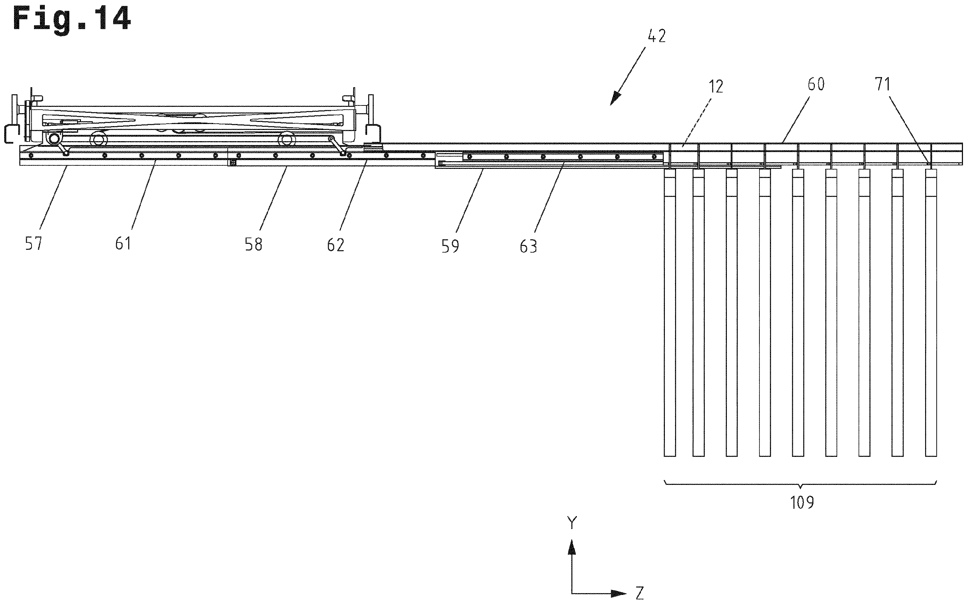

Wie in den Figuren ersichtlich, können beim Einlagervorgang die Waren 2 als Hängewarengruppe 109 (Fig. 14) gefördert und gelagert werden. Die Hängewarengruppe 109 kann bis zu vierzig Waren 2 umfassen. Dabei sind innerhalb einer Hängewarengruppe 109 ein und dieselben Waren 2 enthalten. Mit anderen Worten, werden auf den Warenaufnahmeträgern 16 der Übergabestation14 jeweils eine Hängewarengruppe 109 bereitgestellt und auf dem Warenaufnahmeträger 34 der Warentransportvorrichtung 7 jeweils eine Hängewarengruppe 109 aufgenommen und auf dem Warenaufnahmeträger 12 des Lagerregales 5 jeweils eine Hängewarengruppe 109 eingelagert. Bevorzugt kann der Warenaufnahmeträger 12 im Lagerregal 5 in z-Richtung hintereinander zwei Hängewarengruppen 109 lagern, wie in Fig. 1 ersichtlich.

Grundsätzlich ist es auch möglich, dass die Waren 2 vereinzelt gefördert und gelagert werden. Dies ist der Fall, wenn nach einem Kommissioniervorgang aus einer Hängewarengruppe 109 nur noch eine Ware 2 (Restware) verbleibt, welche wiederum in das Lagerregal 5 einzulagern ist.

### Auslagervorgang (siehe Fig. 11, 15, 16)

Die Warentransportvorrichtung 7 wird hierzu in x-Richtung vor einem der Warenaufnahmeträger 12 positioniert und der Warenaufnahmeträger 34 (Hubleiste) der Warentransportvorrichtung 7 aus einer Grundstellung (Fig. 11) in die zweite Übergabestellung (Fig. 16) verstellt, wie oben beschrieben.

Danach wird das Warenverlagerungsmittel 42 aus einer Ausgangsstellung seitlich neben dem Warenaufnahmeträger 12 in z-Richtung ausgefahren. Danach wird das Warenverlagerungsmittel 42 in x-Richtung relativ zum Warenaufnahmeträger 12 aus der Grundstellung in die Betätigungsstellung verstellt, in welcher die Mitnahmeorgane 71 die Kleiderbügel 4 hintergreifen. Dabei kann zwischen aufeinander folgenden Mitnahmeorganen 71 nur ein einziger Kleiderbügel 4 (beispielsweise bei Wintermäntel) oder mehrere Kleiderbügel 4 (beispielsweise bei Sommerkleidern) aufgenommen werden.

Wird nun das Warenverlagerungsmittel 42 in z-Richtung in die Ausgangsstellung eingefahren, werden die Waren 2 mittels der Mitnahmeorgane 71 vom Warenaufnahmeträger 12 auf den Warenaufnahmeträger 34 gefördert. Dabei gleiten die Kleiderbügel 4 mit deren Haken entlang dem Warenaufnahmeträger 12 und dem Warenaufnahmeträger 34. Befindet sich die Waren 2 auf dem Warenaufnahmeträger 34 (Hubleiste), wird dieser wieder in die Grundstellung verstellt.

Nachdem die Waren 2 auf der Warentransportvorrichtung 7 übernommen wurden, kann diese in x-Richtung zur Übernahmestation 15 verfahren und vor einem Warenaufnahmeträger 16 positioniert werden.

Danach wird der Warenaufnahmeträger 34 (Hubleiste) der Warentransportvorrichtung 7 aus einer Grundstellung (Fig. 11) in die erste Übergabestellung (Fig. 13) verstellt. In der ersten Übergabestellung verläuft eine horizontale Aufnahmeebene 48 auf dem Warenaufnahmeträger 34 oberhalb einer Übergabeebene (welche der Lagerebene 13 entspricht) und der Warenaufnahmeträger 34 überragt in z-Richtung die Stirnkante 50 des Warenaufnahmeträgers 12 und stützt sich der Warenaufnahmeträger 34 auf dem Warenaufnahmeträger 12, insbesondere dem Auflageschenkel 49 ab (wie sinngemäß an dem Warenaufnahmeträger 12 im Lagerregal 5 in Fig. 13 dargestellt).

Anschließend werden die auszulagernden Waren 2 von der Warentransportvorrichtung 7 an die Übernahmestation 15 übergeben. Dabei werden die Waren 2 mittels dem Warenverlagerungsmittel 42 vom Warenaufnahmeträger 34 (Hubleiste) auf den Warenaufnahmeträger 12 in z-Richtung gefördert.

Wurden die auszulagernden Waren 2 auf einem Warenaufnahmeträger 16 der Übernahmestation 14 übernommen, wird dieser aus einer Übernahmestellung in eine Abgabestellung verstellt. Danach werden die Waren 2 mittels der Warenübergabevorrichtung 24 vom Warenaufnahmeträger 16 auf den Warenaufnahmeträger 23 des Vertikalförderers 18 abgefördert. Danach wird der Hubrahmen 22 mit dem Warenaufnahmeträger 23 vertikal auf Höhe einer Fördertechnikebene verstellt und die Waren 2 vom Warenaufnahmeträger 23 des Vertikalförderers 18 auf den Warenaufnahmeträger 25 der zweiten Fördertechnik 27 gefördert. Die Förderbewegung der Ware 2 zwischen den Warenaufnahmeträgern 23, 25 kann über die Warenübergabevorrichtung 24 erfolgen. Die zweite Fördertechnik 27 fördert die Waren 2 zu einem Kommissionierarbeitsplatz oder einen Packarbeitsplatz.

Wie in den Figuren ersichtlich, können auch beim Auslagervorgang die Waren 2 als Hängewarengruppe 109 gefördert und gelagert werden.

Grundsätzlich ist es auch möglich, dass die Waren 2 vereinzelt gefördert und gelagert werden. Dies ist der Fall, wenn zu einem Kommissioniervorgang / Packvorgang aus einer Hängewarengruppe 109 nur eine einzige Ware 2 erforderlich ist.

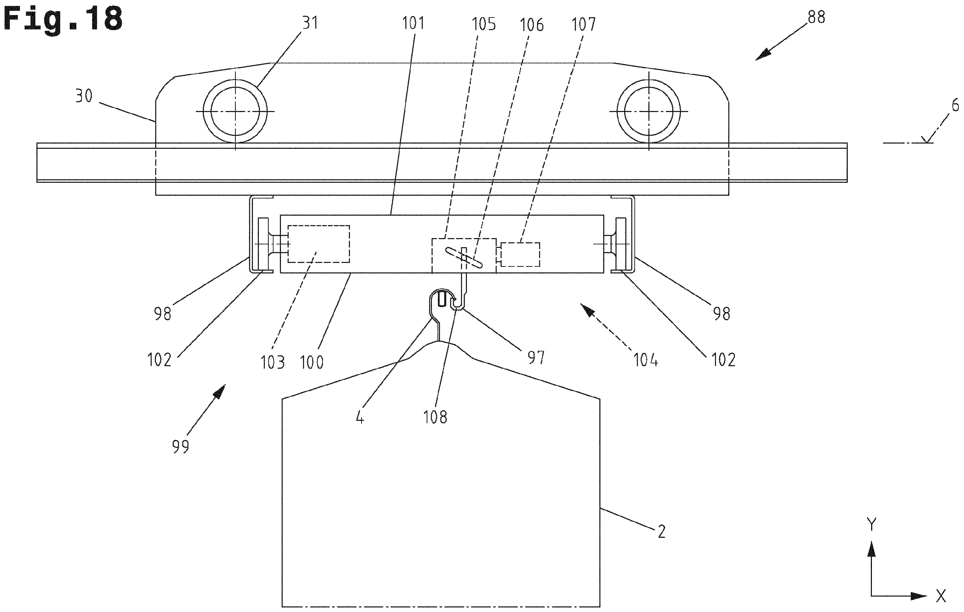

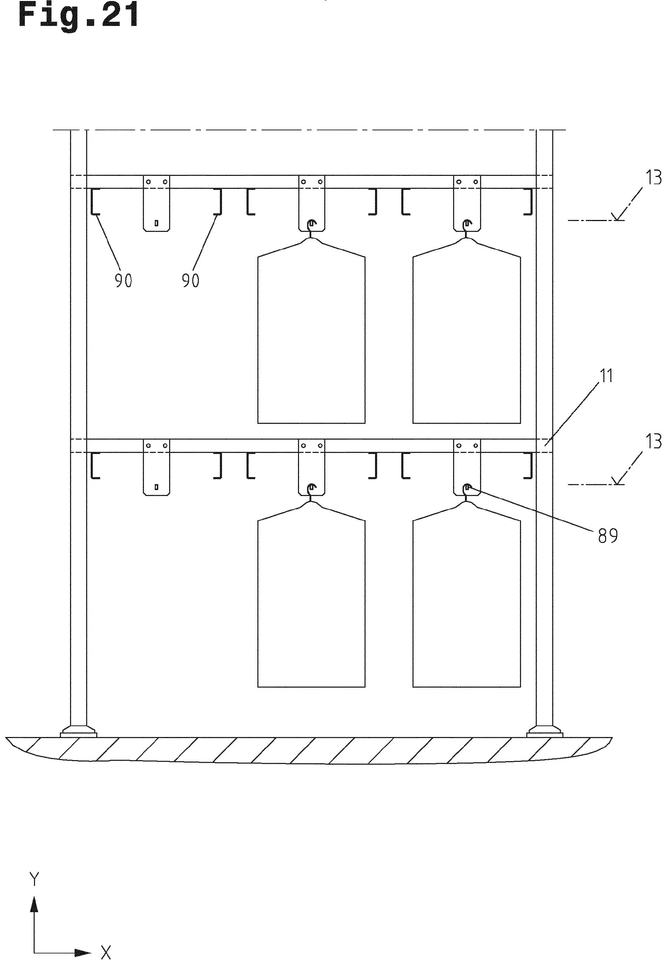

In den gemeinsam beschriebenen Fig. 18 bis 21 ist eine zweite Ausführung eines automatisierten Lagersystems 83 zur Lagerung hängender Waren 2 gezeigt. Ebenso umfasst das Lagersystem 83 ein automatisiertes Warenverteilsystem 84. Das Warenverteilsystem 84 umfasst die nachfolgend beschriebene Übergabe- und Übernahmestation 85, 86 und den/die Vertikalförderer 87.

Das Lagersystem 83 umfasst nach gezeigter Ausführung Lagerregale 5 und in übereinander liegenden Fahrebenen 6 vor den Lagerregalen 5 in einer ersten Richtung (x-Richtung) unabhängig voneinander verfahrbare Warentransportvorrichtungen 88. Die Warentransportvorrichtungen 88 dienen dem Einlagern der Waren 2 in das Lagerregal 5 bzw. Auslagern der Waren 2 aus dem Lagerregal 5. Üblicherweise ist ein solches Lagersystem in jeder Fahrebene 6 mit einer Warentransportvorrichtung 88 versehen. Es können aber auch weniger Warentransportvorrichtungen 88 als Fahrebenen 6 vorhanden sein, wobei dann die Warentransportvorrichtungen 88 über eine nicht dargestellte Hebevorrichtung zwischen den Fahrebenen 6 umgesetzt werden kann.

Die Lagerregale 5 umfassen vertikale vordere Regalsteher 8, vertikale hintere Regalsteher 9, vordere Längstraversen 10, hintere Längstraversen 11 und Warenaufnahmeträger 89. Die vorderen Längstraversen 10 verlaufen übereinander jeweils horizontal in x-Richtung und sind an den vorderen Stehern 8 befestigt, wobei die paarweise einander gegenüberliegenden vorderen Längstraversen 10 jeweils eine Fahrebene 6 ausbilden, entlang welcher die Warentransportvorrichtung 88 bewegt wird. Die vorderen Längstraversen 10 bilden somit je Fahrebene 6 Führungsschienen für die Warentransportvorrichtung 7. Die hinteren Längstraversen 11 verlaufen horizontal in x-Richtung und sind an den hinteren Stehern 9 befestigt. Die Lagerregale 5 umfassen ferner in den übereinander liegenden Lagerebenen 13 horizontal in z-Richtung und mit gegenseitigem Abstand verlaufende Führungsschienen 90, wobei je Warenaufnahmeträger 89 eine erste Führungsschiene 90 und eine zweite Führungsschienen 90 vorgesehen sind.

Die erste Führungsschiene 90 und zweite Führungsschienen 90 sind mit der vorderen Längstraverse 10 und hinteren Längstraverse 11 verbunden. Die erste/zweite Führungsschiene 90 hat einen C-förmigen Querschnitt.

Die Warenaufnahmeträger 89 erstrecken sich in einer Lagerebene 13 horizontal in Tiefenrichtung des Lagerregales 5 (z-Richtung) zwischen den vorderen Längstraversen 10 und hinteren Längstraversen 11, wobei die Waren 2 über die Kleiderbügeln 4 an den Warenaufnahmeträgern 89 aufgehängt werden. Die Warenaufnahmeträger 89 sind ortsfest im Lagerregal 5 angeordnet, beispielsweise an den hinteren Längstraversen 11 vorkragende Tragholme, welche über Montageplatten an den hinteren Längstraversen 11 angeschraubt sind. Jeder Warenaufnahmeträger 89 bildet einen Lagerplatz, wobei an einem Lagerplatz eine Vielzahl von Waren 2 gelagert werden können. Somit bildet jedes Lagerregal 1 in den übereinander liegenden Lagerebenen 13 jeweils nebeneinander eine Vielzahl von Lagerplätzen bzw. Lagerbereichen aus.

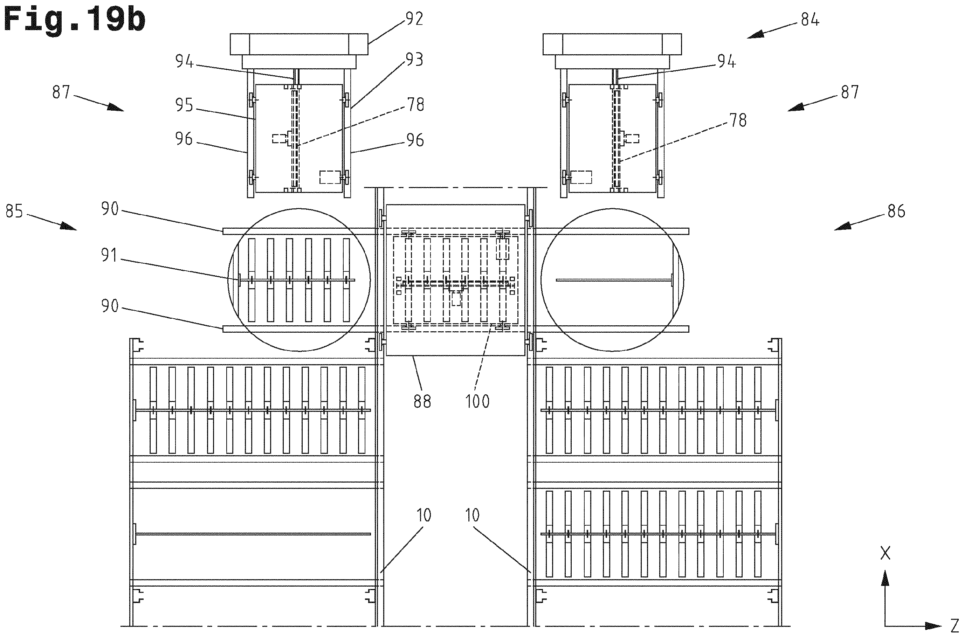

Wie in Fig. 19b schematisch gezeigt, kann das Lagersystem 83 ferner eine Übergabestation 85, entlang welcher die vorderen Längstraversen 10 je Fahrebene 6 verlaufen und an welcher einzulagernde Hängewaren 2 von der Warentransportvorrichtung 88 abgeholt werden, und eine Übernahmestation 86, entlang welcher die vorderen Längstraversen 10 je Fahrebene 6 verlaufen und an welcher auszulagernde Hängewaren 2 von der Warentransportvorrichtung 88 abgegeben werden.

In diesem Ausführungsbeispiel weisen die Übergabestation 85 und Übernahmestation 86 je Lagerebene 13 zumindest einen Warenaufnahmeträger 91 und wiederum Führungsschienen 90 auf. Sind die Übergabestation 85 und Übernahmestation 86 zu beiden Seiten der Warentransportvorrichtung 88 angeordnet, ist je Lagerebene 13 ein Warenaufnahmeträger 91 in der Übergabestation 85 und je Lagerebene 13 ein Warenaufnahmeträger 91 in der Übernahmestation 86 angeordnet.

Die Warenaufnahmeträger 91 und Führungsschienen 90 sind je Lagerebene 13 über einen Stellantrieb (nicht dargestellt) zwischen einer Aufnahmestellung und einer Übergabestellung bzw. Übernahmestellung und Abgabestellung verstellbar. In der Aufnahmestellung kann eine Warenübergabevorrichtung 95 (selbstfahrendes Umlagerfahrzeug) vom Vertikalförderer 87 in die Übergabestation 85 fahren. Danach wird die Ware 2 von einem Warenaufnahmeträger 78 des Umlagerfahrzeuges auf den Warenaufnahmeträger 91 der Übergabestation 85 abgegeben. Der Warenaufnahmeträger 91 verläuft in der Aufnahmestellung parallel zur x-Richtung und in der Übergabestellung parallel zur z-Richtung. In der Abgabestellung kann eine Warenübergabevorrichtung 95 (selbstfahrendes Umlagerfahrzeug) von der Übernahmestation 86 auf den Vertikalförderer 87 fahren. Zuvor wird die Ware 2 vom Warenaufnahmeträger 91 der Übernahmestation 86 auf den Warenaufnahmeträger 78 des Umlagerfahrzeuges übernommen. Der Warenaufnahmeträger 91 verläuft in der Abgabestellung parallel zur x-Richtung und in der Übernahmestellung parallel zur z-Richtung. Der Stellantrieb umfasst eine über einen Antriebsmotor (nicht dargestellt) um eine Vertikalachse drehbare Montageplatte, auf welcher die Führungsschienen 90 und der zumindest eine Warenaufnahmeträger 91 montiert sind.

Der Warenaufnahmeträger 91 der Übergabe- bzw. Übernahmestation 85, 86 ist nach gezeigter Ausführung wie der Warenaufnahmeträger 89 des Lagerregales 5 gestaltet.

Der Vertikalförderer 87 verbindet die Lagerebenen 13 mit zumindest einer Fördertechnikebene und ist an der äußeren Längsseite der Lagerregale 5 angeordnet. Die Vertikalförderer 18 umfassen jeweils einen Führungsrahmen 92, einen heb- und senkbaren Hubrahmen 93, zumindest einen Warenaufnahmeträger 94 und eine Warenübergabevorrichtung 95 (selbstfahrendes Umlagerfahrzeug). Der zumindest eine Warenaufnahmeträger 94 ist am Hubrahmen 93 angeordnet und verläuft parallel zur x-Richtung. Der Warenaufnahmeträger 94 des Vertikalförderer 87 ist nach gezeigter Ausführung wie der Warenaufnahmeträger 89 des Lagerregales 5 gestaltet. Die Ware 2 kann mittels der Warenübergabevorrichtung 95 zwischen der Übergabe- bzw. Übernahmestation 85, 86 und dem Vertikalförderer 87 gefördert werden. Der Hubrahmen 93 ist mit Führungsschienen 96 ausgestattet, sodass die Warenübergabevorrichtung 95 entlang der Führungsschienen 90, 96 zwischen der Übergabe- bzw. Übernahmestation 85, 86 und dem Vertikalförderer 87 verfahrbar ist. Die Warenübergabevorrichtung 95 ist nach der gezeigten Ausführung als selbstfahrendes Umlagerfahrzeug (Einlagerfahrzeug) in der Übergabestation 85 und selbstfahrendes Umlagerfahrzeug (Auslagerfahrzeug) in der Übernahmestation 86 gestaltet, wobei das Umlagerfahrzeug relativ zum Vertikalförderer 87 und Übergabe- bzw. Übernahmestation 85, 86 in der x-Richtung bewegbar sind. Das Umlagerfahrzeug umfasst einen Grundrahmen, Laufrollen, einen Fahrantrieb und den Warenaufnahmeträger 78. Ebenso kann das Umlagerfahrzeug einen Energiespeicher aufweisen, um den Fahrantrieb und eine noch näher zu beschreibende Verstellvorrichtung für den Warenaufnahmeträger 97 sowie eine Steuerelektronik mit Energie zu versorgen. Die Laufrollen sind an den beiden Längsseiten des Grundrahmens angeordnet. Das Umlagerfahrzeug kann auf den Führungsschienen 90, 96 über die Laufrollen zwischen dem Vertikalförderer 87 und der Übergabe- bzw. Übernahmestation 85, 86 verfahren.

Der Warenaufnahmeträger 78 ist am Umlagerfahrzeug angeordnet und über eine Verstellvorrichtung in y-Richtung und z-Richtung (oder nur in y-Richtung) verstellbar am Grundrahmen gelagert. Das Umlagerfahrzeug (Einlagerfahrzeug), welches dem Einlager-Vertikalförderer 87 zugeordnet ist, und das Umlagerfahrzeug (Auslagerfahrzeug), welches dem Auslager-Vertikalförderer 87 zugeordnet ist, ist bevorzugt identisch wie das Ein- und Auslagerfahrzeug, welches der Warentransportvorrichtung 88 zugeordnet ist, gestaltet. Insbesondere kann dieselbe Verstellvorrichtung für den Warenaufnahmeträger verwendet werden. Gleiches gilt für den Fahrantrieb.

Der erste Vertikalförderer 87 schließt an eine erste Fördertechnik zum Antransport von Waren 2 und der zweite Vertikalförderer 87 schließt an eine zweite Fördertechnik zum Abtransport von Waren 2 an. Die erste Fördertechnik und zweite Fördertechnik sind bevorzugt automatisiert betrieben.

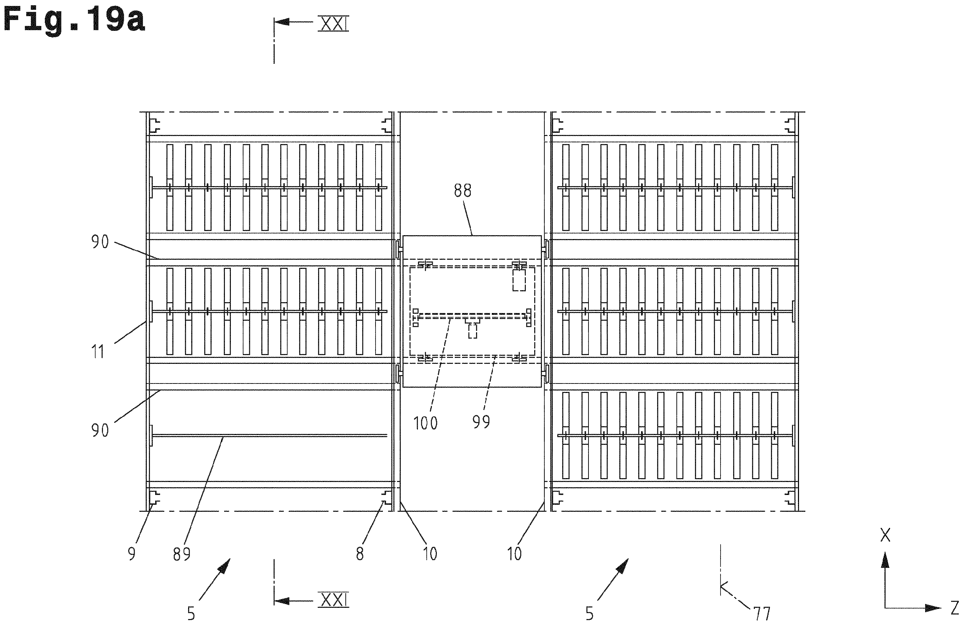

In den Fig. 18 und 19a sind eine der Fahrebenen 6, die Warentransportvorrichtung 88 und Lagerplätze mit je einem Warenaufnahmeträger 89 gezeigt.

Die Warentransportvorrichtung 88 ist nach dieser Ausführung durch ein Einebenenregalbediengerät gebildet und weist einen Grundrahmen 30, Laufräder 31 und einen Fahrantrieb 32 (nicht näher dargestellt) auf. Die Laufräder 31 sind an den beiden Längsseiten des Grundrahmens 30 angeordnet. Der Fahrantrieb 32 kann der oben beschriebenen Ausführung entsprechen. Zusätzlich sind auf einer Unterseite der Warentransportvorrichtung 88 am Grundrahmen 30 befestigte und parallel zur z-Richtung mit gegenseitigem Abstand verlaufende Führungsschienen 98 angeordnet.

Ferner ist der Warentransportvorrichtung 88 eine Ein- und Auslagervorrichtung 99 zugeordnet, welche nach der gezeigten Ausführung ein relativ zur Warentransportvorrichtung 88 in der z-Richtung bewegbares Warenverlagerungsmittel 100 umfasst.

Das Warenverlagerungsmittel 100 ist als selbstfahrendes Ein- und Auslagerfahrzeug gestaltet, welches einen Grundrahmen 101, Laufrollen 102, einen Fahrantrieb und einen Warenaufnahmeträger 97 aufweist. Ebenso kann das Ein- und Auslagerfahrzeug einen Energiespeicher aufweisen, um den Fahrantrieb und eine noch näher zu beschreibende Verstellvorrichtung für den Warenaufnahmeträger 97 sowie eine Steuerelektronik mit Energie zu versorgen. Die Laufrollen 102 sind an den beiden Längsseiten des Grundrahmens 101 angeordnet. Das Ein- und Auslagerfahrzeug kann auf den Führungsschienen 90, 98 über die Laufrollen 102 zwischen der Warentransportvorrichtung 88 und einem Lagerplatz bzw. Lagerbereich im Lagerregal 5 oder zwischen der Warentransportvorrichtung 88 und der Übergabe- bzw. Übernahmestation 85, 86 verfahren werden. Die Laufrollen 102 bilden ein Fahrwerk.

Der Fahrantrieb umfasst nach einer ersten Ausführung zumindest einen elektrischen Antriebsmotor 103 und ein endlos umlaufendes Zugmittel (nicht dargestellt) sowie Antriebswellen (nicht dargestellt). An den Antriebswellen sind endseitig die Laufrollen 102 befestigt. Das Zugmittel ist mit einem Antriebsabschnitt an den Antriebswellen geführt. Auf diese Weise sind die beiden Laufrollen 102 auf der ersten Seite des Ein- und Auslagerfahrzeuges angetrieben. Die Antriebswellen übertragen das Antriebsmoment von der ersten Seite auf die zweite Seite des Ein- und Auslagerfahrzeuges, sodass auch die beiden Laufrollen 102 auf der zweiten Seite angetrieben sind.

Nach einer zweiten Ausführung kann auch nur ein Laufradpaar angetrieben werden, beispielweise das in Fahrtrichtung des Ein- und Auslagerfahrzeuges vordere Laufradpaar oder hintere Laufradpaar.

Wie aus den Fig. 18, 19a ersichtlich, ist der Warenaufnahmeträger 97 am Ein- und Auslagerfahrzeug angeordnet, daher getrennt von der Warentransportvorrichtung 88, und ist über eine Verstellvorrichtung 104 in x-Richtung und y-Richtung verstellbar am Grundrahmen 101 gelagert.

Die Verstellvorrichtung 104 umfasst nach gezeigter Ausführung in z-Richtung mit Abstand angeordnete Lagerplatten 105, an welche jeweils eine Kulissenführung 106 angeordnet ist, und einen Antriebsmotor 107, welcher mit dem Warenaufnahmeträger 97 bewegungsgekoppelt ist. Der Warenaufnahmeträger 97 ist über Führungsmittel an den Kulissenführungen 106 verschiebbar gelagert und kann durch Betätigung des Antriebsmotors 107 der Warenaufnahmeträger 97 in x-Richtung und y-Richtung zwischen einer ersten Endstellung (rechtes Ende der Kulissenführungen 106) und einer zweiten Endstellung (linkes Ende der Kulissenführungen 106) bewegt werden. Fig. 18 zeigt eine Zwischenstellung, in welcher die Kleiderbügel 4 der Waren 2 gerade vom Warenaufnahmeträger 97 ergriffen werden. Wird der Warenaufnahmeträger 97 aus der Zwischenstellung in die zweite Endstellung bewegt, so werden die Kleiderbügel 4 der Waren 2 von dem Warenaufnahmeträger 89 (entweder des Lagerregales 5 oder der Übergabestation 85) abgehoben und auf den Warenaufnahmeträger 97 des Ein- und Auslagerfahrzeuges übernommen.

Wird der Warenaufnahmeträger 97 aus der Zwischenstellung in die erste Endstellung bewegt, so werden die Kleiderbügel 4 der Waren 2 von dem Warenaufnahmeträger 97 des Ein- und Auslagerfahrzeuges auf den Warenaufnahmeträger 89 (entweder des Lagerregales 5 oder der Übernahmestation 86) abgegeben.

In einer anderen nicht gezeigten Ausführung, ist die Verstellvorrichtung 104 derart gestaltet, dass der Warenaufnahmeträger 97 ausschließlich in der y-Richtung zwischen der ersten Stellung und zweiten Stellung verstellbar am Grundrahmen 101 gelagert ist.

Wie in Fig. 18 auch gut ersichtlich, bildet der Warenaufnahmeträger 97 eine in z-Richtung verlaufende Mitnehmerleiste 108 aus, die einen oder mehrere Kleiderbügel 4 ergreifen kann. Die Mitnehmerleiste 108 bildet eine Greifeinheit, mittels welcher die einzelne Ware 2 oder die Waren 2 zwischen dem Lagerplatz bzw. Lagerbereich und der Warentransportvorrichtung 88 oder mittels welcher die einzelne Ware 2 oder die Waren 2 zwischen dem Übergabe- bzw. Übernahmestation 85, 86 und der Warentransportvorrichtung 88 bewegt werden kann.

Eine horizontale Aufnahmeebene auf dem Warenaufnahmeträger 97, insbesondere der Mitnehmerleiste 108, verläuft in der ersten Stellung unterhalb der Lagerebene 13 und in der zweiten Stellung oberhalb der Lagerebene 13.

Im Nachfolgenden wird ein Einlagervorgang und Auslagervorgang beschrieben.

### Einlagervorgang

Die einzulagernde Ware 2 wird über eine (nicht dargestellte) erste Fördertechnik zum Vertikalförderer 87 angefördert. Dort wird die Ware 2 von der ersten Fördertechnik auf das Umlagerfahrzeug (Einlagerfahrzeug), welches mit dem Warenaufnahmeträger versehen ist, gefördert. Danach wird der Hubrahmen 93 mit dem Umlagerfahrzeug vertikal auf Höhe einer der Lagerebenen 13 verstellt. Ferner werden der Warenaufnahmeträger 91 und die Führungsschienen 90 in dieser Lagerebene 13 über einen Stellantrieb (nicht dargestellt) in die Aufnahmestellung verstellt. Danach kann das Umlagerfahrzeug mit der Ware 2 vom Vertikalförderer 87 in die Übergabestation 85 (Puffer) bewegt werden. Dabei verfährt das Umlagerfahrzeug entlang der Führungsschienen 90, 96.

Befindet sich das Umlagerfahrzeug in der Übergabestation 85, wird der Warenaufnahmeträger über die Verstellvorrichtung in y-Richtung und z-Richtung oder ausschließlich in y-Richtung verstellt und die Waren 2 vom Warenaufnahmeträger auf den Warenaufnahmeträger 91 abgegeben. Danach fährt das Umlagerfahrzeug wieder auf den Vertikalförderer 87 zurück und der Warenaufnahmeträger 91 und die Führungsschienen 90 in dieser Lagerebene 13 werden in die Übergabestellung verstellt.

Die Warentransportvorrichtung 88 wird in x-Richtung vor dem Warenaufnahmeträger 91 derart positioniert, dass das Warenverlagerungsmittel 100 (Ein- und Auslagerfahrzeug) entlang der Führungsschienen 90, 98 in z-Richtung zwischen der Warentransportvorrichtung 88 und der Übergabestation 85 verfahren kann. Befindet sich das Warenverlagerungsmittel 100 in der Übergabestation 85, wird der Warenaufnahmeträger 97 über die Verstellvorrichtung 104 in x-Richtung und y-Richtung oder ausschließlich in y-Richtung verstellt und die Waren 2 vom Warenaufnahmeträger 91 auf den Warenaufnahmeträger 97 übernommen.

Danach fährt das Warenverlagerungsmittel 100 (Ein- und Auslagerfahrzeug) wieder auf die Warentransportvorrichtung 88 zurück.

Anschließend wird die Warentransportvorrichtung 88 mit dem Warenverlagerungsmittel 100 (Ein- und Auslagerfahrzeug), welches die Ware 2 auf dem Warenaufnahmeträger 97 mitführt, in x-Richtung bis zu einem definierten Lagerplatz verfahren und vor einem Warenaufnahmeträger 89 positioniert.

Nunmehr kann das Warenverlagerungsmittel 100 (Ein- und Auslagerfahrzeug) entlang der Führungsschienen 90, 98 in z-Richtung zwischen der Warentransportvorrichtung 88 und dem Lagerregal 5 verfahren werden. Befindet sich das Warenverlagerungsmittel 100 im Lagerregal 5, wird der Warenaufnahmeträger 97 über die Verstellvorrichtung 104 in x-Richtung und y-Richtung oder ausschließlich in y-Richtung verstellt und die Waren 2 vom Warenaufnahmeträger 97 auf den Warenaufnahmeträger 89 abgegeben. Danach fährt das Warenverlagerungsmittel 100 (Ein- und Auslagerfahrzeug) wieder auf die Warentransportvorrichtung 88 zurück.

Wie in den Figuren ersichtlich, können beim Einlagervorgang die Waren 2 als Hängewarengruppe 109 oder die Waren 2 vereinzelt gefördert und gelagert werden, wie oben im Detail beschrieben.

Im Unterschied zur ersten Ausführung des Lagersystemes 1 werden die Haken der Kleiderbügel 4 auf den Warenaufnahmeträgern 89, 91, 97 nicht geschoben, sondern von den Warenaufnahmeträgern 89, 91, 97 angehoben bzw. auf die Warenaufnahmeträger 89, 91, 97 abgesenkt.

### Auslagervorgang

Die Warentransportvorrichtung 88 wird hierzu mit dem Warenverlagerungsmittel 100 (Ein- und Auslagerfahrzeug) in x-Richtung verfahren und vor einem der Warenaufnahmeträger 89 positioniert, siehe Fig. 19a.

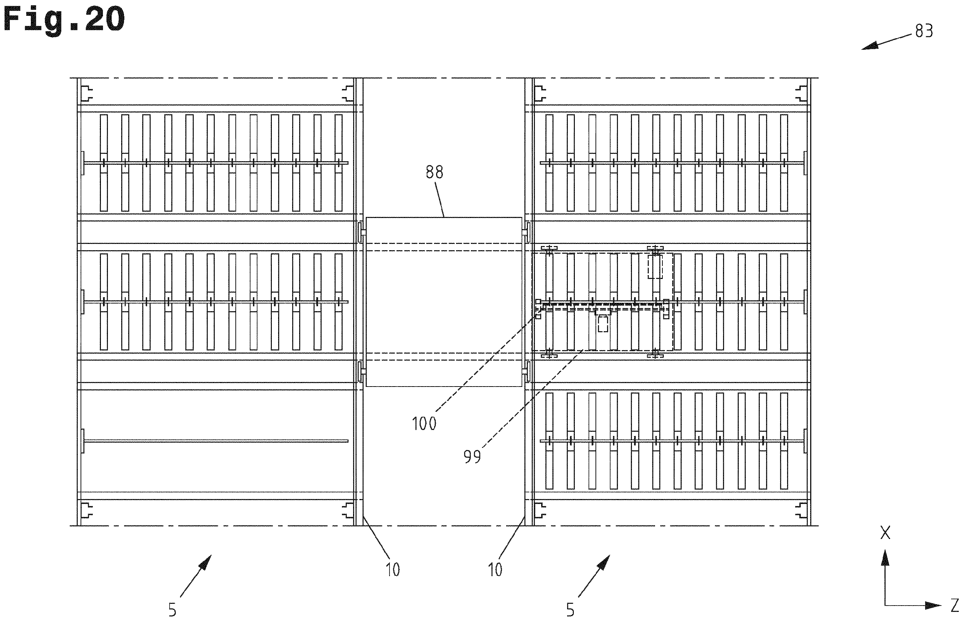

Danach kann das Warenverlagerungsmittel 100 (Ein- und Auslagerfahrzeug) entlang der Führungsschienen 90, 98 in z-Richtung zwischen der Warentransportvorrichtung 88 und dem Lagerregal 5 verfahren werden, wie in Fig. 20 ersichtlich. Befindet sich das Warenverlagerungsmittel 100 im Lagerregal 5, wird der Warenaufnahmeträger 97 über die Verstellvorrichtung 104 in x-Richtung und y-Richtung oder ausschließlich in y-Richtung verstellt und die Waren 2 vom Warenaufnahmeträger 89 abgehoben und auf dem Warenaufnahmeträger 97 übernommen. Danach fährt das Warenverlagerungsmittel 100 (Ein- und Auslagerfahrzeug) wieder auf die Warentransportvorrichtung 88 zurück, siehe Fig. 18, 19a.

Anschließend wird die Warentransportvorrichtung 88 mit dem Warenverlagerungsmittel 100 (Ein- und Auslagerfahrzeug), welches die Ware 2 auf dem Warenaufnahmeträger 97 mitführt, in x-Richtung bis zur Übernahmestation 15 verfahren und vor einem Warenaufnahmeträger 91 positioniert, siehe Fig. 19b.

Anschließend werden die auszulagernden Waren 2 vom Warenverlagerungsmittel 100 (Ein- und Auslagerfahrzeug) an die Übernahmestation 86 übergeben. Dabei wird das Warenverlagerungsmittel 100 (Ein- und Auslagerfahrzeug) entlang der Führungsschienen 90, 98 in z-Richtung zwischen der Warentransportvorrichtung 88 und der Übernahmestation 86 verfahren. Befindet sich das Warenverlagerungsmittel 100 in der Übernahmestation 86, wird der Warenaufnahmeträger 97 über die Verstellvorrichtung 104 in x-Richtung und y-Richtung oder ausschließlich in y-Richtung verstellt und die Waren 2 vom Warenaufnahmeträger 97 auf den Warenaufnahmeträger 94 abgegeben. Danach fährt das Warenverlagerungsmittel 100 (Ein- und Auslagerfahrzeug) wieder auf die Warentransportvorrichtung 88 zurück.

Anschließend werden der Warenaufnahmeträger 91 und die Führungsschienen 96 der Übernahmestation 86 aus einer Übernahmestellung in eine Abgabestellung verstellt. Danach verfährt die Warenübergabevorrichtung 95 (Umlagerfahrzeug) entlang der Führungsschienen 91, 96 vom Vertikalförderer 87 zur Übernahmestation 86. Befindet sich die Warenübergabevorrichtung 95 in der Übernahmestation 86, wird der Warenaufnahmeträger 78 über die Verstellvorrichtung in y-Richtung und z-Richtung oder ausschließlich in y-Richtung verstellt und die Waren 2 vom Warenaufnahmeträger 91 auf den Warenaufnahmeträger 78 übernommen.

Danach kann das Umlagerfahrzeug mit der Ware 2 aus der Übernahmestation 86 auf den Vertikalförderer 87 bewegt werden.

Schließlich werden die Waren 2 mittels der zweiten Fördertechnik 27 (nicht dargestellt) zu einem Kommissionierarbeitsplatz oder einen Packarbeitsplatz gefördert.

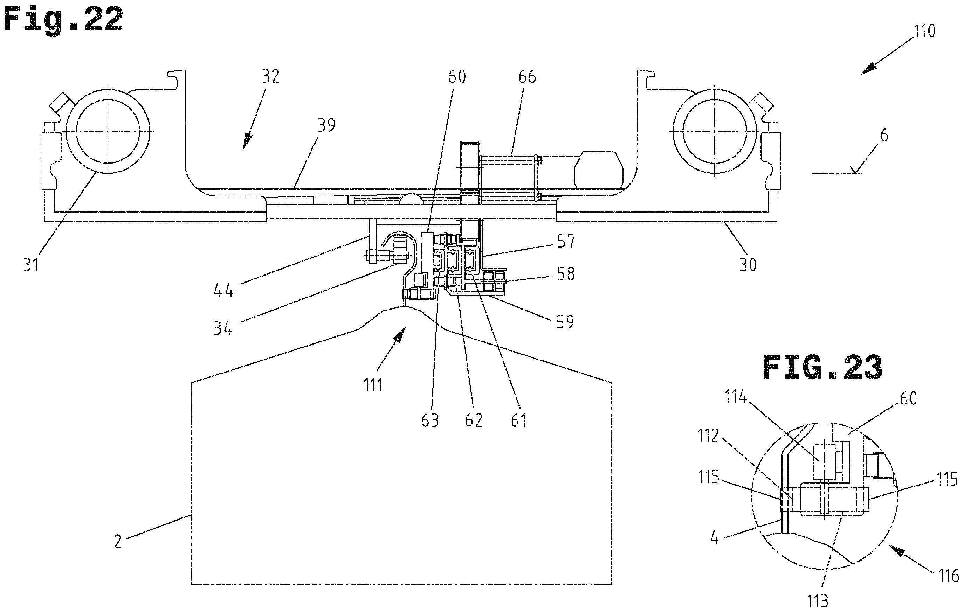

In den Fig. 22 und 23 ist eine Warentransportvorrichtung 110 gezeigt, welche einen Grundrahmen 30, Laufräder 31, einen Fahrantrieb 32, eine Ein- und Auslagervorrichtung 111 und einen Warenaufnahmeträger 34 aufweist.

Die Ein- und Auslagervorrichtung 111 ist nach diesem Ausführungsbeispiel durch eine auf dem Grundrahmen 30 angeordnete und aus einer Ausgangsstellung nach beiden z-Richtungen ausfahrbare Teleskopiereinheit, sodass in die zu beiden Seiten der Warentransportvorrichtung 110 angeordneten Lagerregale 5 Waren 2 eingelagert bzw. Waren 2 ausgelagert werden können. Die Teleskopiereinheit weist einen Tragrahmen 57 und relativ gegenüber dem Tragrahmen 57 horizontal in z-Richtung ein- bzw. ausfahrbare Schienen 58, 59, 60 auf, wie oben beschrieben.

Im Unterschied zur Ausführung gemäß Fig. 2, ist die dritte Schiene 60 der Teleskopiereinheit mit einem Zugmitteltrieb ausgestattet. Der Zugmitteltrieb umfasst ein Zugmittel 112, welches um in den gegenüber liegenden Endbereichen des dritten Schlittens 60 gelagerte Umlenkräder geführt ist. Eines der Umlenkräder 113 ist mit einem Antriebsmotor 114 gekuppelt. Das Zugmittel 112 ist beispielsweise durch einen Zahnriemen, eine Kette oder dgl. gebildet. Der Antriebsmotor 114 ist bevorzugt durch einen Elektromotor gebildet. Das Zugmittel 112 ist mit am Außenumfang vorragenden und mit gleichmäßigem Abständen zueinander angeordneten Mitnahmeorganen 115 versehen. Die Mitnahmeorgane 115 sind mit dem Zugmittel 112 fest verbunden. Dabei kann zwischen aufeinander folgenden Mitnahmeorganen 115 nur ein einziger Kleiderbügel 4 (beispielsweise bei Wintermäntel) oder mehrere Kleiderbügel 4 (beispielsweise bei Sommerkleidern) aufgenommen werden. Die Teleskopiereinheit mit dem Zugmitteltrieb an der dritten Schiene 60 bildet ein Verlagerungsmittel 116. Die Mitnahmeorgane 115 bilden eine Greifeinheit.

Nach dieser Ausführung kann die Verstellvorrichtung für die Verstellung der Ein- und Auslagervorrichtung 111 bzw. die Teleskopiereinheit in x-Richtung entfallen.

Sind Waren 2 von der Warentransportvorrichtung 110 in das Lagerregal 5 einzulagern, wird die Warentransportvorrichtung 110 in x-Richtung derart positioniert, dass der Warenaufnahmeträger 34 und Warenaufnahmeträger 12 fluchtend verlaufen. Danach wird der Warenaufnahmeträger 34 in die erste Übergabestellung (siehe Fig. 13) bewegt, wie oben beschrieben. Während der Ausfahrbewegung des Verlagerungsmittels 116 in z-Richtung wird das Zugmittel 115 nicht angetrieben (blockiert), sodass die Kleiderbügel 4 zwischen den Mitnahmeorganen 115 vom Warenaufnahmeträger 34 auf den Warenaufnahmeträger 12 geschoben werden. Anschließend wird das Verlagerungsmittel 116 in z-Richtung in die Ausgangsstellung eingefahren und dabei das Zugmittel 115 synchron zur Einfahrbewegung angetrieben, sodass die eingelagerte Ware 2 am Warenaufnahmeträger 12 verbleiben.

Sind Waren 2 von der Warentransportvorrichtung 110 in das Lagerregal 5 auszulagern, wird die Warentransportvorrichtung 110 in x-Richtung derart positioniert, dass der Warenaufnahmeträger 34 und Warenaufnahmeträger 12 fluchtend verlaufen. Danach wird der Warenaufnahmeträger 34 in die zweite Übergabestellung (siehe Fig. 16) bewegt, wie oben beschrieben. Sodann wird mit der Verstellung des Verlagerungsmittels 116 in z-Richtung das Zugmittel 115 gegenläufig und synchron zur Ausfahrbewegung angetrieben, sodass die Kleiderbügel 4 zwischen den Mitnahmeorganen 115 aufgenommen werden. Wurde das Verlagerungsmittel 116 ausgefahren, wird das Zugmittel 115 angehalten. Anschließend wird das Verlagerungsmittel 116 in z-Richtung in die Ausgangsstellung eingefahren und dabei das Zugmittel 115 nicht angetrieben (blockiert), sodass die auszulagernde Ware 2 mittels der Mitnahmeorgane 115 vom Warenaufnahmeträger 12 auf den Warenaufnahmeträger 34 geschoben werden. Die Mitnahmeorgane 115 hintergreifen dabei die Kleiderbügel 4. Auf gleiche Weise erfolgt die Übernahme der Waren 2 von der Übergabestation 14 und Übergabe der Waren 2 an die Übernahmestation 15.

Abschließend sei noch erwähnt, dass bei den oben beschriebenen Ausführungen anstatt der Einebenenregalbediengeräte als Warentransportvorrichtung 7; 88 auch (Mehrebenen)Regalbediengeräte eingesetzt werden können, welche in x-Richtung entlang von Führungsschienen verfahrbar sind und einen sich über sämtliche Lagerebenen 13 erstreckenden Mast aufweisen, auf welchem ein heb- und senkbarer Grundrahmen gelagert ist. Auf diesem Grundrahmen ist die Ein- und Auslagervorrichtung 33 (Fig. 2) oder Ein- und Auslagervorrichtung 99 (Fig. 18) oder Ein- und Auslagervorrichtung 111 (Fig. 22) angeordnet. Ein solches Regalbediengerät ist beispielweise aus der EP 2 419 365 B1 bekannt. Nach einer anderen Ausführung sind in mehreren Fahrebenen übereinander derartige Regalbediengeräte vorgesehen, wobei jedes dieser Regalbediengeräte mehrere Lagerebenen 13 bedient.

Auch sei noch hingewiesen, dass die oben beschriebenen Übergabe- und Übernahmestationen 14, 15; 85, 86 nicht zwingenderweise getrennt und zu beiden Seiten der Warentransportvorrichtung 7; 88; 110 angeordnet sein müssen, sondern als kombinierte Übergabe- und Übernahmestation 14, 15; 85, 86, welche als Puffer für einzulagernde Waren 2 bzw. Warengruppen 109 als auch für auszulagernde Waren 2 bzw. Warengruppen dienen. Die kombinierte Übergabe- und Übernahmestation ist auf einer Seite der Warentransportvorrichtung 7; 88; 110 angeordnet. In diesem Fall kann die Übergabe- und Übernahmestation in den übereinander liegenden Lagerebenen 13 jeweils zwei Warenaufnahmeträger 16; 91 aufweisen, wobei ein erster Warenaufnahmeträger 16; 91 für die einzulagernde Waren 2 bzw. Warengruppen 109 und ein zweiter Warenaufnahmeträger 16; 91 für die auszulagernde Waren 2 bzw. Warengruppen 109 dienen. Die Übergabe- und Übernahmestationen 14, 15; 85, 86 können jeweils auch nur auf einer Höhenebene einen ersten Warenaufnahmeträger 16; 91 für die einzulagernde Waren 2 bzw. Warengruppen 109 und einen zweiten Warenaufnahmeträger 16; 91 für die auszulagernde Waren 2 bzw. Warengruppen 109 aufweisen. Anderenfalls kann die kombinierte Übergabe- und Übernahmestation 14, 15; 85, 86 auch nur auf einer Höhenebene einen ersten Warenaufnahmeträger 16; 91 für die einzulagernde Waren 2 bzw. Warengruppen 109 und einen zweiten Warenaufnahmeträger 16; 91 für die auszulagernde Waren 2 bzw. Warengruppen 109 aufweisen.

Nach den oben beschriebenen Ausführungen definieren die Waren 2 auf den Warenaufnahmeträgern 12, 16, 34, 89, 91, 97 jeweils eine Hängeebene 77, welche in einer senkrechten Richtung zur Längserstreckung der Warenaufnahmeträger 12, 16, 34, 89, 91, 97 verlaufen, daher verläuft die Hängeebene 77 parallel zur x-Richtung. Eine Bewegungsrichtung (wie beispielweise als Doppelpfeil in Fig. 1 eingetragen) für die Ware 2 auf der Übernahme- und/oder Übergabebewegung zwischen den Warenaufnahmeträgern 12, 16, 34, 89, 91, 97 verläuft parallel zur z-Richtung.

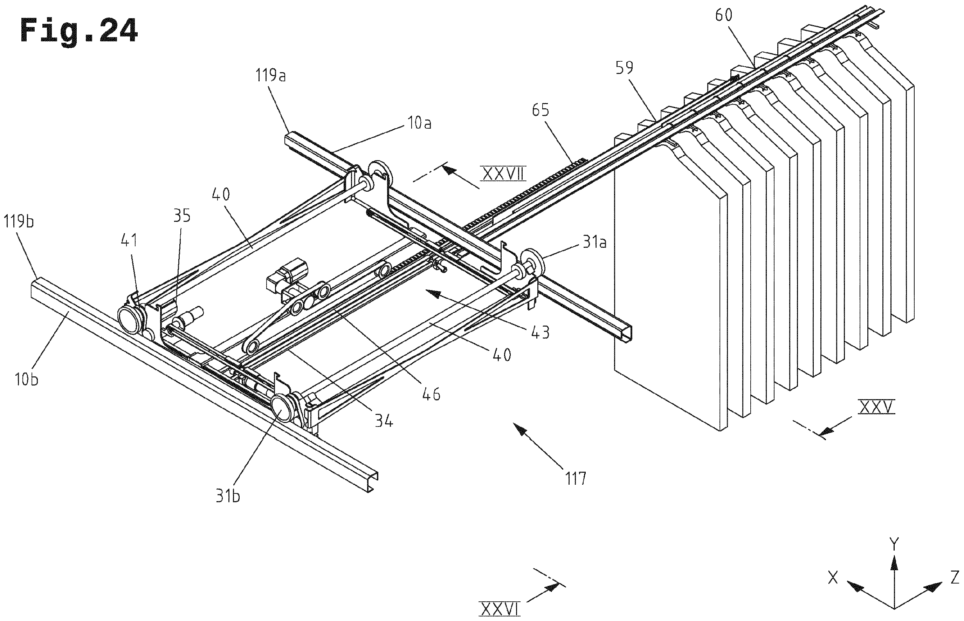

In den Fig. 24 bis 29 ist eine mögliche Ausführung einer Stückguttransportvorrichtung bzw. Warentransportvorrichtung 117 zum Einlagern von Stückgütern in das Lagerregal 5 (Fig. 1) und Auslagern von Stückgütern aus dem Lagerregal 5 (Fig. 1) in einem Lagersystem 1, wie oben beschrieben. Beispielweise sind die Stückgüter durch Hängewaren 2 gebildet.

Wie oben im Detail beschrieben, umfasst das Lagersystem 1 die Lagerregale 5 und in den übereinander liegenden (horizontalen) Fahrebenen 6 vor den Lagerregalen 5 in einer ersten Richtung (x-Richtung) unabhängig voneinander verfahrbare Warentransportvorrichtungen 117. Grundsätzlich kann das Lagersystem 1 aber auch weniger Warentransportvorrichtungen 117 als Fahrebenen 6 umfassen, wie ebenso oben im Detail beschrieben. Je Fahrebene 6 sind eine erste Führungsschiene und eine zweite Führungsschiene vorgesehen, entlang welcher eine Warentransportvorrichtung 117 in der ersten Richtung (x-Richtung) bewegbar ist. Die Führungsschienen sind beispielweise durch die vorderen Längstraversen 10 gebildet.

Es sei auch nochmals hingewiesen, dass das Lagersystem auch nur ein Lagerregal 5 umfassen kann, wie nicht näher dargestellt. In diesem Fall ist auch nur eine der nachfolgend beschriebenen Anschlagvorrichtungen, beispielweise die Anschlagvorrichtung 125a, wenn das Lagerregal 5 auf der rechten Seite der Warentransportvorrichtung 117 aufgestellt ist, oder die Anschlagvorrichtung 125b, wenn das Lagerregal 5 auf der linken Seite der Warentransportvorrichtung 117 aufgestellt ist. Jedoch sind wiederum die erste Führungsschiene und die zweite Führungsschiene je Fahrebene 6 vorgesehen. Dabei werden die ersten Führungsschienen beispielweise am Lagerregal 5 und die zweiten Führungsschienen an vertikalen Stehern montiert. Sind hingegen zu beiden der Warentransportvorrichtung 117 Lagerregale 5 angeordnet, so sind die erste Führungsschiene und die zweite Führungsschiene je Fahrebene 6 an den Lagerregalen 5 (beispielweise den vorderen Regalstehern 8) befestigt.

Die Warentransportvorrichtung 117, wie sie oben im Detail beschrieben ist, ist nach dieser Ausführung durch ein Einebenenregalbediengerät gebildet und weist einen Grundrahmen 30, Laufräder 31a, 31b, einen Fahrantrieb 32, eine Ein- und Auslagervorrichtung 33 und einen Warenaufnahmeträger 34 auf. Insbesondere wird auf die Beschreibung für den Grundrahmen 30, Fahrantrieb 32, die Ein- und Auslagervorrichtung 33 und den Warenaufnahmeträger 34 Bezug genommen.

Der Grundrahmen 30 bildet einander gegenüberliegende Längsseiten aus, wovon eine der Längsseiten eine erste Längsseite 118a und eine der Längsseiten eine zweite Längsseite 118b bildet. Die Laufräder sind an den beiden Längsseiten 118a, 118b des Grundrahmens 30 angeordnet, wovon die Laufräder auf der ersten Längsseite 118a erste Laufräder 31a und die Laufräder auf der zweiten Längsseite 118b zweite Laufräder 31b bilden.

Die Ein- und Auslagervorrichtung, beispielweise die Ein- und Auslagervorrichtung 33 gemäß der oben beschriebenen ersten Ausführung umfasst das relativ zum Grundrahmen 30 in einer zweiten Richtung (z-Richtung) senkrecht zur ersten Richtung (x-Richtung) bewegbare Warenverlagerungsmittel 42, um die Stückgüter an hintereinander liegenden Tiefenpositionen in das Lagerregal 5 einzulagern bzw. die Stückgüter von hintereinander liegenden Tiefenpositionen aus dem Lagerregal 5 auszulagern. Die Ein- und Auslagervorrichtung 33, wie aus den Fig. 4, 6 und 14 ersichtlich und oben konkret beschrieben, ist durch eine auf dem Grundrahmen 30 angeordnete und aus einer Ausgangsstellung nach beiden z-Richtungen ausfahrbare Teleskopiereinheit gebildet, sodass in die zu beiden Seiten der Warentransportvorrichtung 117 angeordneten Lagerregale 5 die Stückgüter eingelagert bzw. Stückgüter ausgelagert werden können. Die Teleskopiereinheit weist einen Tragrahmen 57 und relativ gegenüber dem Tragrahmen 57 horizontal in z-Richtung ein- bzw. ausfahrbare Schienen 58, 59, 60 auf. Die Teleskopiereinheit bildet das Warenverlagerungsmittel 42.

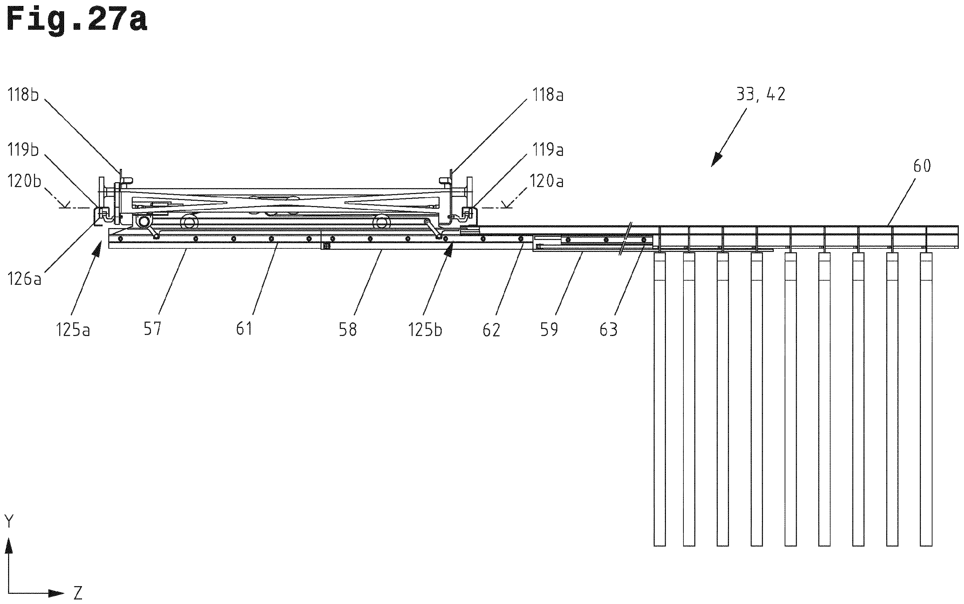

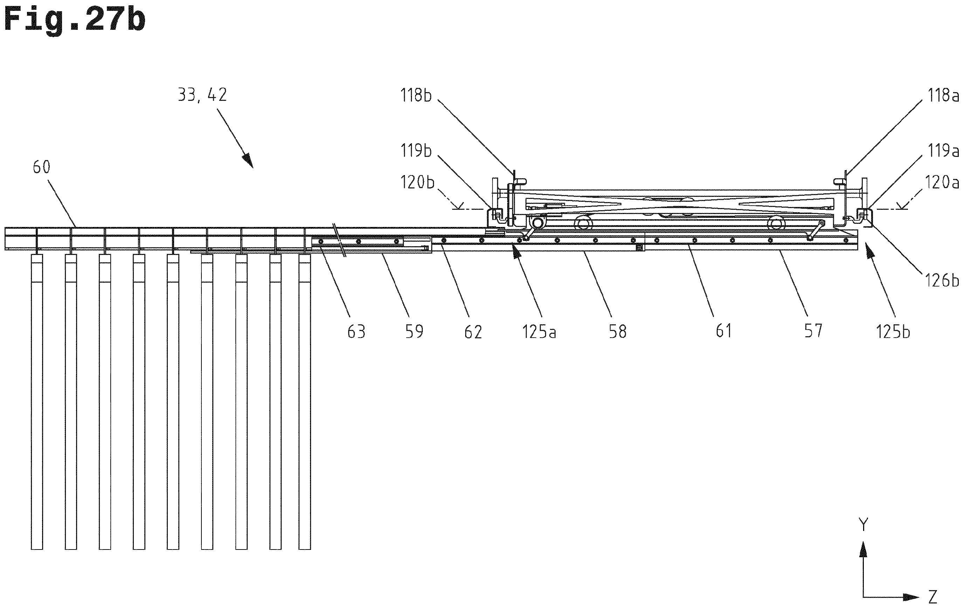

Wie in den Fig. 24, 27a, 27b ersichtlich, sind die ersten Laufräder 31a am Grundrahmen 30 (um horizontale Achsen) an der ersten Längsseite 118a drehbar gelagert und liegen auf einer ersten Führung 119a abrollbar auf, und sind die zweiten Laufräder 31b am Grundrahmen 30 (um horizontale Achsen) an der zweiten Längsseite 118b drehbar gelagert und liegen auf einer zweiten Führung 119b abrollbar auf. Die erste Führung 119a ist an der ersten Führungsschiene 10a ausgebildet und verläuft parallel zur Längsrichtung des ersten Lagerregales 5 und in einer parallel zur Fahrebene 6 verlaufenden Führungsebene. Nach gezeigter Ausführung ist die Führungsschiene 10a durch die vordere Längstraverse gebildet. Zusätzlich ist an der ersten Führungsschiene 10a eine Anschlagfläche 120a ausgebildet. Die Anschlagfläche 120a verläuft parallel zur Fahrebene 6 bzw. Führungsebene. Die zweite Führung 119b ist an der zweiten Führungsschiene 10b ausgebildet und verläuft parallel zur Längsrichtung des zweiten Lagerregales 5 und in einer parallel zur Fahrebene 6 verlaufenden Führungsebene. Nach gezeigter Ausführung ist die Führungsschiene 10b durch die vordere Längstraverse gebildet. Zusätzlich ist an der zweiten Führungsschiene 10b eine Anschlagfläche 120b ausgebildet. Die Anschlagfläche 120b verläuft parallel zur Fahrebene 6 bzw. Führungsebene.

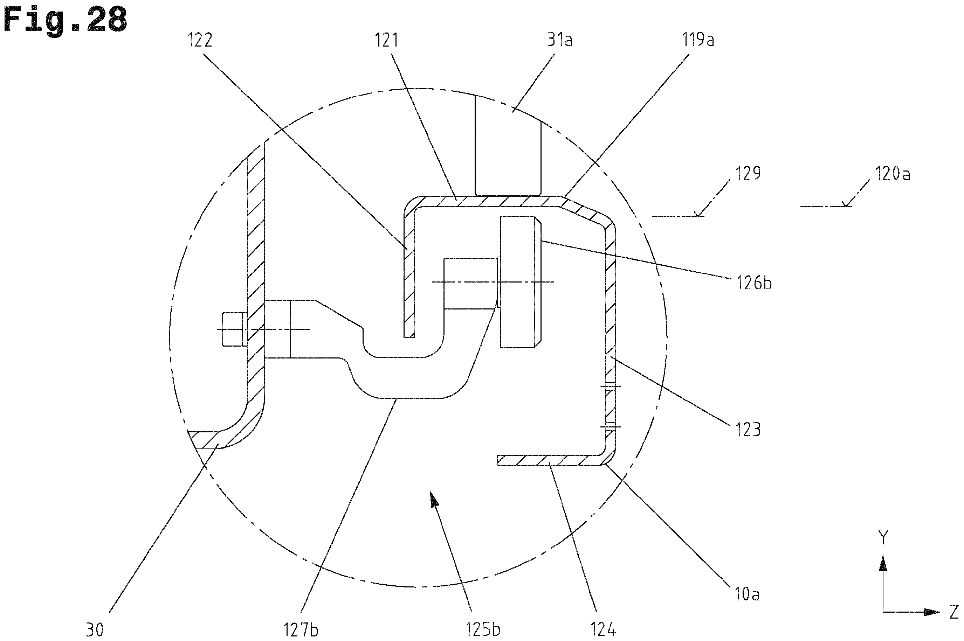

Im Detail umfasst die erste / zweite Führungsschiene 10a, 10b einen ersten Führungsschenkel 121, einen zweiten Führungsschenkel 122 und einen Montageschenkel 123, siehe Fig. 28 anhand der ersten Führungsschiene 10a. Gegebenenfalls kann auch ein Profilschenkel 124 vorgesehen werden. Der Montageschenkel 123 ist durch einen vertikalen unteren Profilschenkel und einen von diesem in Richtung zum ersten Führungsschenkel 121 abgewinkelten oberen Profilschenkel gebildet. Der erste Führungsschenkel 121 bildet auf einer den Laufrädern 31a, 31b zugewandten Oberseite die horizontale Führung 119a, 119b bzw. horizontale Lauffläche und auf einer den Laufrädern 31a, 31b abgewandten Unterseite die Anschlagfläche 120a, 120b aus. Der zweite Führungsschenkel 122 bildet einander gegenüberliegende vertikale Führungsflächen aus, an welchen Führungsräder einer nicht dargestellten Führungsvorrichtung abrollbar anliegen, wie beispielsweise in der AT 516 410 B1 beschrieben. Der Montageschenkel bildet in Längsrichtung der ersten / zweiten Führungsschiene 10a, 10b in einem Rasterabstand angeordnete Montagebohrungen zur Befestigung der ersten / zweiten Führungsschiene 10a, 10b an dem ersten / zweiten Lagerregal 5 bzw. den vorderen Regalstehern 8 aus.

Es sei darauf hingewiesen, dass die erste / zweite Führungsschiene 10a, 10b auch eine andere Querschnittsform ausbilden kann. Im Sinne der Erfindung ist es vorteilhaft wenn an der Führungsschiene 10a, 10b die Führung 119a, 119b und die Anschlagfläche 120a, 120b vorgesehen sind. Die Anschlagfläche 120a, 120b ist von der Führung 119a, 119b örtlich getrennt und verläuft in der ersten Richtung (x-Richtung) parallel zur Führungsebene bzw. Fahrebene 6.

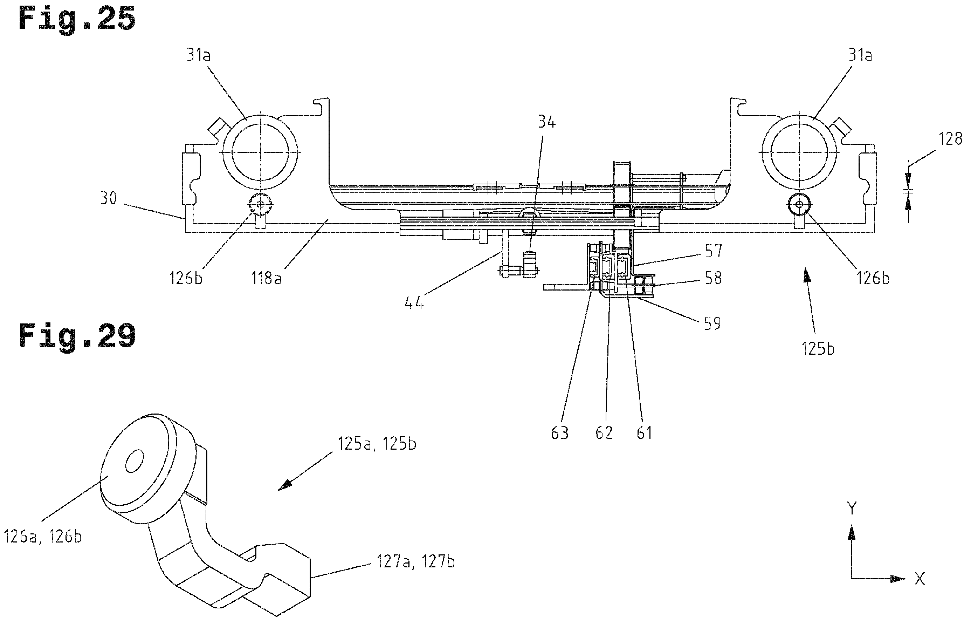

Wie in den Fig. 25 bis 29 ersichtlich, umfasst die Warentransportvorrichtung 117 im Unterschied zu den oben beschriebenen Ausführungen (gemäß der Fig. 4 und 22) zusätzlich Anschlagvorrichtungen 125a, 125b.

Eine erste Anschlagvorrichtungen 125a ist am Grundrahmen 30 auf einer der ersten Längsseite 118a gegenüberliegenden zweiten Längsseite 118b angeordnet. Die erste Anschlagvorrichtungen 125a umfasst zumindest ein Anschlagelement 126a, welches mit der Anschlagfläche 120b an der zweiten Führungsschiene 10b derart zusammenwirkt, dass eine Kippbewegung der Warentransportvorrichtung 117 um die auf der ersten Längsseite 118a angeordneten Laufräder 31a verhindert oder begrenzt wird, wenn das Warenverlagerungsmittel 42 (gemäß Fig. 4) oder das Warenverlagerungsmittel 116 (gemäß Fig. 22) in der zweiten Richtung (positive z-Richtung) ausgefahren wird und an der ersten Längsseite 118a vorragt, wie in Fig. 27a ersichtlich.

Eine zweite Anschlagvorrichtung 125b ist am Grundrahmen 30 auf einer der zweiten Längsseite 118b gegenüberliegenden ersten Längsseite 118a angeordnet. Die zweite Anschlagvorrichtung 125b umfasst zumindest ein Anschlagelement 126b, welches mit der Anschlagfläche 120a an der ersten Führungsschiene 10a derart zusammenwirkt, dass eine Kippbewegung der Warentransportvorrichtung 117 um die auf der zweiten Längsseite 118b angeordneten Laufräder 31b verhindert oder begrenzt wird, wenn das Warenverlagerungsmittel 42 (gemäß Fig. 4) oder das Warenverlagerungsmittel 116 (gemäß Fig. 22) in der zweiten Richtung (negative z-Richtung) ausgefahren wird und an der zweiten Längsseite 118b vorragt, wie in Fig. 27b ersichtlich.

In Fig. 28 ist eine der Anschlagvorrichtungen, nämlich die zweite Anschlagvorrichtung 125b im Detail dargestellt. In Fig. 29 sind die Bezugszeichen sowohl für die erste Anschlagvorrichtung 125a als auch die zweite Anschlagvorrichtung 125b eingetragen. Die erste Anschlagvorrichtung 125a und/oder zweite Anschlagvorrichtung 125b umfasst einen am Grundrahmen 30 montierten Tragrahmen 127a, 127b und das Anschlagelement 126a, 126b ist als Anschlagrad gestaltet. Das Anschlagrad ist am Tragrahmen 127a, 127b gelagert und bildet eine Drehachse aus, die parallel zu einer jeweiligen Drehachse der Laufräder 31a, 31b verläuft.

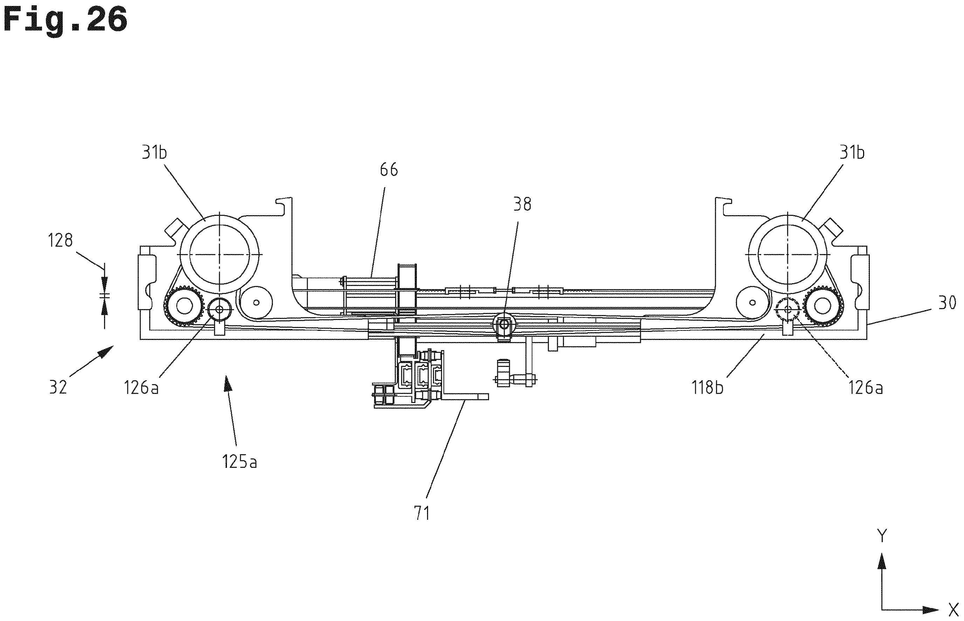

Das Anschlagrad der ersten Anschlagvorrichtung 125a ist einem der Laufräder 31b, welche auf der zweiten Längsseite 118b angeordnet sind, zugeordnet, wobei das Anschlagrad und dieses Laufrad 31b mit gegenseitigem Abstand 128 übereinander angeordnet sind, wie in Fig. 26 eingetragen. Das Anschlagrad der zweiten Anschlagvorrichtung 125b ist einem der Laufräder 31a, welche auf der ersten Längsseite 118a angeordnet sind, zugeordnet, wobei das Anschlagrad und dieses Laufrad 31a mit gegenseitigem Abstand 128 übereinander angeordnet sind, wie in Fig. 25 eingetragen.

Wie in Fig. 25 in strichlierten Linien eingetragen, kann die zweite Anschlagvorrichtung 125b ein zusätzliches Anschlagelement 126b, welches mit der Anschlagfläche 120a an der ersten Führungsschiene 10a (Fig. 27b) derart zusammenwirkt, dass eine Kippbewegung der Warentransportvorrichtung 117 um die auf der zweiten Längsseite 118b angeordneten Laufräder 31b verhindert oder begrenzt wird, wenn das Warenverlagerungsmittel 42 (gemäß Fig. 4) oder das Warenverlagerungsmittel 116 (gemäß Fig. 22) in der zweiten Richtung (negative z-Richtung) ausgefahren wird und an der zweiten Längsseite 118b vorragt. Das zusätzliche Anschlagelement 126b ist als Anschlagrad gestaltet. Das Anschlagrad ist am Tragrahmen 127b gelagert und bildet eine Drehachse aus, die parallel zu einer jeweiligen Drehachse der Laufräder 31a verläuft. Das Anschlagrad ist dem anderen der Laufräder 31a, welche auf der ersten Längsseite 118a angeordnet sind, zugeordnet, wobei das Anschlagrad und dieses Laufrad 31a mit gegenseitigem Abstand 128 übereinander angeordnet sind.

Wie in Fig. 26 in strichlierten Linien eingetragen, kann die erste Anschlagvorrichtung 125a ein zusätzliches Anschlagelement 126a, welches mit der Anschlagfläche 120b an der zweiten Führungsschiene 10b (Fig. 27a) derart zusammenwirkt, dass eine Kippbewegung der Warentransportvorrichtung 117 um die auf der ersten Längsseite 118a angeordneten Laufräder 31a verhindert oder begrenzt wird, wenn das Warenverlagerungsmittel 42 (gemäß Fig. 4) oder das Warenverlagerungsmittel 116 (gemäß Fig. 22) in der zweiten Richtung (positive z-Richtung) ausgefahren wird und an der ersten Längsseite 118a vorragt. Das zusätzliche Anschlagelement 126a ist als Anschlagrad gestaltet. Das Anschlagrad ist am Tragrahmen 127a gelagert und bildet eine Drehachse aus, die parallel zu einer jeweiligen Drehachse der Laufräder 31b verläuft. Das Anschlagrad ist dem anderen der Laufräder 31b, welche auf der zweiten Längsseite 118b angeordnet sind, zugeordnet, wobei das Anschlagrad und dieses Laufrad 31b mit gegenseitigem Abstand 128 übereinander angeordnet sind.

Das Anschlagrad umfasst bevorzugt einen elastisch nachgiebigen Laufbelag, insbesondere aus Kunststoff, wie Polyurethan. Der Laufbelag ist aufgrund seiner elastischen Eigenschaft grundsätzlich dazu geeignet Unebenheiten in begrenztem Ausmaß auszugleichen, jedoch darf der Laufbelag nicht zu weich sein, da ansonsten der Verschleiß zu hoch wäre.

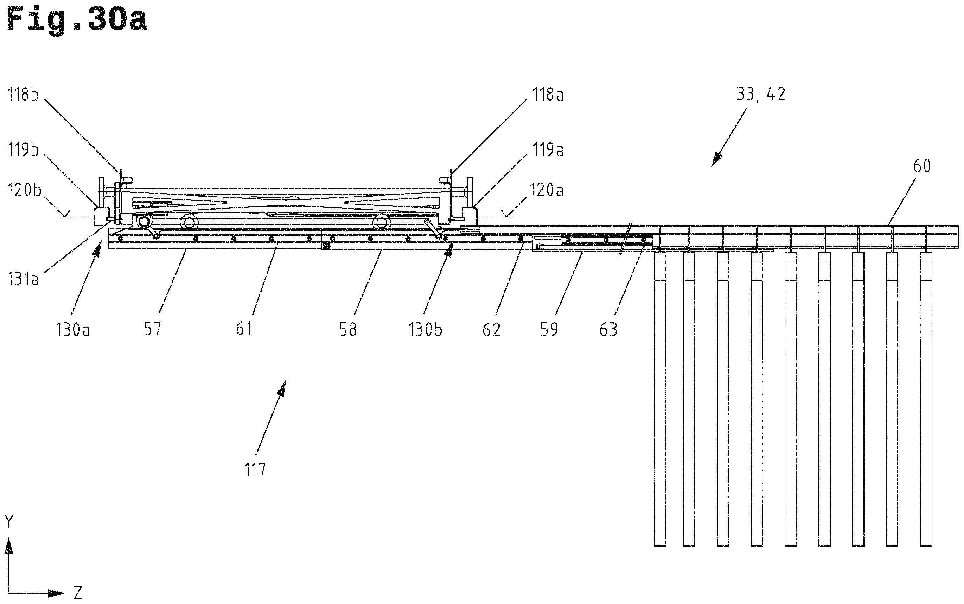

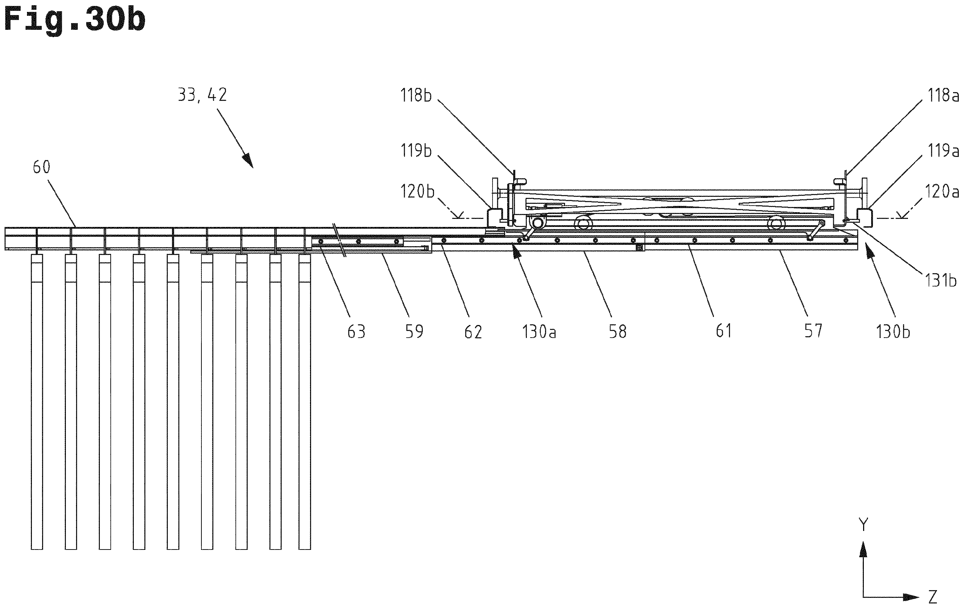

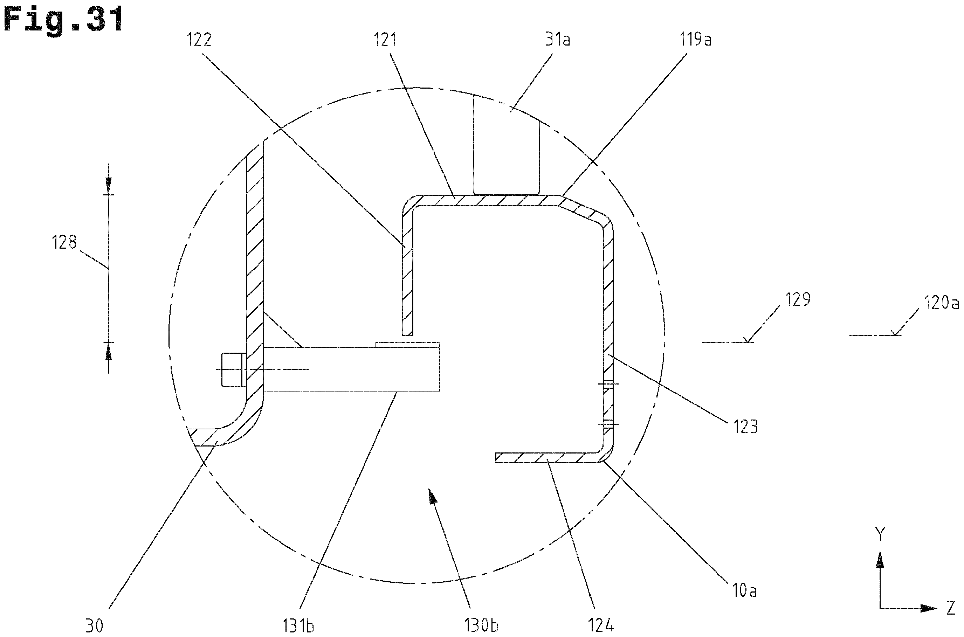

In den Fig. 30a, 30b und 31 ist eine zweite Ausführung für Anschlagvorrichtungen 130a, 130b gezeigt, wie sie an der oben beschriebenen Stückguttransportvorrichtung bzw. Warentransportvorrichtung 117 verwendet werden können.

Eine erste Anschlagvorrichtung 130a ist am Grundrahmen 30 auf einer der ersten Längsseite 118a gegenüberliegenden zweiten Längsseite 118b angeordnet. Die erste Anschlagvorrichtung 130a umfasst zumindest ein Anschlagelement 131a, welches mit der Anschlagfläche 120b an der zweiten Führungsschiene 10b derart zusammenwirkt, dass eine Kippbewegung der Warentransportvorrichtung 117 um die auf der ersten Längsseite 118a angeordneten Laufräder 31a verhindert oder begrenzt wird, wenn das Warenverlagerungsmittel 42 (gemäß Fig. 4) oder das Warenverlagerungsmittel 116 (gemäß Fig. 22) in der zweiten Richtung (positive z-Richtung) ausgefahren wird und an der ersten Längsseite 118a vorragt, wie in Fig. 30a ersichtlich.

Eine zweite Anschlagvorrichtung 130b ist am Grundrahmen 30 auf einer der zweiten Längsseite 118b gegenüberliegenden ersten Längsseite 118a angeordnet. Die zweite Anschlagvorrichtung 130b umfasst zumindest ein Anschlagelement 131b, welches mit der Anschlagfläche 120a an der ersten Führungsschiene 10a derart zusammenwirkt, dass eine Kippbewegung der Warentransportvorrichtung 117 um die auf der zweiten Längsseite 118b angeordneten Laufräder 31b verhindert oder begrenzt wird, wenn das Warenverlagerungsmittel 42 (gemäß Fig. 4) oder das Warenverlagerungsmittel 116 (gemäß Fig. 22) in der zweiten Richtung (negative z-Richtung) ausgefahren wird und an der zweiten Längsseite 118b vorragt, wie in Fig. 30b ersichtlich.

In Fig. 31 ist eine der Anschlagvorrichtungen, nämlich die zweite Anschlagvorrichtung 130b im Detail dargestellt. Die erste Anschlagvorrichtung 130a und/oder zweite Anschlagvorrichtung 130b umfasst das am Grundrahmen 30 montierte Anschlagelement 131a, 131b, welches als Anschlagbügel gestaltet ist. Wie in dieser Fig. ersichtlich, ist die Anschlagfläche 120a (120b) am zweiten Führungsschenkel 122 ausgebildet. Die Anschlagfläche 120a (120b) ist von der Führung 119a (119b) örtlich getrennt und verläuft in der ersten Richtung (x-Richtung) parallel zur Führungsebene bzw. Fahrebene 6.

Wie nicht näher dargestellt, kann die erste Anschlagvorrichtung 130a ein zusätzliches Anschlagelement 131a an der zweiten Längsseite 118b und/oder die zweite Anschlagvorrichtung 130b ein zusätzliches Anschlagelement 131b an der ersten Längsseite 118a umfassen.

Der Anschlagbügel der ersten Anschlagvorrichtung 130a ist einem der Laufräder 31b, welche auf der zweiten Längsseite 118b angeordnet sind, zugeordnet, wobei der Anschlagbügel und dieses Laufrad 31b mit gegenseitigem Abstand 128 übereinander angeordnet sind. Der Anschlagbügel der zweiten Anschlagvorrichtung 130b ist einem der Laufräder 31a, welche auf der ersten Längsseite 118a angeordnet sind, zugeordnet, wobei der Anschlagbügel und dieses Laufrad 31a mit gegenseitigem Abstand 128 übereinander angeordnet sind.

Wie in den Fig. 28 und 31 ersichtlich, kann das Anschlagelement 126a, 126b; 131a, 131b (und gegebenenfalls das zusätzliche Anschlagelement 126a, 126b; 131a, 131b) mit seiner Eingriffsfläche 129 in einem geringem Abstand zur Anschlagfläche 120a, 120b angeordnet ist. Der Abstand beträgt beispielsweise bis zu 3 mm. Mit anderen Worten, liegt das Anschlagelement 126a, 126b; 131a, 131b (und gegebenenfalls das zusätzliche Anschlagelement 126a, 126b; 131a, 131b) während der Bewegungsfahrt der Warentransportvorrichtung 117 in x-Richtung nicht gegen die Anschlagfläche 120a, 120b an.

Andererseits ist es aber auch möglich, dass das Anschlagelement 126a, 126b; 131a, 131b mit seiner Eingriffsfläche 129 gegen die Führungsschiene 10a, 10b an der Anschlagfläche 120a, 120b anliegt. Ist das Anschlagelement 126a, 126b ein Anschlagrad, so liegt dieses während der Bewegungsfahrt der Warentransportvorrichtung 117 in x-Richtung an der Anschlagfläche 120a, 120b abrollbar auf. Ist das Anschlagelement 131a, 131b ein Anschlagbügel, so liegt dieser während der Bewegungsfahrt der Warentransportvorrichtung 117 in x-Richtung an der Anschlagfläche 120a, 120b gleitend auf.

Jene Ausführung, bei der das Anschlagelement 126a, 126b ein Anschlagrad ist, wird vorwiegend eingesetzt, wenn eine Warentransportvorrichtung 7 über eine (nicht dargestellte) Hebevorrichtung zwischen Fahrebenen 6 umgesetzt wird. Eine solche Hebevorrichtung ist beispielwiese aus der WO 2012/106745 A1 bekannt. Dabei wird die Warentransportvorrichtung 117 über eine relativ gegenüber die Fahrebenen 6 vertikal verstellbare Aufnahmevorrichtung transportiert. Die Aufnahmevorrichtung umfasst parallel zu den Führungsschienen 10a, 10b angeordnete Führungsschienen. Wird die Aufnahmevorrichtung auf eine der Fahrebenen 6 positioniert, verlaufen die Führungsschienen an der Aufnahmevorrichtung in der Verlängerung zu den Führungsschienen 10a, 10b in der Regalgasse zwischen den Lagerregalen 5. Die Führungsschienen an der Aufnahmevorrichtung und die Führungsschienen 10a, 10b in der Regalgasse sind mit demselben Profilquerschnitt gestaltet.

Die Positionierung der Führungsschienen an der Aufnahmevorrichtung relativ zu den Führungsschienen 10a, 10b je Fahrebene 6 erfolgt mit ausreichend hoher Genauigkeit, kann jedoch nicht ausgeschlossen werden, dass eine Positionierabweichung von wenigen Millimeter auftritt. Die Positionierabweichung resultiert in einem Stufensprung (Höhenunterschied) zwischen den Führungsschienen an der Aufnahmevorrichtung und den Führungsschienen 10a, 10b je Fahrebene 6. Andererseits kann auch ein Stufensprung (Höhenunterschied) zwischen Führungsschienen vorhanden sein, wenn zwei erste Führungsschienen hintereinander angeordnet und einander zugewandte Schienenenden beispielweise über Schrauben miteinander verbunden werden und/oder zwei zweite Führungsschienen hintereinander angeordnet und einander zugewandte Schienenenden beispielweise über Schrauben miteinander verbunden werden.

Das Anschlagrad kann diesen Stufensprung (Höhenunterschied) zwischen den Führungsschienen bis zu einigen Millimeter ungehindert überfahren.

Es ist dabei von Vorteil, wenn das Anschlagrad einen elastisch nachgiebigen Laufbelag umfasst. Der elastisch nachgiebige Laufbelag bildet dabei die Eingriffsfläche 129 aus. Ist mit einem größeren Stufensprung (Höhenunterschied) zwischen den Führungsschienen an der Aufnahmevorrichtung und den Führungsschienen 10a, 10b je Fahrebene 6 zu rechnen, so kann es sich von Vorteil erweisen, wenn das Anschlagrad in einem geringem Abstand zur Anschlagfläche 120a, 120b angeordnet ist, wie oben beschrieben.

Jene Ausführung, bei der das Anschlagelement 131a, 131b ein Anschlagbügel ist, wird vorwiegend eingesetzt, wenn je Fahrebene 6 eine Warentransportvorrichtung 117 vorgesehen wird. Wird der Anschlagbügel mit einem elastisch nachgiebigen Laufbelag, beispielweise einer verschließarmen Kunststoffschicht versehen, welche die Eingriffsfläche 129 bildet (wie in Fig. 31 in strichlierte Linien eingetragen), können auch Toleranzabweichungen an den Anschlagflächen 120a, 120b der Führungsschienen 10a, 10b ausgeglichen werden.

Abschließend sei auch erwähnt, dass anstatt den Ausführungen in den Fig. 24 bis 31 auch andere als die gezeigten Ein- und Auslagervorrichtungen und Warenverlagerungsmittel verwendet werden können. Beispielweise kann die Ein- und Auslagervorrichtung gemäß einer aus der AT 516 410 A4 bekannten Ausführung gestaltet werden. Nach dieser Ausführung umfasst das Lagerregal in den übereinander liegenden Lagerebenen zwischen den vorderen Längstraversen und hinteren Längstraversen erstreckende Querträger, welche Lagerflächen ausbilden, auf denen die Stückgüter abgestellt werden. Ferner wird darauf hingewiesen, dass die Stückgüter auch Behälter, Kartons oder Packeinheiten (Colli) sein könen, welche mit der Warentransportvorrichtung (und der Ein- und Auslagervorrichtung) manipuliert und auf den Lagerflächen gelagert werden.

Der Ordnung halber sei abschließend darauf hingewiesen, dass zum besseren Verständnis des Aufbaus des Lagersystemes und der Warentransportvorrichtung dieses bzw. deren Bestandteile teilweise unmaßstäblich und/oder vergrößert und/oder verkleinert dargestellt wurden.

### Bezugszeichenaufstellung

| | | | |
|---|---|---|---|
| 1 | Lagersystem | 31 | Laufrad |
| 2 | Ware | 32 | Fahrantrieb |
| 3 | Warenverteilsystem | 33 | Ein- und Auslagervorrichtung |
| 4 | Kleiderbügel | 34 | Warenaufnahmeträger |
| 5 | Lagerregal | 35 | Antriebsmotor |
| 6 | Fahrebene | 36 | Antriebsrad |
| 7 | Warentransportvorrichtung | 37 | Umlenkrad |
| 8 | vordere Regalsteher | 38 | Führungsrad |
| 9 | hintere Regalsteher | 39 | Zugmittel |
| 10 | vordere Längstraverse | 40 | Antriebswelle |
| 11 | hintere Längstraverse | 41 | Antriebsabschnitt |
| 12 | Warenaufnahmeträger | 42 | Warenverlagerungsmittel |
| 13 | Lagerebene | 43 | Verstellvorrichtung |
| 14 | Übergabestation | 44 | Schwenkhebel |
| 15 | Übernahmestation | 45 | Drehachse |
| 16 | Warenaufnahmeträger | 46 | Zahnriemen |
| 17 | | 47 | Antriebsmotor |
| 18 | Vertikalförderer | 48 | Aufnahmeebene |
| 19 | Montageplatte | 49 | Auflageschenkel |
| 20 | Einlager / Auslagerbewegung | 50 | Stirnkante |
| 21 | Führungsrahmen | 51 | Stirnkante |
| 22 | Hubrahmen | 52 | Profilschenkel |
| 23 | Warenaufnahmeträger | 53 | Profilschenkel |
| 24 | Warenübergabevorrichtung | 54 | Profilschenkel |
| 25 | Warenaufnahmeträger | 55 | Montageschenkel |
| 26 | Fördertechnik (Einlagerung) | 56 | Einkerbung |
| 27 | Fördertechnik (Auslagerung) | 57 | Tragrahmen |
| 28 | Zugmitteltrieb | 58 | Schiene |
| 29 | Antriebsmotor | 59 | Schiene |
| 30 | Grundrahmen | 60 | Schiene |
| 61 | Führungsanordnung | 94 | Warenaufnahmeträger |
| 62 | Führungsanordnung | 95 | Warenübergabevorrichtung |
| 63 | Führungsanordnung | 96 | Führungsschiene |
| 64 | Antriebsmittel | 97 | Warenaufnahmeträger |
| 65 | Antriebsmittel | 98 | Führungsschiene |
| 66 | Antriebsmotor | 99 | Ein- und Auslagervorrichtung |
| 67 | Riemen | 100 | Warenverlagerungsmittel |
| 68 | Riemen | 101 | Grundrahmen |
| 69 | Riemen | 102 | Laufrolle |
| 70 | Riemen | 103 | Antriebsmotor |
| 71 | Mitnahmeorgan | 104 | Verstellvorrichtung |
| 72 | Eingriffsfläche | 105 | Lagerplatte |
| 73 | Führung | 106 | Kulissenführung |
| 74 | Zugmittel | 107 | Antriebsmotor |
| 75 | Antriebswelle | 108 | Mitnehmerleiste |
| 76 | Antriebsmotor | 109 | Hängewarengruppe |
| 77 | Hängeebene | 110 | Warentransportvorrichtung |
| 78 | Warenaufnahmeträger | 111 | Ein- und Auslagervorrichtung |
| 79 | Warensicherungsmittel | 112 | Zugmittel |
| 80 | Stellantrieb | 113 | Umlenkrad |
| 81 | Sicherungsfinger | 114 | Antriebsmotor |
| 82 | Haltearm | 115 | Mitnahmeorgan |
| 83 | Lagersystem | 116 | Warenverlagerungsmittel |
| 84 | Warenverteilsystem | 117 | Warentransportvorrichtung |
| 85 | Übergabestation | 118 | Längsseite |
| 86 | Übernahmestation | 119 | Führung |
| 87 | Vertikalförderer | 120 | Anschlagfläche |
| 88 | Warentransportvorrichtung | 121 | Führungsschenkel |
| 89 | Warenaufnahmeträger | 122 | Führungsschenkel |
| 90 | Führungsschiene | 123 | Montageschenkel |
| 91 | Warenaufnahmeträger | 124 | Profilschenkel |
| 92 | Führungsrahmen | 125 | Anschlagvorrichtung |
| 93 | Hubrahmen | 126 | Anschlagelement |
| 127 | Tragrahmen | | |
| 128 | Abstand | | |
| 129 | Eingriffsfläche | | |
| 130 | Anschlagvorrichtung | | |
| 131 | Anschlagelement | | |

## Patentansprüche

1. Automatisiertes Lagersystem (1; 83) mit Hängewaren (2), umfassend
- ein ortsfestes Lagerregal (5) mit in übereinander liegenden Lagerebenen (13) angeordneten Lagerbereichen für die Hängewaren (2),
- eine vor dem Lagerregal (5) in einer ersten Richtung (x-Richtung) verfahrbare Warentransportvorrichtung (7; 88; 110; 117) mit einem Grundrahmen (30),
- zumindest eine Ein- und Auslagervorrichtung (33; 99; 111) mit einem relativ zum Grundrahmen (30) in einer zweiten Richtung (z-Richtung) senkrecht zur ersten Richtung (x-Richtung) bewegbaren Warenverlagerungsmittel (42; 100; 116),
wobei den Lagerbereichen und der Warentransportvorrichtung (7; 88; 110; 117) jeweils ein Warenaufnahmeträger (12; 89; 34; 97) zugeordnet ist, und
wobei das Warenverlagerungsmittel (42; 100; 116) die Hängeware (2) zwischen einem der Warenaufnahmeträger (12; 89) für die Lagerbereiche und dem Warenaufnahmeträger (34; 97) für die Warentransportvorrichtung (7; 88; 110; 117) bewegt, wobei die Warenaufnahmeträger (12; 89) in den Lagerbereichen im Lagerregal (5) verbleiben,
wobei die Hängeware (2) auf den Warenaufnahmeträgern (12, 34) jeweils eine Hängeebene (77) definieren, welche in einer senkrechten Richtung zu den Warenaufnahmeträgern (12, 34) verlaufen,
wobei die Warenaufnahmeträger (12, 34) parallel zur zweiten Richtung (z-Richtung) angeordnet sind,
**dadurch gekennzeichnet, dass**
die Warentransportvorrichtung (7; 88; 110; 117) ein Einebenenregalbediengerät ist und das Lagersystem (1; 83) einige Einebenenregalbediengeräte aufweist, wobei jedes Einebenenregalbediengerät mit der Ein- und Auslagervorrichtung (33; 99; 111) versehen ist und das Einebenenregalbediengerät einer Lagerebene (13) die Lagerbereiche in dieser Lagerebene (13) bedient.

2. Automatisiertes Lagersystem nach Anspruch 1, **dadurch gekennzeichnet, dass** das Lagersystem (1; 83) an ein Warenverteilsystem (3; 84) anschließt und
- eine Übergabestation (14; 85), an welcher einzulagernde Hängewaren (2) von der Warentransportvorrichtung (7; 88; 110; 117) abgeholt werden, und
- eine Übernahmestation (15; 86), an welcher auszulagernde Hängewaren (2) abgegeben werden, aufweist,
- wobei die Übergabestation (14; 85) mit zumindest einem Warenaufnahmeträger (16; 91) und/oder die Übernahmestation (15; 86) mit zumindest einem Warenaufnahmeträger (16; 91) ausgestattet sind, und
- wobei die Hängeware (2) bei der Übernahme und/oder Übergabe mittels der Ein- und Auslagervorrichtung (33; 99; 111) zwischen dem der Warentransportvorrichtung (7; 88; 110; 117) zugeordneten Warenaufnahmeträger (34, 97) und dem zumindest einen der Übergabe- und/oder Übernahmestation (14, 15; 85, 86) zugeordneten Warenaufnahmeträger (16; 91) bewegt wird.

3. Automatisiertes Lagersystem nach Anspruch 2, **dadurch gekennzeichnet, dass** auch der zumindest eine Warenaufnahmeträger (16, 89, 91, 97) der Übergabe- und/oder Übernahmestation (14, 15; 85, 86) parallel zur zweiten Richtung (z-Richtung) angeordnet sind, wobei die Hängeware (2) auf dem zumindest einen Warenaufnahmeträger (16, 89, 91, 97) eine Hängeebene (77) definiert, welche in einer senkrechten Richtung zu dem zumindest einen Warenaufnahmeträger (12, 16, 34, 89, 91, 97) verläuft.

4. Automatisiertes Lagersystem nach Anspruch 1, **dadurch gekennzeichnet, dass** der Warenaufnahmeträger (12; 89) für den Lagerbereich mit dem Lagerregal (5) fest verbunden ist und der Warenaufnahmeträger (34) für die Warentransportvorrichtung (7; 110; 117) am Grundrahmen (30) angeordnet ist, und dass das Warenverlagerungsmittel (42; 116) relativ zu den Warenaufnahmeträgern (12, 34) in der zweiten Richtung (z-Richtung) bewegbar und mit einer Greifeinheit (71; 115) versehen ist, die zumindest einen Kleiderbügel (4) ergreift und die Hängeware (2) zwischen dem Lagerbereich und der Warentransportvorrichtung (7; 110; 117) bewegen kann.

5. Automatisiertes Lagersystem nach Anspruch 2 oder 3, **dadurch gekennzeichnet, dass** das Warenverlagerungsmittel (42; 116) relativ zu dem zumindest einen Warenaufnahmeträger (16) in der zweiten Richtung (z-Richtung) bewegbar und mit einer Greifeinheit (71; 115) versehen ist, die zumindest einen Kleiderbügel (4) ergreift und die Hängeware (2) zwischen der Übergabestation (14; 85) und der Warentransportvorrichtung (7; 110; 117) und/oder zwischen der Übernahmestation (15; 86) und der Warentransportvorrichtung (7; 110; 117) bewegen kann.

6. Automatisiertes Lagersystem nach einem der Ansprüche 1 bis 5, **dadurch gekennzeichnet, dass** das Warenverlagerungsmittel (42) zumindest eine am Grundrahmen (30) angeordnete Teleskopiereinheit mit einem Tragrahmen (57) und relativ gegenüber dem Tragrahmen (57) verstellbare Schienen (58, 59, 60) umfasst, wobei die Schiene (60) mit dem größten Bewegungsbereich an ihren einander gegenüberliegenden Endbereichen mit einer äußeren Greifeinheit (71) versehen ist, wobei die Greifeinheiten (71) je zwischen einer Grundstellung, in welcher die Greifeinheit (71) von einem Kleiderbügel (4) zurückgezogen ist, und einer Betätigungsstellung, in welcher die Greifeinheit (71) einen Kleiderbügel (4) ergreifen kann, verstellbar sind.

7. Automatisiertes Lagersystem nach Anspruch 6, **dadurch gekennzeichnet, dass** die Schiene (60) mit dem größten Bewegungsbereich zusätzlich zwischen den äußeren Greifeinheiten (71) mit inneren Greifeinheiten (71) versehen ist, wobei die inneren Greifeinheiten (71) je zwischen einer Grundstellung, in welcher die Greifeinheit (71) von einem Kleiderbügel (4) zurückgezogen ist, und einer Betätigungsstellung, in welcher die Greifeinheit (71) einen Kleiderbügel (4) ergreifen kann, verstellbar sind.

8. Automatisiertes Lagersystem nach einem der Ansprüche 1 bis 5, **dadurch gekennzeichnet, dass** das Warenverlagerungsmittel (116) zumindest eine am Grundrahmen (30) angeordnete Teleskopiereinheit mit einem Tragrahmen (57) und relativ gegenüber dem Tragrahmen (57) verstellbare Schienen (58, 59, 60) umfasst, wobei die Schiene (60) mit dem größten Bewegungsbereich mit einem Zugmittel (112) ausgestattet ist, welches mit einem Antrieb gekoppelt und an dem mit gegenseitigem Abstand angeordnete Greifeinheiten (115) angeordnet sind, wobei die Greifeinheiten (115) jeweils zumindest einen Kleiderbügel (4) ergreifen können.

9. Automatisiertes Lagersystem nach einem der Ansprüche 1 bis 3, **dadurch gekennzeichnet, dass**
- das ortsfeste Lagerregal (5) in den übereinander liegenden Lagerebenen (13) und innerhalb der Lagerbereiche parallel zur zweiten Richtung (z-Richtung) mit gegenseitigem Abstand verlaufende Führungsschienen (90) umfasst, und
- die Warentransportvorrichtung (88) am Grundrahmen (30) befestigte und parallel zur zweiten Richtung (z-Richtung) mit gegenseitigem Abstand verlaufende Führungsschienen (98) umfasst,
- wobei das Warenverlagerungsmittel (100) als Ein- und Auslagerfahrzeug gestaltet ist, welches über ein Fahrwerk (102) zwischen der Warentransportvorrichtung (88) und einem Lagerbereich im Lagerregal (5) auf den Führungsschienen (90, 98) verfahrbar und welches mit einem Warenaufnahmeträger (97) ausgestattet ist, wobei der Warenaufnahmeträger (97) eine Greifeinheit (108) ausbildet, die einen oder mehrere Kleiderbügel (4) ergreift und die Hängeware (2) zwischen dem Lagerbereich und der Warentransportvorrichtung (88) bewegen kann.

10. Automatisiertes Lagersystem nach Anspruch 1, **dadurch gekennzeichnet, dass**
- zusätzlich Führungsschienen vorgesehen sind, welche jeweils eine Führung (119a, 119b) ausbilden und in übereinander liegenden Fahrebenen (6) angeordnet sind, wobei sich die Führungen (119a, 119b) parallel zur Längsrichtung des Lagerregales (5) und jeweils in einer parallel zur Fahrebene (6) verlaufenden Führungsebene erstrecken, wovon einige der Führungsschienen erste Führungsschienen (10a) bilden und einige der Führungsschienen zweite Führungsschienen (10b) bilden,
- die Warentransportvorrichtung (117) entlang der Führungsschienen in der ersten Richtung (x-Richtung) verfahrbar ist und umfasst:
den Grundrahmen (30) mit einander gegenüberliegenden Längsseiten, wovon eine der Längsseiten eine erste Längsseite (118a) und eine der Längsseiten eine zweite Längsseite (118b) bildet,
erste Laufräder (31), welche auf der Führung (119a) an der ersten Führungsschiene (10a) abrollbar aufliegen und am Grundrahmen (30) an der ersten Längsseite (118a) gelagert sind, und zweite Laufräder (31), welche auf der Führung (119b) an der zweiten Führungsschiene (10b) abrollbar aufliegen und am Grundrahmen (30) an der zweiten Längsseite (118b) gelagert sind,
wobei die erste Führungsschiene (10a) und/oder die zweite Führungsschiene (10b) je Fahrebene (6) eine von der Führung (119a, 119b) räumlich getrennte Anschlagfläche (120a, 120b) aufweist, eine erste Anschlagvorrichtung (125a; 130a) am Grundrahmen (30) angeordnet ist, welche zumindest ein Anschlagelement (126a; 131a) ausbildet, welches zwischen der zweiten Führungsschiene (10b) und dem Grundrahmen (30) angeordnet ist und mit einer Anschlagfläche (120b) an der zweiten Führungsschiene (10b) derart zusammenwirkt, dass eine Kippbewegung der Warentransportvorrichtung (117) um die auf einer ersten Längsseite (118a) angeordneten Laufräder (31a) verhindert oder begrenzt wird, wenn das Warenverlagerungsmittel (42; 116) in der zweiten Richtung (z-Richtung) ausgefahren wird und an der ersten Längsseite (118a) vorragt.

11. Automatisiertes Lagersystem nach Anspruch 10, **dadurch gekennzeichnet, dass** eine zweite Anschlagvorrichtung (125b; 130b) am Grundrahmen (30) angeordnet ist, welche zumindest ein Anschlagelement (126b; 131b) ausbildet, welches zwischen der ersten Führungsschiene (10a) und dem Grundrahmen (30) angeordnet ist und mit einer Anschlagfläche (120a) an der ersten Führungsschiene (10a) derart zusammenwirkt, dass eine Kippbewegung der Warentransportvorrichtung (117) um die auf einer zweiten Längsseite (118b) angeordneten Laufräder (31b) verhindert oder begrenzt wird, wenn das Warenverlagerungsmittel (42; 116) in der zweiten Richtung (z-Richtung) ausgefahren wird und an der zweiten Längsseite (118b) vorragt.

12. Automatisiertes Lagersystem nach Anspruch 10 oder 11, **dadurch gekennzeichnet, dass** das Anschlagelement (126a, 126b; 131a, 131b) eine Eingriffsfläche (129) ausbildet und mit dieser gegen die Führungsschiene (10a, 10b) an der Anschlagfläche (120a, 120b) anliegt.

13. Automatisiertes Lagersystem nach Anspruch 10 oder 11, **dadurch gekennzeichnet, dass** das Anschlagelement (126a, 126b; 131a, 131b) eine Eingriffsfläche (129) ausbildet und mit dieser in einem geringen Abstand zur Anschlagfläche (120a, 120b) angeordnet ist.

14. Verfahren zum Lagern und Packen oder Kommissionieren von Hängewaren (2) in einem automatisierten Lagersystem (1; 83) nach Anspruch 1, bei dem zu einem Pack- oder Kommissionierauftrag nur die Anzahl an Hängewaren (2) ausgelagert werden, in welcher sie benötigt werden.

## Claims

1. An automated storage system (1; 83) with hanging goods (2), comprising
- a stationary storage rack (5) with storage regions for the hanging goods (2) arranged in storage levels (13) lying one above the other,
- an goods transport device (7; 88; 110; 117) having a base frame (30), which goods transport device (7; 88; 110; 117) is displaceable in front of the storage rack (5) in a first direction (x-direction),
- at least one storage and retrieval device (33; 99; 111) having a goods displacement device (42; 100; 116) which is movable relative to the base frame (30) in a second direction (z-direction) perpendicular to the first direction (x-direction),
wherein a goods receiving carrier (12; 89; 34; 97) is assigned to the storage regions and the goods transport device (7; 88; 110; 117) respectively, and
wherein the goods displacement device (42; 100; 116) moves the hanging good (2) between one of the goods receiving carriers (12; 89) for the storage regions and the goods receiving carrier (34; 97) for the goods transport device (7; 88; 110; 117), wherein the goods receiving carriers (12; 89) remain in the storage regions in the storage rack (5),
wherein the hanging good (2) on the goods receiving carriers (12, 34) each define a hanging plane (77) extending in a direction perpendicular to the goods receiving carriers (12, 34),
wherein the goods receiving carriers (12, 34) are arranged in parallel to the second direction (z-direction),
**characterized in that**
the goods transport device (7; 88; 110; 117) is a single-level rack serving device, and the storage system (1; 83) has a number of single-level rack serving devices, wherein each single-level rack serving device is provided with the storage and retrieval device (33; 99; 111), and the single-level rack serving device of a storage level (13) services the storage regions in this storage level (13).

2. The automated storage system according to claim 1, **characterized in that** the storage system (1; 83) adjoins a goods distribution system (3; 84) and has
- a delivery station (14; 85), at which hanging goods (2) to be stored are picked up by the goods transport device (7; 88; 110; 117), and
- a receiving station (15; 86), at which hanging goods (2) to be retrieved are discharged,
- wherein the delivery station (14; 85) is equipped with at least one goods receiving carrier (16; 91) and/or the receiving station (15; 86) is equipped with at least one goods receiving carrier (16; 91), and
- wherein, during the receiving and/or discharging operation, the hanging good (2) is moved by means of the storage and retrieval device (33; 99; 111) between the goods receiving carrier (34, 97) assigned to the goods transport device (7; 88; 110; 117) and the goods receiving carrier (16; 91) assigned to the at least one delivery and/or receiving station (14, 15; 85, 86).

3. The automated storage system according to claim 2, **characterized in that** the at least one goods receiving carrier (16, 89, 91, 97) of the delivery and/or receiving station (14, 15; 85, 86) is also arranged in parallel to the second direction (z-direction), wherein the hanging good (2) on the at least one goods receiving carrier (16, 89, 91, 97) defines a hanging plane (77) extending in a direction perpendicular to the goods receiving carriers (12, 16, 34, 89, 91, 97).

4. The automated storage system according to claim 1, **characterized in that** the goods receiving carrier (12; 89) for the storage region is fixedly connected to the storage rack (5) and the goods receiving carrier (34) for the goods transport device (7; 110; 117) is arranged on the base frame (30), and that the goods displacement device (42; 116) is movable relative to the goods receiving carriers (12, 34) in the second direction (z-direction) and is provided with a gripping unit (71; 115), which grips at least one clothes hanger (4) and can move the hanging good (2) between the storage region and the goods transport device (7; 110; 117).

5. The automated storage system according to claim 2 or 3, **characterized in that** the goods displacement device (42; 116) is movable relative to the at least one goods receiving carrier (16) in the second direction (z-direction) and is provided with a gripping unit (71; 115) which grips at least one clothes hanger (4) and can move the hanging good (2) between the delivery station (14; 85) and the goods transport device (7; 110; 117) and/or between the receiving station (15; 86) and the goods transport device (7; 110; 117).

6. The automated storage system according to one of claims 1 to 5, **characterized in that** the goods displacement device (42) comprises at least one telescopic unit with a support frame (57) arranged on the base frame (30) and rails (58, 59, 60) adjustable relative to the support frame (57), wherein the rail (60) with the biggest range of motion is provided with an outer gripping unit (71) at its end regions situated opposite of each other, wherein the gripping units (71) are each adjustable between an initial position, in which the gripping unit (71) is retracted from a clothes hanger (4), and an operating position, in which the gripping unit (71) can grip a clothes hanger (4).

7. The automated storage system according to claim 6, **characterized in that** the rail (60) with the biggest range of motion is additionally provided with inner gripping units (71) between the outer gripping units (71), wherein the inner gripping units (71) are each adjustable between an initial position, in which the gripping unit (71) is retracted from a clothes hanger (4), and an operating position, in which the gripping unit (71) can grip a clothes hanger (4).

8. The automated storage system according to one of claims 1 to 5, **characterized in that** the goods displacement device (116) comprises at least one telescopic unit with a support frame (57) arranged on the base frame (30) and rails (58, 59, 60) adjustable relative to the support frame (57), wherein the rail (60) with the biggest range of motion is equipped with a traction device (112), which is coupled with a drive and on which gripping units (115) are arranged at a mutual distance, wherein the gripping units (115) are each able to grip at least one clothes hanger (4).

9. The automated storage system according to one of claims 1 to 3, **characterized in that**
- the stationary storage rack (5) comprises mutually spaced guide rails (90) extending in the storage levels (13) lying one above the other and within the storage regions parallel with the second direction (z-direction), and
- the goods transport device (88) comprises mutually spaced guide rails (98) secured to the base frame (30) and extending parallel with the second direction (z-direction),
- wherein the goods displacement device (100) is configured as a storage and retrieval vehicle which is able to travel on the guide rails (90, 98) by means of a chassis (102) between the goods transport device (88) and a storage region in the storage rack (5) and which is equipped with an goods receiving carrier (97), wherein the goods receiving carrier (97) forms a gripping unit (108) which grips one or more clothes hangers (4) and can move the hanging goods (2) between the storage region and the goods transport device (88).

10. The automated storage system according to claim 1, **characterized in that**
- guide rails are additionally provided, which each form a guide (119a, 119b) and are arranged in travel planes (6) lying one above the other, wherein the guides (119a, 119b) extend parallel to the longitudinal direction of the storage rack (5) and each in a guide plane extending parallel to the travel plane (6), of which some of the guide rails form first guide rails (10a) and some of the guide rails form second guide rails (10b),
- the goods transport device (117) is movable along the guide rails in the first direction (x-direction) and comprises:
the base frame (30) having opposite longitudinal sides, one of the longitudinal sides forming a first longitudinal side (118a) and one of the longitudinal sides forming a second longitudinal side (118b),
first running wheels (31), which lie so as to roll on the guide (119a) on the first guide rail (10a) and are mounted on the base frame (30) on the first longitudinal side (118a), and second running wheels (31), which lie so as to roll on the guide (119b) on the second guide rail (10b) and are mounted on the base frame (30) on the second longitudinal side (118b),
wherein the first guide rail (10a) and/or the second guide rail (10b) has a stop surface (120a, 120b) spatially separated from the guide (119a, 119b) for each travel plane (6), a first stop device (125a; 130a) is arranged on the base frame (30), which forms at least one stop element (126a; 131a), which is arranged between the second guide rail (10b) and the base frame (30) and interacts with a stop surface (120b) on the second guide rail (10b) in such a way that a tilting movement of the goods transport device (117) about the running wheels (31a) arranged on a first longitudinal side (118a) is prevented or limited when the goods displacement device (42; 116) is extended in the second direction (z-direction) and projects on the first longitudinal side (118a).

11. The automated storage system according to claim 10, **characterized in that** a second stop device (125b; 130b) is arranged on the base frame (30), which forms at least one stop element (126b; 131b), which is arranged between the first guide rail (10a) and the base frame (30) and interacts with a stop surface (120a) on the first guide rail (10a) in such a way that a tilting movement of the goods transport device (117) about the running wheels (31b) arranged on a second longitudinal side (118b) is prevented or limited when the goods displacement device (42; 116) is extended in the second direction (z-direction) and projects on the second longitudinal side (118b).

12. The automated storage system according to claim 10 or 11, **characterized in that** the stop element (126a, 126b; 131a, 131b) forms an engaging surface (129) and lies with the latter against the guide rail (10a, 10b) on the stop surface (120a, 120b).

13. The automated storage system according to claim 10 or 11, **characterized in that** the stop element (126a, 126b; 131a, 131b) forms an engaging surface (129) and is with the latter at a slight distance from the stop surface (120a, 120b).

14. A method for storing and packing or picking hanging goods (2) in an automated storage system (1; 83) according to claim 1, in which, for a packing or picking order, only the number of hanging goods (2) in which they are required are retrieved from storage.

## Revendications

1. Système de stockage automatisé (1 ; 83) pour des articles suspendus (2), comprenant
- un rayonnage de stockage fixe (5) avec des zones de stockage pour les articles suspendus (2) agencées en plans de stockage (13) les uns au-dessus des autres,
- un dispositif de transport d'articles mobile (7 ; 88 ; 110 ; 117) avec un châssis de base (30) devant le rayonnage de stockage (5) dans une première direction (direction x),
- au moins un dispositif de stockage/de déstockage (33 ; 99 ; 111) doté d'un moyen de déplacement des articles (42 ; 100 ; 116) pouvant être déplacé par rapport au châssis de base (30) dans une deuxième direction (direction z) perpendiculaire à la première direction (direction x),
les zones de stockage et le dispositif de transport d'articles (7 ; 88 ; 110 ; 117) étant pourvus, chacun, d'un support de logement d'articles (12 ; 89 ; 34 ; 97), et
le moyen de déplacement des articles (42 ; 100 ; 116) déplaçant les articles suspendus (2) entre l'un des supports de logement d'articles (12 ; 89) pour les zones de stockage et le support de logement d'articles (34 ; 97) pour le dispositif de transport d'articles (7 ; 88 ; 110 ; 117), les supports de logement d'articles (12 ; 89) restant dans les zones de stockage du rayonnage de stockage (5), les articles suspendus (2) sur les supports de logement d'articles (12, 34) définissant chacun un plan de suspension (77), lequel s'étend dans une direction perpendiculaire au support de logement d'articles (12 , 34), les supports de logement d'articles (12, 34) étant agencés parallèlement à la deuxième direction (direction z),
**caractérisé en ce que**
le dispositif de transport d'articles (7 ; 88 ; 110 ; 117) est un transtockeur à plan unique et le système de stockage (1 ; 83) comporte plusieurs transtockeurs à plan unique, chaque
transtockeur à plan unique étant pourvu du dispositif de stockage/de déstockage (33 ; 99 ; 111) et le transtockeur à plan unique (13) dessert les zones de stockage de ce plan de stockage (13).

2. Système de stockage automatisé selon la revendication 1, **caractérisé en ce que** le système de stockage (1 ; 83) est relié à un système de distribution des articles (3 ; 84) et comporte
- un poste de transfert sortant (14 ; 85) sur lequel les articles suspendus (2) à stocker sont retirés du dispositif de transport d'articles (7 ; 88 ; 110 ; 117), et
- un poste de transfert entrant (15 ; 86) sur lequel les articles suspendus (2) à déstocker sont déposés,
- le poste de transfert sortant (14 ; 85) étant équipé d'au moins un support de logement d'articles (16 ; 91) et/ou le poste de transfert entrant (15 ; 86) étant équipé d'au moins un support de logement d'articles (16 ; 91), et
- lors du retrait et/ou du dépôt, les articles suspendus (2) sont déplacés au moyen du dispositif de stockage et de déstockage (33 ; 99 ; 111) entre le support de logement d'articles (34, 97) agencé sur le dispositif de transport d'articles (7 ; 88 ; 110 ; 117) et au moins un des supports de logement d'articles (16 ; 91) affectés au poste de transfert entrant et/ou sortant (14, 15 ; 85, 86).

3. Système de stockage automatisé selon la revendication 2, **caractérisé en ce que** au moins un support de logement d'articles (16, 89, 91, 97) du poste de transfert sortant et/ou entrant (14, 15 ; 85, 86) est également agencé parallèlement à la deuxième direction (direction z), les articles suspendus (2) définissant un plan de suspension (77) sur au moins un support de logement d'articles (16, 89, 91, 97), qui s'étend dans une direction perpendiculaire au support de logement d'articles (12, 16, 34, 89, 91, 97).

4. Système de stockage automatisé selon la revendication 1, **caractérisé en ce que** le support de logement d'articles (12 ; 89) pour la zone de stockage est relié solidement au rayonnage de stockage (5) et est agencé sur le support de logement d'articles (34) pour le dispositif de transport d'articles (7 ; 110 ; 117) sur le châssis de base (30), et **en ce que** le moyen de déplacement des articles (42 ; 116) est déplaçable par rapport aux supports de logement d'articles (12, 34) dans la deuxième direction (direction z) et est pourvu d'une unité de préhension (71 ; 115) qui saisit au moins un cintre (4) et peut déplacer les articles suspendus (2) entre la zone de stockage et le dispositif de transport d'articles (7 ; 110 ; 117).

5. Système de stockage automatisé selon la revendication 2 ou 3, **caractérisé en ce que** le moyen de déplacement des articles (42 ; 116) est déplaçable par rapport à au moins un support de logement d'articles (16) dans la deuxième direction (direction z) et est pourvu d'une unité de préhension (71 ; 115) qui saisit au moins un cintre (4) et peut déplacer les articles suspendus (2) entre le poste de transfert sortant (14 ; 85) et le dispositif de transport d'articles (7 ; 110 ; 117) et/ou entre le poste de transfert entrant (15 ; 86) et le dispositif de transport d'articles (7 ; 110 ; 117).

6. Système de stockage automatisé selon l'une des revendications 1 à 5, **caractérisé en ce que** le moyen de déplacement des articles (42) comprend au moins une unité télescopique agencée sur le châssis de base (30) avec un cadre de support (57) et des rails (58, 59, 60) réglables par rapport au cadre de support (57), le rail (60) ayant la plus grande amplitude de mouvement étant doté, au niveau de ses parties d'extrémité opposées, d'une unité de préhension externe (71), les unités de préhension (71) étant chacune réglables entre une position de base dans laquelle l'unité de préhension (71) est en retrait par rapport à un cintre (4), et une position de fonctionnement dans laquelle l'unité de préhension (71) peut saisir un cintre (4).

7. Système de stockage automatisé selon la revendication 6, **caractérisé en ce que** le rail (60) ayant la plus grande amplitude de mouvement est en outre pourvu d'unités de préhension intérieures (71) entre les unités de préhension extérieures (71), les unités de préhension intérieures (71) étant chacune réglables entre une position de base dans laquelle l'unité de préhension (71) est en retrait par rapport à un cintre (4) et une position de fonctionnement dans laquelle l'unité de préhension (71) peut saisir un cintre (4).

8. Système de stockage automatisé selon l'une des revendications 1 à 5, **caractérisé en ce que** le moyen de déplacement des articles (116) comprend au moins une unité télescopique agencée sur le châssis de base (30) avec un cadre de support (57) et des rails (58, 59, 60) réglables par rapport au cadre de support (57), le rail (60) ayant la plus grande amplitude de mouvement étant doté d'un dispositif de traction (112) qui est couplé à un entraînement et sur lequel sont agencées des unités de préhension (115) à distance les unes des autres, les unités de préhension (115) pouvant chacune saisir au moins un cintre (4).

9. Système de stockage automatisé selon l'une des revendications 1 à 3, **caractérisé en ce que**
- le rayonnage de stockage fixe (5) comprend des rails de guidage (90) espacés les uns des autres qui s'étendent dans une direction parallèle à la deuxième direction (direction z) dans les plans de stockage (13) disposés les uns au-dessus des autres et à l'intérieur des zones de stockage, et
- le dispositif de transport d'articles (88) comprend des rails de guidage (98) espacés les uns des autres et fixés au châssis de base (30) et s'étendant dans la direction parallèle à la deuxième direction (direction z),
- le moyen de déplacement des articles (100) étant conçu comme un véhicule de stockage et de destockage, qui peut se déplacer sur les rails de guidage (90, 98) via un train de roulement (102) entre le dispositif de transport d'articles (88) et une zone de stockage dans le rayonnage de stockage (5) et qui est équipé d'un support de logement d'articles (97), le support de logement d'articles (97) formant une unité de préhension (108) qui saisit un ou plusieurs cintres (4) et peut déplacer les articles suspendus (2) entre la zone de stockage et le dispositif de transport d'articles (88).

10. Système de stockage automatisé selon la revendication 1, **caractérisé en ce que**
- des rails de guidage supplémentaires sont prévus, dont chacun forme un guidage (119a, 119b) et qui sont agencés en plans d'entraînement (6) disposés les uns au-dessus des autres, les guidages (119a, 119b) s'étendant dans une direction parallèle à la direction longitudinale du rayonnage de stockage (5) et, chacun, dans un plan de guidage s'étendant parallèlement au plan d'entraînement (6), certains des rails de guidage formant les premiers rails de guidage (10a) et certains des rails de guidage formant les deuxièmes rails de guidage (10b),
- le dispositif de transport d'articles (117) peut être déplacé le long des rails de guidage dans la première direction (direction x) et comprend :
le châssis de base (30) avec des côtés longitudinaux opposés, l'un des côtés longitudinaux formant un premier côté longitudinal (118a) et l'un des côtés longitudinaux formant un deuxième côté longitudinal (118b),
les premières roues de roulement (31), qui reposent sur le guidage (119a) du premier rail de guidage (10a) de manière à pouvoir rouler et sont disposées sur le châssis de base (30) sur le premier côté longitudinal (118a), et les deuxièmes roues de roulement (31) qui reposent sur le guidage (119b) du deuxième rail de guidage (10b) et sont disposées sur le châssis de base (30) sur le deuxième côté longitudinal (118b),
le premier rail de guidage (10a) et/ou le deuxième rail de guidage (10b) de chaque plan de déplacement (6) présente une surface de butée (120a, 120b) séparée physiquement du guidage (119a, 119b), un premier dispositif de butée (125a ; 130a) est agencé sur le châssis de base (30), ce qui forme au moins un élément de butée (126a ; 131a), qui est agencé entre le deuxième rail de guidage (10b) et le châssis de base (30) et coopère avec une surface de butée (120b) sur le deuxième rail de guidage (10b) de manière à empêcher ou à limiter tout mouvement de basculement du dispositif de transport d'articles (117) autour des roues de roulement (31a) agencées sur un premier côté longitudinal (118a) lorsque le moyen de déplacement des articles (42 ; 116) s'étend dans la deuxième direction (direction z) et fait saillie sur le premier côté longitudinal (118a).

11. Système de stockage automatisé selon la revendication 10, **caractérisé en ce qu'**un deuxième dispositif de butée (125b ; 130b) est agencé sur le châssis de base (30), qui forme au moins un élément de butée (126b ; 131b) agencé entre le premier rail de guidage (10a) et le châssis de base (30) et coopère avec une surface de butée (120a) sur le premier rail de guidage (10a) de manière à empêcher ou limiter tout mouvement de basculement du dispositif de transport d'articles (117) autour des roues de roulement (31b) agencées sur un deuxième côté longitudinal (118b) lorsque le moyen de déplacement des articles (42 ; 116) s'étend dans la deuxième direction (direction z) et fait saillie sur le deuxième côté longitudinal (118b).

12. Système de stockage automatisé selon la revendication 10 ou 11, **caractérisé en ce que** l'élément de butée (126a, 126b ; 131a, 131b) forme une surface d'engagement (129) et repose contre le rail de guidage (10a, 10b) sur la surface de butée (120a, 120b).

13. Système de stockage automatisé selon la revendication 10 ou 11, **caractérisé en ce que** l'élément de butée (126a, 126b ; 131a, 131b) forme une surface d'engagement (129) et est disposé avec celle-ci à une faible distance de la surface de butée (120a, 120b).

14. Procédé de stockage et d'emballage ou de prélèvement d'articles suspendus (2) dans un système de stockage automatisé (1 ; 83) selon la revendication 1, dans lequel seul le nombre d'articles suspendus (2) nécessaire à l'exécution d'un ordre d'emballage ou de prélèvement est extrait des stocks.
